(19) Europäisches Patentamt
European Patent Office
Office européen des brevets

(11) EP 1 198 484 B1

# (12) EUROPEAN PATENT SPECIFICATION

(45) Date of publication and mention of the grant of the patent:
**11.07.2007 Bulletin 2007/28**

(21) Application number: **99937291.5**

(22) Date of filing: **15.07.1999**

(51) Int Cl.:
*C08F 110/02* (2006.01) *C08L 23/06* (2006.01)
*C08L 23/16* (2006.01)

(86) International application number:
**PCT/US1999/016216**

(87) International publication number:
**WO 2001/005852 (25.01.2001 Gazette 2001/04)**

## (54) HIGH DENSITY ETHYLENE HOMOPOLYMERS AND BLEND COMPOSITIONS

POLYETHYLEN MIT HOHER DICHTE UND MISCHUNGEN DAVON

HOMOPOLYMERES D'ETHYLENE HAUTE DENSITE ET COMPOSITIONS DE MELANGES

(84) Designated Contracting States:
**AT BE CH CY DE DK ES FI FR GB GR IE IT LI LU MC NL PT SE**

(43) Date of publication of application:
**24.04.2002 Bulletin 2002/17**

(73) Proprietor: **DOW GLOBAL TECHNOLOGIES INC.**
**Midland, Michigan 48674 (US)**

(72) Inventors:
- **VAN DUN, Jozef, J.**
  **B-2240 Zandhoven (BE)**
- **MIYAMOTO, Akira**
  **Kurashiki-shi,**
  **Okyayama-ken 710 (JP)**
- **JACOBSEN, Grant, B.**
  **13117 Lavera (FR)**
- **MATSUSHITA, Fumio**
  **Kurashiki-shi,**
  **Okayama-ken 710 (JP)**
- **SCHOUTERDEN, Patrick, J.**
  **B-9185 Wachtebeke (BE)**
- **SPENCER, Lee**
  **Houston, TX 77005 (US)**
- **CHUM, Pak-Wing, S.**
  **Lake Jackson, TX 77566 (US)**
- **MEISKE, Larry, A.**
  **Baton Rouge, LA 70820 (US)**
- **WAUTERAERTS, Peter, L.**
  **B-3945 Oostham (BE)**

(74) Representative: **Hayes, Adrian Chetwynd et al**
**Boult Wade Tennant,**
**Verulam Gardens**
**70 Gray's Inn Road**
**London WC1X 8BT (GB)**

(56) References cited:
**EP-A- 0 669 347**
**WO-A-90/03414**
**WO-A-93/08221**
**WO-A-94/07928**
**WO-A-96/16092**
**WO-A-96/23005**
**WO-A-96/28480**
**WO-A-97/43323**
**US-A- 3 914 342**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 198 484 B1

## Description

The commercial polymerization of ethylene using coordination catalysts can be carried out in the high pressure, solution, slurry (suspension) or gas phase polymerization processes. The slurry and gas phase processes are examples of the so called particle form processes. In such systems, the catalyst for the polymerization is typically supported on an inert carrier. The polymerization is then carried out at temperatures below the melting point of the polymer, thereby precipitating the polymer onto the carrier. This results in the polymer powder particles growing while being suspended in either a diluent (slurry) or a fluidized polymer bed (gas-phase). The relatively low polymerization temperatures of these processes allows the manufacturer to produce polymers of very high molecular weight.

The most common ethylene polymerization catalysts are the chromium-based (so-called Phillips type) catalysts supported on silica ($Cr-SiO_2$), or the titanium based (so-called Ziegler type) catalysts supported on magnesium chloride ($MgCl_2$) and/or silica. However the relatively recent introduction of metallocene-based single site catalysts for ethylene/$\alpha$-olefin copolymerization has resulted in the production of new ethylene interpolymers (the term "interpolymer" is used herein to indicate a polymer wherein at least two different monomers arc polymerized to make the interpolymer including copolymers, terpolymers, etc.). These single site catalysts include the bis(cyclopentadienyl)-catalyst systems as described by Hlatky et al in U.S. Patent No. 5,153,157 and the constrained geometry catalysts. These catalysts and methods for their preparation are disclosed in U.S. Application Serial No. 545,403, filed July 3, 1990 (EP-A-416,815), European Patent Application EP-A-468,651; European Patent Application EP-A-514,828; U.S. Application Serial No. 876,268, filed May 1, 1992, (EP-A-520,732) as well as, US-A-5,374,696, US-A-5;470,993; US-A-5,055,438, US-A-5,057,475, US-A-5,096,867, US-A-5,064,802, and US-A-5,132,380. In addition, certain cationic derivatives of the foregoing constrained geometry catalysts that are highly useful as olefin polymerization catalysts are disclosed and claimed in US-A-5,132,380. In US-A 5,453,410 combinations of cationic constrained geometry catalysts with an alumoxane were disclosed as suitable olefin polymerization catalysts.

In order for such catalysts to be used in the particle form processes, supported versions of constrained geometry catalysts have also been developed, such as those disclosed in WO 96/16092 and WO 96/28480. In these systems, the active form of the catalyst is strongly associated with the support and thus has no possibility of diffusing into the diluent during typical slurry process polymerization conditions.

A feature of these catalyst composition is the preparation of a solid component which can, as in WO 96/16092, comprise;

1) a silica support and an alumoxane in which the alumoxane is fixed to the support material by a heating and/or washing treatment, such that the alumoxane is substantially not extractable under severe conditions (toluene at 90 °C); and

2) a constrained geometry complex.

When the amount of extractable alumoxane is low, little can diffuse into the polymerization solvent or diluent if used, and thus little or no activation of the catalyst occurs in the diluent. Thus no appreciable amount of polymer will be formed in the diluent, as compared to polymer formed on the support material. If too much polymer is formed in the diluent the polymer bulk density will decrease below acceptable levels and reactor fouling problems may occur.

Alternatively, as in WO 96/28480, the solid (or supported) catalyst can be formed from;

1) a silica support material, which is treated with an organometallic metal alkyl compound (selected from Groups 2-13 of the Periodic Table of the Elements, germanium, tin, and lead); and

2) an activator compound which comprises a cation (which is capable of reacting with a transition metal compound to form a catalytically active transition metal complex) and a compatible anion having up to 100 nonhydrogen atoms and containing at least one substituent comprising an active hydrogen moiety; and

3) a constrained geometry complex.

The activator compound reacts with the metal alkyl compound through the active hydrogen-containing substituent. It is believed that the alkyl group of the metal alkyl compound combines with the active hydrogen moiety of the activator compound to release a neutral organic compound, for example an alkane, or hydrogen gas thereby chemically coupling the metal atom with the activator compound residue. Thus the activator is believed to become chemically attached to the support material. Upon addition of the constrained geometry complex, a supported catalyst is formed in which the active form of the catalyst is strongly associated with the support and remains there during the course of the polymerization conditions.

WO 94/07928 discloses a supported catalyst complex having a Group 4 metal cyclopentadienyl derivative and an aluminoxane reacted with silica which show improved resistance to catalyst poisoning. The supported catalyst composition is particularly suitable for producing homogeneous ethylene polymers and copolymers having a narrow molecular weight distribution.

Additional advantages of polymers produced by single site catalysts as opposed to the more traditional Ziegler or Phillips (chromium on silica) catalysts relate to the nature of the catalyst residues remaining in the polymer after polymerization. Ziegler catalysts are typically prepared from chloride complexes of titanium such as $TiCl_4$ or $TiCl_3$ and are often supported on magnesium chloride ($MgCl_2$). Thus polymers produced by Ziegler catalysts often contain significant concentrations of magnesium chloride and other chloride containing catalyst residues in the polymer products. This can adversely effect the appearance of the film (due to "fish eye" formation) or cause corrosion problems with processing equipment. Similarly the products of the Phillips type (Cr on $SiO_2$) systems can contain chromium residues which if found at too high a level can limit the use of such resins for example in food contact applications.

Removal of such catalyst residues from the polymer can require the addition of expensive and time consuming post reactor polymer processing steps such as steam stripping or other methods of washing out the catalyst residues prior to polymer fabrication or sale.

The single site, and especially, the constrained geometry catalysts however are substantially chloride and chromium and free and, when supported, are usually supported on silica and not magnesium chloride. Thus the resulting polymers have much lower (often zero) levels of chloride- and chromium-containing catalyst residues in their products, even in the absence of additional post reactor polymer washing steps

Conventional supported Ziegler catalysts tend to produce polymers with relatively broad molecular weight distribution which varies with molecular weight. For instance Bailey et al. (US 4,547,551, Phillips Petroleum) report that for a polymer having an $M_n$ around 70000, produced by a magnesium chloride-supported Ziegler system with an organoaluminum cocatalyst, the $M_w/M_n$ is around 7.5. For ethylene homopolymers produced by Ziegler catalysts, the polymer density is also dependent upon molecular weight. The entropy that has to be overcome by crystallizing a longer homopolymer molecule is higher and more difficult to overcome than for a shorter homopolymer molecule. Consequently homopolymer density tends to decrease with increasing molecular weight. A typical Ziegler-Natta homopolymer having a melt index ($I_2$) of approximately 1 g/10 min will have a density higher than 0.960 g/cm$^3$.

The molecular weight distributions of homopolymers prepared using most supported or unsupported single site catalysts, which are not of the constrained geometry type, are smaller or equal to 3 over the complete molecular weight range. In addition, the density of such homopolymers is typically lower than the densities of the analogous homopolymers of the same molecular weight, prepared using Ziegler catalysts. This is exemplified by Stehling et al. (US 5,382,631) which discloses, in sample designation '006 of Example 2, that a homopolymer, prepared under gas phase conditions using a supported single site catalyst, and having a melt index ($I_2$) of 5.0 g/10 min, has a density of only 0.9552 g/cm$^3$ and an $M_w/M_n$ of 2.80. Similarly Lux et al in Example 12 of WO 95/18160 using a supported single site catalyst disclose that a homopolymer, prepared under slurry process conditions, and having a melt index ($I_2$) of 0.2 g/10 min, has a density of only 0.9450 g/cm$^3$ and an $M_w/M_n$ of 2.77. This can be contrasted with the a typical Ziegler catalyst homopolymer product having an $I_2$ of 1.0 g/10 min, which will have a density greater than 0.9600 g/cm$^3$ and an $M_w/M_n$ much greater than about 3.

In many applications, it is highly desirable for a homopolymer to have a high density for improved toughness and stiffness. It is also highly desirable for such a high density homopolymer to have a relatively low $M_w/M_n$ (that is less than about 5) at low molecular weights (that is less than about 100,000). This minimizes the wax content of the polymer which otherwise can lead to die wax build up and smoke generation on extrusion and taste and odor problems in the resulting fabricated articles. It is also highly desirable for such a high density homopolymer to have a broader $M_w/M_n$ (that is greater than about 4) at higher molecular weights (that is greater than about 100,000) as an aid to processability of the polymer.

Thus homopolymers produced from Ziegler catalysts have the disadvantage of typically exhibiting a broad $M_w/M_n$ especially at low molecular weights.

Homopolymers derived from typical single site catalysts have the dual disadvantage of;

a) being unable to attain as high a density for a given molecular weight as comparable Ziegler products and;

b) exhibiting a narrow $M_w/M_n$ across the whole molecular weight range (which can limit processability especially at high polymer molecular weights).

Thus there remains a requirement for the production of ethylene homopolymers which, while having a high density, also have a narrow $M_w/M_n$ at low molecular weight and a broader $M_w/M_n$ at higher molecular weight.

Other uses of ethylene homopolymers involve their use as one of the components of blend compositions. It is known that improvement in impact and, environmental stress crack resistance (ESCR) of an ethylene copolymer, can

be achieved by decreasing the comonomer content of the low molecular weight fraction of the ethylene copolymer to a level as low as possible while increasing the comonomer content of the high molecular weight fraction of the ethylene copolymer to a level as high as possible. It has also been demonstrated (as for example by Zhou et al, Polymer, Vol 24, p. 2520 (1993)), that large strain properties such as toughness tear, impact and ESCR can also be improved by the presence of "tie molecules" in the resin. High molecular weight molecules with the highest comonomer content (that is the highest degree of short chain branching) are responsible for the formation of most of the tie molecules upon crystallization.

Thus attempts to maximize properties such as toughness, modulus, impact strength and ESCR, without sacrificing processability, has resulted in the preparation and use of blend compositions made out of two or more polymer components of differing molecular structures. Blends containing solely Ziegler catalyst products are described in a number of patents.

For example, Nelson (US 3,280,220, Phillips Petroleum) teaches that a blend of an ethylene homopolymer of low molecular weight (formed in the solution process) and an ethylene-butene-1 copolymer of high molecular weight (formed in a particle form process) provides higher ESCR advantageous for containers (bottles) and pipe than similar blends of copolymers.

Hoblitt et al. (US 3,660,530, The Dow Chemical Company) teaches a method where part of the homopolymer produced after a first reaction step is subjected to 1-butene. The still active catalyst then produces a block copolymer of polyethylene and polymerized butene-1. Both components are then admixed. The resultant blend has improved ESCR properties.

Fukushima et al. (US 4,438,238) disclose blends consisting of components with densities between .910 and . 940 g/cm$^3$ and broad molecular weight and blend distributions substantially not having long chain branches have been found to have good processability similar to high pressure polyethylene

Bailey et al. (US 4,547,551) teach that ethylene polymer blends of a high molecular weight ethylene polymer, preferably an ethylene-mono-$\alpha$-olefin copolymer, and a low molecular weight ethylene polymer, preferably an ethylene homopolymer, both preferentially with a narrow molecular weight distribution and low levels of long chain branching exhibit excellent film properties and a better balance of stiffness and impact and environmental stress cracking resistance (ESCR), superior to that expected for polyethylene of comparable density and flow.

Morimoto et al. (US 5,189,106, and 5,260,384) disclose blends consisting of a high molecular weight copolymer in combination with a low molecular weight homopolymer have been found to possess good processability and excellent low temperature mechanical properties.

Boehm et al., (Advanced Materials 4 (1992) No 3, p 237), discloses the cascade polymerization process in which the comonomer is introduced in the high molecular weight fraction of the polymer resulting in a larger amount of comonomer being present at the same overall density. This in turn results in a polymer composition having improved rigidity-lifetime (failure time) compared to conventional unimodal copolymers. Several patents have also appeared teaching the process to produce such materials in a cascade process such as EP 0 022 376 (Morita et al).

Finally, Sakurai et al (U.S.4,230,831) disclose that it is beneficial to mix low density polyethylene with various blend compositions to improve polymer die swell or melt tension.

Blend compositions of homogeneous interpolymers having narrow molecular weight distribution and narrow composition distributions are also known. Stehling et al. in US 5,382,630 and 5,382,631 describe polymer compositions made by blending components which have $M_w/M_n$ of less than 3 and a Composition Distribution Breadth Index of ≥ 50 percent. The components are said to be produced by using metallocene catalyst systems known to provide narrow composition distributions and narrow molecular weight distributions.

Blend compositions containing both Ziegler and single site catalyst products have also been disclosed. Research Disclosure No. 310163 (Anonymous) teaches that blends of Ziegler Natta- and metallocene-catalyzed ethylene copolymers when fabricated into cast films have improved optical, toughness, heat sealability, film blocking and unwind noise properties when compared with metallocene-catalyzed polymer alone.

Research Disclosure No. 37644 (Anonymous) teaches that blends of traditionally (Ziegler-Natta) catalyzed resins and resins made by single site metallocene catalysts display superior transverse direction tear and machine direction ultimate tensile properties useful in cast film applications.

WO 94/25523(Chum et al.) teaches that films having synergistically enhanced physical properties can be made, when the film is a blend of at least one homogeneously branched ethylene/$\alpha$-olefin interpolymer and a heterogeneously branched ethylene/$\alpha$-olefin interpolymer. Films made from such formulated compositions have surprisingly good impact and tensile properties, and an especially good combination of modulus and toughness.

However, blends derived totally from Ziegler catalyzed products still have the problem that the low molecular weight component will generate a high amount of extractables because of the broad MWD, and the high molecular weight component does not have the desirable comonomer distribution to generate a high tie molecule distribution, although the molecular weight distribution is broad. Blends derived from products prepared using conventional supported single site catalysts are limited in the overall density that they can achieve for a given total comonomer content at a final

molecular weight, relative to blends containing Ziegler catalyzed materials, as the traditional single site catalysts are unable to generate as high a homopolymer density for a given molecular weight as the Ziegler catalyzed materials.

However, for blends containing both single site and Ziegler catalyst products, if the low molecular weight homopolymer blend component is produced using a Ziegler catalyst, the homopolymer density will be high but its molecular weight distribution ($M_w/M_n$) will be broad leading to a high amount of extractables. If a narrow molecular weight distribution ($M_w/M_n$) single site catalyst product is used as the high molecular weight component of the blend it will not be capable of generating the same amount of tie molecules, because of the lack of very high molecular weight molecules, also its comonomer distribution will not be optimal. Conversely, if the low molecular weight component is a homopolymer produced with single site catalyst, the homopolymer density cannot be increased as desired. Also, the comonomer distribution of the high molecular weight Ziegler Natta material is not optimal, although its molecular weight distribution is broad.

There also remains a requirement for blend compositions which have a low molecular weight homopolymer component having a high density and an $M_w/M_n$ which increases with molecular weight, and a higher molecular weight component having an overall high comonomer content and wherein the lower the molecular weight of a copolymer fraction in the molecular weight distribution of a said higher molecular weight component, the lower the comonomer content of the copolymer fraction; and, in the other aspect, the higher the molecular weight of a fraction of said higher molecular weight component, the higher the comonomer content of the copolymer fraction.

Finally there also remains a requirement for the production of ethylene homopolymers and blend compositions which exhibit excellent stiffness and toughness with good ESCR, impact and modulus and exhibiting excellent processability while minimizing wax buildup on the die, smoke generation on the extruder on processing, and low extractables in the resin to minimize its taste and odor

In one embodiment, the present invention provides:

a process for preparing an ethylene homopolymer which process comprises polymerizing ethylene under slurry process conditions with a catalyst comprising;

(I) a supported catalyst component resulting from admixing:

(A) a support material:

(B) an organometal compound which is a member of Groups 2-13 of the Periodic Table of the Elements, germanium, tin, or lead;

(C) an activator compound containing a cation which is capable of reacting with a transition metal compound to form a catalytically active transition metal complex, and a compatible anion having up to 100 nonhydrogen atoms and containing at least one substituent comprising an active hydrogen moiety; and

(D) a transition metal compound; or

(II) a supported catalyst component resulting from admixing

(A) a support material and an alumoxane which component contains 15 to 40 weight percent of aluminum, based on the total weight of the support material and alumoxane, which is obtained by;

(a) heating said support material and alumoxane under an inert atmosphere for a period and at a temperature sufficient to fix alumoxane to the support material, to provide a supported catalyst component wherein not more than about 10 percent aluminum present in the supported catalyst component is extractable in a one-hour extraction with toluene at 90°c using about 10 ml toluene per gram of supported catalyst component; and

(b) optionally, subjecting the product produced in step (a) to one or more wash steps to remove alumoxane not fixed to the support material: and

(B) a transition metal compound; or

(III) any combination of I and II. The present invention also provides;

A polymer blend composition comprising: (A) an ethylene homopolymer in an amount of from 1 to 99 percent by weight based on the combined weight of Components (A) and (B), wherein the ethylene homopolymer is prepared

under slurry conditions in the presence of a supported single site catalyst having constrained geometry and is characterized by:

a) an Mw/Mn ratio greater than 2.5;
b) a melt index ($I_2$) of from 0.0001 to 10000g/10 min;
c) a density which satisfies the following inequality;
density (g/cm$^3$)>0.9611 + 0.0058 log($I_2$)-0.00128 log$^2$ ($I_2$); and
d) an $M_w/M_n$ which satisfies the following inequality; $M_w/M_n \leq$ 11.67 log $M_w$ - 43.67; and

(B) a polyolefin composition having a molecular weight maximum occurring in the fraction with the highest comonomer content wherein said polyolefin composition is present in an amount of from 1 to 99 percent by weight based on the combined weight of Components (A) and (B).

The present invention also provides;

A process, for forming polymer blend composition, which process comprises the steps of:

(I) preparing an ethylene homopolymer (A) according to the process as outlined above;
(II) contacting under polymerization conditions a feedstream comprising ethylene, optionally at least one $\alpha$-olefin comonomer, and an ethylene polymerization catalyst, to form (B) a polyolefin composition having a molecular weight maximum occurring in the fraction with the highest comonomer content; and
(III) combining the ethylene homopolymer (A) with the polyolefin composition (B) to form (C) the polymer blend composition.

The properties of the homopolymers of the present invention are important for applications where a high density is needed to ensure certain mechanical properties like abrasion resistance, indentation resistance, pressure resistance, topload resistance, modulus of elasticity, or morphology (for the chlorination of PE to CPE) and additional advantages such as melt processability.

Advantages of using the homopolymer in blend compositions is that, for a given molecular weight, its increased density over prior art ethylene homopolymers allows the incorporation of more comonomer in the second component of the blend. This, in turn, results in increased tie molecule formation and improvement in properties such as ESCR, toughness and impact strength. The blend can be obtained by dry or melt mixing the already produced components, or through in-reactor production using multiple reactors which can be autoclave or loop reactors in either parallel and/or series configurations.

These resins can be used in applications improved impact resistance, improved modulus of elasticity, high slow and rapid crack propagation resistance, improved ball indentation hardness and improved notched impact strength are desired. Such applications include, but are not limited to, sintering powders (where ultra high molecular weight polyethylene powder is incorporated as a fused component of surfaces which are required to have high abrasion resistance including gear wheels of machinery, and the lower surfaces of ski's). CPE feedstock resins, films, blow molded, injection molded, and rotomolded articles, fibres, and cable and wire coatings and jacketings and, various pipe applications.

These and other features of the present invention will become better understood with reference to the following descriptions and appended claims.

Definitions.

All references herein to elements or metals belonging to a certain Group refer to the Periodic Table of the Elements published and copyrighted by CRC Press, Inc., 1989. Also any reference to the Group or Groups shall be to the Group or Groups as reflected in this Periodic Table of the Elements using the IUPAC system for numbering groups.

Any numerical values recited herein include all values from the lower value to the upper value in increments of one unit provided that there is a separation of at least 2 units between any lower value and any higher value. As an example, if it is stated that the amount of a component or a value of a process variable such as, for example, temperature, pressure, and time is, for example, from 1 to 90, preferably from 20 to 80, more preferably from 30 to 70, it is intended that values such as 15 to 85, 22 to 68, 43 to 51, 30 to 32 etc. are expressly enumerated in this specification. For values which are less than one, one unit is considered to be 0.0001, 0.001, 0.01 or 0.1 as appropriate. These are only examples of what is specifically intended and all possible combinations of numerical values between the lowest value and the highest value enumerated are to be considered to be expressly stated in this application in a similar manner.

The term "hydrocarbyl" as employed herein means any aliphatic, cycloaliphatic, aromatic, aryl substituted

aliphatic, aryl substituted cycloaliphatic, aliphatic substituted aromatic, or aliphatic substituted cycloaliphatic groups.

The term "hydrocarbyloxy" means a hydrocarbyl group having an oxygen linkage between it and the carbon atom to which it is attached.

The term "silyl" means a group having a silicon linkage between it and the carbon atom to which it is attached.

The term "germyl" means a group having a germanium linkage between it and the carbon atom to which it is attached.

The term "Bronsted Acid cation" means a cation which acts as a proton donor.

The term "interpolymer" is used herein to indicate a polymer wherein at least two different monomers are polymerized to make the interpolymer. This includes copolymers, terpolymers, etc.

Test Methods.

a) Density and Melt Flow Measurements.

The density of the polymer compositions for use in the present invention was measured in accordance with ASTM D-792. The molecular weight of the polymer compositions for use in the present invention is conveniently indicated using a melt index measurement according to ASTM D-1238, Condition 190°C/2.16 kg (formally known as "Condition (E)" and also known as $I_2$) was determined, as were conditions 190°C/5 kg, 10 kg and 21.6 kg known as $I_5$, $I_{10}$, and $I_{21}$ respectively. Melt index is inversely proportional to the molecular weight of the polymer. Thus, the higher the molecular weight, the lower the melt index, although the relationship is not linear. Other useful physical property determinations made on the novel polymer compositions described herein include the melt flow ratio (MFR): measured by determining "$I_{10}$" (according to ASTM D-1238, Condition 190°C/10 kg (formerly known as "Condition (N)") and dividing the obtained $I_{10}$ by the $I_2$. The ratio of these two melt index terms is the melt flow ratio and is designated as $I_{10}/I_2$. Other melt flow ratios measured include $I_{21.6}/I_5$, and $I_{21.6}/I_2$.

b) Gel Permeation Chromatography.

The molecular weight ($M_w$) and distributions ($M_w/M_n$) of the homopolymer and the various blends of the present invention were determined by gel permeation chromatography (GPC) on a Waters 150C high temperature chromatographic unit equipped with mixed porosity columns, operating at a system temperature of 140°C. The solvent was 1,2,4-trichlorobenzene, from which 0.3 percent by weight solutions of the samples were prepared for injection. The flow rate was 1.0 milliliters/minute and the injection size was 100 microliters.

The molecular weight determination was deduced by using narrow molecular weight distribution polystyrene standards (from Polymer Laboratories) in conjunction with their elution volumes. The equivalent polyethylene molecular weights were determined by using appropriate Mark-Houwink coefficients for polyethylene and polystyrene (as described by Williams and Ward in Journal of Polymer Science, Polymer Letters, Vol. 6, (621) 1968) to derive the following equation:

$$M_{polyethylene} = a * (M_{polystyrene})^b.$$

In this equation, a = 0.4316 and b = 1.0. Weight average molecular weight, $M_w$, and number average molecular weight, $M_n$, was calculated in the usual manner according to the following formula:

$$M_j = (\Sigma\, w_i(M_i^j))^j;$$

where $w_i$ is the weight fraction of the molecules with molecular weight $M_i$ eluting from the GPC column in fraction i and j = 1 when calculating $M_w$ and j = -1 when calculating $M_n$.

c) Cross Fractionation Chromatography (CFC)

The cross fraction chromatography (CFC) of the ethylene interpolymer components of the blend compositions of the present invention was conducted using a CFC T-150A (manufactured and sold by Mitsubishi Kagaku Corp., Japan). The measurement by CFC was conducted as follows. 20 mg of a sample was dissolved in 20 ml of dichlorobenzene having a temperature of 140 °C, to thereby obtain a solution of the sample. Then, 5 ml of the obtained solution was added to a TREF (temperature rising elution fractionation) column filled with glass beads, and the solution allowed to

cool to 0°C at a rate of 1 °C/min. Subsequently, the solution was heated, so as to elevate the temperature of the solution at a,rate of 1 °C/min, thereby extracting copolymer fractions. Then, the extracted copolymer fractions were subjected to gel permeation chromatography (GPC) using a GPC column Shodex AD806MS (manufactured and sold by Showa Denko K.K., Japan), followed by Fourier Transform Infrared Spectroscopy (FT-IR) using Nicolet Manga - IR Spectrometer 550 (manufactured and sold by Nicolet Co., Ltd., U.S.A.).

For the cross fractionation chromatography (CFC) of the ethylene interpolymer components of the blend compositions of the present invention, with respect to extraction at an arbitrary temperature T(°C) falling within the range of between a first temperature at which a maximum amount of extraction is exhibited and a second temperature which is 10 °C higher than the first temperature, the relationship between the arbitrary temperature T(°C) and a point in molecular weight on a molecular weight distribution profile of a copolymer fraction extracted at the arbitrary temperature T(°C) at which point in molecular weight the molecular weight distribution profile of the copolymer fraction shows a peak having a maximum intensity is treated by the least squares method to obtain an approximate straight line, the approximate straight line has a gradient within the range defined by the formula:

$$\{\log Mp(T^1)-\log Mp(T^2)\}/(T^1-T^2)$$

wherein $T^1$ and $T^2$ are two different arbitrary extraction temperatures T(°C) within the range of between the first temperature and the second temperature, and $Mp(T^1)$ and $Mp(T^2)$ are, respectively, molecular weights corresponding to $T^1$ and $T^2$ on the approximate straight line.

d) Molecular Weight Distribution Profile And The Comonomer Content Distribution.

The comonomer content distribution profile was obtained by subjecting the ethylene interpolymers to gel permeation chromatography/Fourier transformation infrared spectroscopy (GPC/FT-IR). In the present invention, the measurement by GPC was conducted using 150C ALC/GPC (manufactured and sold by Waters Assoc. Co. U.S.A.), in which three columns [one Shodex AT-807s (manufactured and sold by Showa Denko K.K., Japan) and two TSK-Gel GMH-H6 (manufactured and sold by Tosoh Corp., Japan)], connected in series, were used, and the measurement by FT-IR was conducted by dissolving 20 to 30 mg of a sample in 15 ml of trichlorobenzene having a temperature of 140 °C, and applying 500 to 1,000μl of the resultant solution to an FT-IR apparatus (Perkin-Elmer 1760X, manufactured and sold by Perkin Elmer Cetus, Co., Ltd., U.S.A.).

The comonomer content is defined as a value obtained by dividing the number of comonomer units relative to 1,000 methylene units contained in the copolymer, by 1,000. For example, when 5 comonomer units are contained relative to 1,000 methylene units, the comonomer content is 0.005. The value of the comonomer content can be obtained from the ratio of the intensity of an absorbance attributed to the comonomer units to the intensity of an absorbance attributed to the methylene units, which ratio can be obtained by FT-IR. For example, when a linear α-olefin is used as a comonomer, the ratio of the intensity of absorbance at 2,960 $cm^{-1}$, which is attributed to the methyl groups, to the intensity of absorbance at 2,925 $cm^{-1}$, which is attributed to the methylene groups, is obtained by FT-IR. From the obtained ratio, the comonomer content can be obtained.

Generally, the above-mentioned comonomer content distribution profile is shown as a line containing points indicating comonomer contents. For improving the accuracy of the profile, it is desirable to obtain a large number of points indicating the comonomer contents by repeatedly conducting the comonomer content measurement using the same sample under the same conditions. In the present invention, within the above-defined range in molecular weight of the ethylene copolymer, an approximate straight line is obtained from the obtained points of comonomer content distribution profile by the least squares method.

In the present invention, the gradient of the approximate straight line obtained from the comonomer content distribution profile was defined by the following formula:

$$\{C(Mc^1)-C(Mc^2)\}/(\mathrm{Log}Mc^1-\mathrm{Log}Mc^2)$$

wherein:

$Mc^1$ and $Mc^2$ are two different arbitrary points (Mc) in molecular weight which satisfy the formula (I), and $C(Mc^1)$ and $C(Mc^2)$ are, respectively, comonomer contents corresponding to $Mc^1$ and $Mc^2$ on the approximate

straight line.

The Ethylene Homopolymers.

The ethylene homopolymers of the present invention can be produced under slurry process conditions with the supported constrained geometry catalysts as described hereinafter.

The Supported Constrained Geometry Catalysts.

The preferred catalyst systems to be used in the present invention comprise a constrained geometry catalyst (a) and a solid component (b).

(a) The Constrained Geometry Catalysts.

Exemplary single site catalysts comprise a transition metal complex corresponding to the formula:

$$L_l M X_p X'_q,$$

that has been or subsequently is rendered catalytically active by combination with an activating cocatalyst or by use of an activating technique, wherein;

M is a metal of Group 4 of the Periodic Table of the Elements having an oxidation state of +2, +3 or +4, bound in an $\eta^5$ bonding mode to one or more L groups;

L independently each occurrence is a cyclopentadienyl-, indenyl-, tetrahydroindenyl-, fluorenyl-, tetrahydrofluorenyl-, or octahydrofluorenyl- group optionally substituted with from 1 to 8 substituents independently selected from the group consisting of hydrocarbyl, halo, halohydrocarbyl, aminohydrocarbyl, hydrocarbyloxy, dihydrocarbylamino, dihydrocarbylphosphino, silyl, aminosilyl, hydrocarbyloxysilyl, and halosilyl groups containing up to 20 non-hydrogen atoms, or further optionally two such L groups may be joined together by a divalent substituent selected from hydrocarbadiyl, halohydrocarbadiyl, hydrocarbyleneoxy, hydrocarbyleneamino, siladiyl, halosiladiyl, and divalent aminosilane, groups containing up to 20 non-hydrogen atoms;

X independently each occurrence is a monovalent anionic σ-bonded ligand group, a divalent anionic σ-bonded ligand group having both valences bonded to M, or a divalent anionic σ-bonded ligand group having one valency bonded to M and one valency bonded to an L group, said X containing up to 60 nonhydrogen atoms;

X' independently each occurrence is a neutral Lewis base ligating compound, having up to 20 atoms;

1 is one or two;

p is 0, 1 or 2, and is I less than the formal oxidation state of M when X is an monovalent anionic σ-bonded ligand group or a divalent anionic σ-bonded ligand group having one valency bonded to M and one valency bonded to an L group, or p is 1 +1 less than the formal oxidation state of M when X is a divalent anionic σ-bonded ligand group having both valencies bonded to M; and

q is 0, 1 or 2.

Single site catalysts including the constrained geometry catalysts are believed to exist in the form of a mixture of one or more cationic or zwitterionic species derived from the metallocene-based transition metal coordination complexes in combination with an activating compound. Fully cationic or partially charge separated metal complexes, that is, zwitterionic metal complexes, have been previously disclosed in U.S. Patent Nos. 5,470,993 and 5,486,632, the teachings of which are herein incorporated in their entirety by reference thereto.
The cationic complexes of single site catalysts are believed to correspond to the formula:

$$L_l M^+ X_{p-1} A^-$$

wherein:

M is a Group 4 metal in the +4 or +3 formal oxidation state;

L, X, l and p are as previously defined; and

$A^-$ is a noncoordinating, compatible anion derived from the activating cocatalyst.

The zwitterionic complexes in particular result from activation of a Group 4 metal diene complex that is in the form of a metallocyclopentene, wherein the metal is in the +4 formal oxidation state, (that is X is 2-butene-1,4-diyl, or a hydrocarbyl substituted derivative thereof, having both valencies bonded to M) by the use of a Lewis acid activating cocatalyst, especially tris(perfluoro-aryl)boranes. These zwitterionic complexes are believed to correspond to the formula:

$$L_lM^+X_{p-l}X^{**}\text{-}A^-$$

wherein:

M is a Group 4 metal in the +4 formal oxidation state;

L, X, l and p are as previously defined;

$X^{**}$ is the divalent remnant of the conjugated diene, X', formed by ring opening at one of the carbon to metal bonds of a metallocyclopentene; and

$A^-$ is a noncoordinating, compatible anion derived from the activating cocatalyst.

As used herein, the recitation "noncoordinating" means an anion which either does not coordinate to the transition metal component or which is only weakly coordinated therewith remaining sufficiently labile to be displaced by a neutral Lewis base, including an α-olefin. A non-coordinating anion specifically refers to an anion which when functioning as a charge balancing anion in the catalyst system of this invention, does not transfer a fragment thereof to said cation thereby forming a neutral four coordinate metal complex and a neutral byproduct. "Compatible anions" are anions which are not degraded to neutrality when the initially formed complex decomposes and are noninterfering with desired subsequent polymerizations.

Preferred X' groups are phosphines, especially trimethylphosphine, triethylphosphine, triphenylphosphine and bis(1,2-dimethylphosphino)ethane; $P(OR)_3$, wherein R is as previously defined; ethers, especially tetrahydrofuran; amines, especially pyridine, bipyridine, tetramethyl-ethylenediarnine (TMEDA), and triethylamine; olefins; and conjugated dienes having from 4 to 40 carbon atoms. Complexes including conjugated diene X' groups include those wherein the metal is in the +2 formal oxidation state.

Examples of coordination complexes used for single site catalyst preparation include the foregoing species:

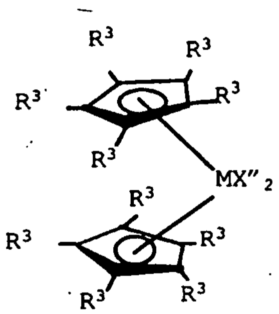

(I)

or

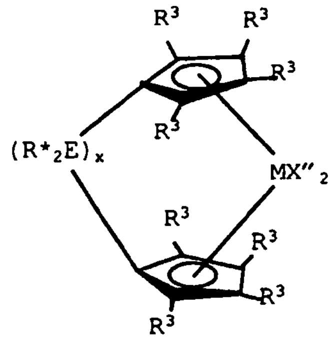

(II)

wherein:

M is titanium, zirconium or hafnium, preferably zirconium or hafnium, in the +2 or +4 formal oxidation state;

$R^3$ in each occurrence independently is selected from the group consisting of hydrogen, hydrocarbyl, silyl, germyl, cyano, halo and combinations thereof, said $R^3$ having up to 20 non-hydrogen atoms, or adjacent $R^3$ groups together

form a divalent derivative (that is, a hydrocarbadiyl, siladiyl or germadiyl group) thereby forming a fused ring system,

X" independently each occurrence is an anionic ligand group of up to 40 non-hydrogen atoms, or two X" groups together form a divalent anionic ligand group of up to 40 non-hydrogen atoms or together are a conjugated diene having from 4 to 30 non-hydrogen atoms forming a $\pi$-complex with M, whereupon M is in the +2 formal oxidation state,

R* independently each occurrence is $C_{1-4}$ alkyl or phenyl,

E independently each occurrence is carbon or silicon, and

x is an integer from 1 to 8.

Additional examples of metal coordination complexes including the constrained geometry catalysts include those corresponding to the formula:

$LMX_pX'_q$ (III)

wherein L, M, X, X', p and q are as previously defined. A preferred metal complex belongs to the foregoing class (III) and corresponds to the formula:

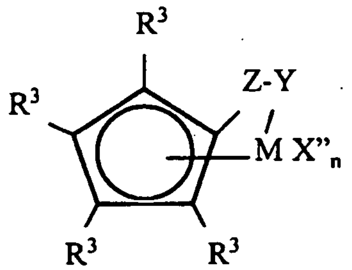

wherein:

M is titanium, zirconium or hafnium in the +2, +3 or +4 formal oxidation state;

$R^3$ in each occurrence independently is selected from the group consisting of hydrogen, hydrocarbyl, silyl, germyl, cyano, halo and combinations thereof, said $R^3$ having up to 20 non-hydrogen atoms, or adjacent $R^3$ groups together form a divalent derivative (that is, a hydrocarbadiyl, siladiyl or germadiyl group) thereby forming a fused ring system,

each X" is a halo, hydrocarbyl, hydrocarbyloxy, hydrocarbylamino, or silyl group, said group having up to 20 non-hydrogen atoms, or two X" groups together form a neutral $C_{5-30}$ conjugated diene or a divalent derivative thereof;

Y is -O- -S-, -NR*-, -PR*-;

Z is $SiR^*_2$, $CR^*_2$, $SiR^*_2SiR^*_2$, $CR^*_2CR^*_2$, CR*=CR*, $CR^*_2SiR^*_2$, or $GeR^*_2$, wherein R* is as previously defined, and

n is an integer from 1 to 3.

Most preferred coordination complexes used according to the present invention are complexes corresponding to the formula:

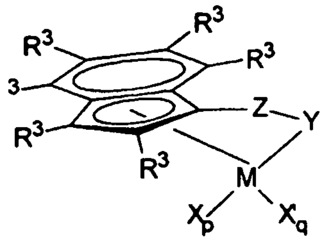
or
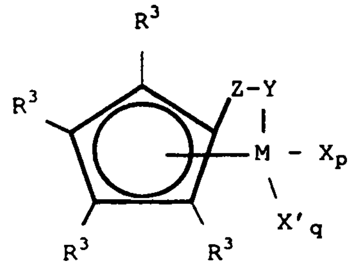

wherein:

$R^3$ independently each occurrence is a group selected from hydrogen, hydrocarbyl, halohydrocarbyl, silyl, germyl and mixtures thereof, said group containing up to 20 nonhydrogen atoms;

M is titanium, zirconium or hafnium;

Z, Y, X and X' are as previously defined;

p is 0, 1 or 2; and

q is zero or one;

with the proviso that:

when p is 2, q is zero, M is in the +4 formal oxidation state, and X is an anionic ligand selected from the group consisting of halide, hydrocarbyl, hydrocarbyloxy, di(hydrocarbyl)amido, di(hydrocarbyl)phosphido, hydrocarbylsulfido, and silyl groups, as well as halo-, di(hydrocarbyl)amino-, hydrocarbyloxy- and di(hydrocarbyl)phosphino-substituted derivatives thereof, said X group having up to 20 nonhydrogen atoms,

when p is 1, q is zero, M is in the +3 formal oxidation state, and X is a stabilizing anionic ligand group selected from the group consisting of allyl, 2-(N,N-dimethylaminomethyl)phenyl, and 2-(N,N-dimethyl)-aminobenzyl, or M is in the +4 formal oxidation state, and X is a divalent derivative of a conjugated diene, M and X together forming a metallocyclopentene group, and

when p is 0, q is 1, M is in the +2 formal oxidation state, and X' is a neutral, conjugated or nonconjugated diene, optionally substituted with one or more hydrocarbyl groups, said X' having up to 40 carbon atoms and forming a $\pi$-complex with M.

More preferred coordination complexes used according to the present invention are complexes corresponding to the formula:

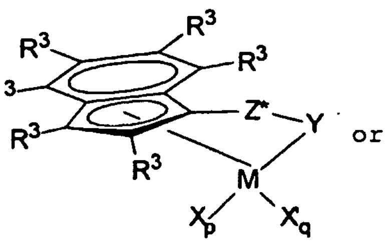
or
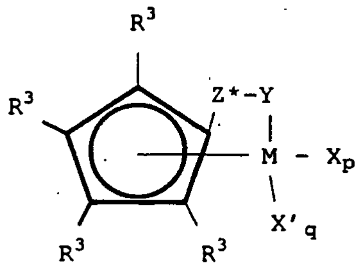

wherein:

$R^3$ independently each occurrence is hydrogen or $C_{1-6}$ alkyl;

M is titanium;

Y is -O-, -S-, -NR*-, -PR*-;

Z* is $SiR^*_2$, $CR^*_2$, $SiR^*_2SiR^*_2$, $CR^*_2CR^*_2$, CR*=CR*, $CR^*_2SiR^*_2$, or $GeR^*_2$;

R* each occurrence is independently hydrogen, or a member selected from hydrocarbyl, hydrocarbyloxy, silyl, halogenated alkyl, halogenated aryl, and combinations thereof, said R* having up to 20 non-hydrogen atoms, and optionally, two R* groups from Z (when R* is not hydrogen), or an R* group from Z and an R* group from Y form a ring system;

p is 0, 1 or 2;

q is zero or one;

with the proviso that:

when p is 2, q is zero. M is in the +4 formal oxidation state, and X is independently each occurrence methyl or benzyl,

when p is 1, q is zero, M is in the +3 formal oxidation state, and X is 2-(N,N-dimethyl)aminobenzyl; or M is in the +4 formal oxidation state and X is 2-butene-1,4-diyl, and

when p is 0, q is 1, M is in the +2 formal oxidation state, and X' is 1,4-diphenyl-1,3-butadiene or 1,3-pentadiene. The latter diene is illustrative of unsymetrical diene groups that result in production of metal complexes that are actually mixtures of the respective geometrical isomers.

The complexes can be prepared by use of well known synthetic techniques. A preferred process for preparing the metal complexes is disclosed in USSN 8/427,378, filed April 24, 1995. The reactions are conducted in a suitable noninterfering solvent at a temperature from -100 to 300 °C, preferably from -78 to 100 °C, most preferably from 0 to 50 °C. A reducing agent may be used to cause the metal M, to be reduced from a higher to a lower oxidation state. Examples of suitable reducing agents are alkali metals, alkaline earth metals, aluminum and zinc, alloys of alkali metals or alkaline earth metals such as sodium/mercury amalgam and sodium/potassium alloy, sodium naphthalenide, potassium graphite, lithium alkyls, lithium or potassium alkadienyls, and Grignard reagents.

Suitable reaction media for the formation of the complexes include aliphatic and aromatic hydrocarbons, ethers, and cyclic ethers, particularly branched-chain hydrocarbons such as isobutane, butane, pentane, hexane, heptane, octane, and mixtures thereof; cyclic and alicyclic hydrocarbons such as cyclohexane, cycloheptane, methylcyclohexane, methylcycloheptane, and mixtures thereof; aromatic and hydrocarbyl-substituted aromatic compounds such as benzene, toluene, and xylene, $C_{1-4}$ dialkyl ethers, $C_{1-4}$ dialkyl ether derivatives of (poly)alkylene glycols, and tetrahydrofuran. Mixtures of the foregoing are also suitable.

In the preferred catalyst systems to be used in the present invention, the active species of the catalyst is strongly associated with a carrier, so that the active species of the catalyst is not liberated from the carrier and does not escape from the polymer being produced.

<u>(b) The Solid Component</u>

Specifically stated, in one preferred supported catalyst component to be used in the process of the present invention, an active hydrogen moiety of an activator compound for the transition metal component, may be bonded to the hydroxyl groups of the support material through an organometal compound. That is, the activator compound is strongly associated with the support material. Such supported catalyst components are more fully described in WO 96/28480.

In a further preferred supported catalyst component to be used in the present invention aluminoxane is fixed to the support material by a heating and/or washing treatment, such that the aluminoxane is substantially not extractable under severe conditions (toluene at 90 °C). Such supported catalyst components are more fully described in WO 96/16092.

Suitable support materials for use in the present invention include porous resinous materials, for example, polyolefins such as polyethylenes and polypropylenes or copolymers of styrene-divinylbenzene, and solid inorganic

oxides including oxides of Group 2, 3, 4, 13, or 14 metals, such as silica, alumina, magnesium oxide, titanium oxide, thorium oxide, as well as mixed oxides of silica. Suitable mixed oxides of silica include those of silica and one or more Group 2 or 13 metal oxides, such as silica-magnesia or silica-alumina mixed oxides. Silica, alumina, and mixed oxides of silica and one or more Group 2 or 13 metal oxides are preferred support materials. Preferred examples of such mixed oxides are the silica-aluminas. The most preferred support material is silica. The shape of the silica particles is not critical and the silica may be in granular, spherical, agglomerated, fumed or other form. Suitable silicas include those that are available from Grace Davison (division of W.R. Grace & Co.) under the designations SD 3216.30, SP-9-10046, Davison Syloid™ 245, Davison 948 and Davison 952, from Degussa AG under the designation Aerosil 812, and from Crossfield under the designation ES 70X.

Support materials suitable for the present invention preferably have a surface area as determined by nitrogen porosimetry using the B.E.T. method from 10 to 1000 $m^2$/g, and preferably from 100 to 600 $m^2$/g. The pore volume of the support, as determined by nitrogen adsorption, is typically up to 5 $cm^3$/g, advantageously between 0.1 and 3 $cm^3$/g, preferably from 0.2 to 2 $cm^3$/g. The average particle size is not critical but typically is from 0.5 to 500 μm, preferably from 1 to 200 μm, more preferably to 100 μm.

The support material may be subjected to a heat treatment and/or chemical treatment to reduce the water content or the hydroxyl content of the support material. Both dehydrated support materials and support materials containing small amounts of water can be used. Typical thermal pretreatments are carried out at a temperature from 30°C to 1000°C for a duration of 10 minutes to 50 hours in an inert atmosphere or under reduced pressure. Typical support materials have a surface hydroxyl content of from 0.1 micromol, preferably from 5 micromol, more preferably from 0.05 mmol to not more than 10 mmol and preferably not more than 5 mmol hydroxyl groups per g of solid support, more preferably from 0.5 to 2 mmol per gram. The hydroxyl content can be determined by known techniques, such as infrared spectroscopy and titration techniques using a metal alkyl or metal hydroxide, for example, adding an excess of dialkyl magnesium to a slurry of the solid support and determining the amount of dialkyl magnesium remaining in solution via known techniques. This latter method is based on the reaction of S-OH + $MgR_2$ → S-OMgR + RH, wherein S is the solid support.

As an alternative technique for measuring the amount of hydroxyl groups on the surface of the inorganic solid, a method comprising the following procedures can be mentioned. Illustratively stated, the inorganic solid is dried in a nitrogen gas flow at 250 °C for 10 hours and then, the weight of the dried inorganic solid is measured and taken as an initial weight represented by "W1" (unit: g). After this, the dried inorganic solid is heated to 1,000 °C and then, allowed to cool to the room temperature. The weight of the cooled inorganic solid is measured, and the difference between the initial weight (W1) and the weight of the cooled inorganic solid is determined and taken as a weight loss represented by "ΔW" (unit: g). The amount of the hydroxyl groups is calculated by the following formula:

$$\text{Amount of the hydroxyl groups} = (1{,}000 \times \Delta W/18.02)/W1 \text{ mmol/g}.$$

It is preferred that the inorganic solid having hydroxyl groups on the surface thereof to be used in the method of the present invention do not contain water such as crystal water or adsorbed water. Any water contained in the inorganic solid can be removed therefrom by heating in a nitrogen atmosphere or under reduced pressure at 250 °C or more for 1 hour or more.

According to one preferred embodiment, the solid (or supported) catalyst comprises a supported catalyst component comprising (a) a support material, an organometal compound wherein the metal is selected from Groups 2-13 of the Periodic Table of the Elements, germanium, tin, and lead, and (b) an activator compound comprising (b-1) a cation which is capable of reacting with a transition metal compound to form a catalytically active transition metal complex, and (b-2) a compatible anion having up to 100 nonhydrogen atoms and containing at least one substituent comprising an active hydrogen moiety; and a transition metal compound.

The support material is typically treated with the organometal compound. Suitable organometal compounds are those comprising metals of Groups 2-13, germanium, tin, and lead, and at least two substituents selected from hydride, hydrocarbyl radicals, trihydrocarbyl silyl radicals, and trihydrocarbyl germyl radicals. Additional substituents preferably comprise one or more substituents selected from hydride, hydrocarbyl radicals, trihydrocarbyl substituted silyl radicals, trihydrocarbyl substituted germyl radicals, and hydrocarbyl-, trihydrocarbyl silyl- or trihydrocarbyl germyl-substituted metalloid radicals.

The recitation "metalloid", as used herein, includes non-metals such as boron, and phosphorus which exhibit semi-metallic characteristics.

Examples of such organometal compounds include organomagnesium, organozinc, organoboron, organoaluminum, organogermanium, organotin, and organolead compounds, and mixtures thereof. Further suitable organometal compounds are alumoxanes. Preferred examples are alumoxanes and compounds represented by the following formu-

lae: $MgR^1_2$, $ZnR^1_2$, $BR^1_xR^2_y$, $AlR^1_xR^2_y$, wherein $R^1$ independently each occurrence is hydride, a hydrocarbyl radical, a trihydrocarbyl silyl radical, a trihydrocarbyl germyl radical, or a trihydrocarbyl-, trihydrocarbyl silyl-, or trihydrocarbyl germyl-substituted metalloid radical, $R^2$ independently is the same as $R^1$, x is 2 or 3, y is 0 or 1 and the sum of x and y is 3, and mixtures thereof. Examples of suitable hydrocarbyl moieties are those having from 1 to 20 carbon atoms in the hydrocarbyl portion thereof, such as alkyl, aryl, alkaryl, or aralkyl. Preferred radicals include methyl, ethyl, n- or i-propyl, n-, s- or t-butyl, phenyl, and benzyl. Preferably, the aluminum component is selected from the group consisting of alumoxane and aluminum compounds of the formula $AlR^1_x$ wherein $R^1$ in each occurrence independently is hydride or a hydrocarbyl radical having from 1 to 20 carbon atoms, and x is 3. Suitable trihydrocarbyl aluminum compounds are trialkyl or triaryl aluminum compounds wherein each alkyl or aryl group has from 1 to 10 carbon atoms, or mixtures thereof, and preferably trialkyl aluminum compounds such as trimethyl, triethyl, tri-isobutyl aluminum.

Alumoxanes (also referred to as aluminoxanes) are oligomeric or polymeric aluminum oxy compounds containing chains of alternating aluminum and oxygen atoms, whereby the aluminum carries a substituent, preferably an alkyl group. The structure of alumoxane is believed to be represented by the following general formulae $(-Al(R)-O)_m$, for a cyclic alumoxane, and $R_2Al-O(-Al(R)-O)_m-AlR_2$, for a linear compound, wherein R independently in each occurrence is a $C_1$-$C_{10}$ hydrocarbyl, preferably alkyl, or halide and m is an integer ranging from 1 to 50, preferably at least about 4. Alumoxanes are typically the reaction products of water and an aluminum alkyl, which in addition to an alkyl group may contain halide or alkoxide groups. Reacting several different aluminum alkyl compounds, such as, for example, trimethyl aluminum and tri-isobutyl aluminum, with water yields so-called modified or mixed alumoxanes. Preferred alumoxanes are methylalumoxane and methylalumoxane modified with minor amounts of other lower alkyl groups such as isobutyl. Alumoxanes generally contain minor to substantial amounts of starting aluminum alkyl compound.

The way in which the alumoxane is prepared is not critical. When prepared by the reaction between water and aluminum alkyl, the water may be combined with the aluminum alkyl in various forms, such as liquid, vapor, or solid, for example in the form of crystallization water. Particular techniques for the preparation of alumoxane type compounds by contacting an aluminum alkyl compound with an inorganic salt containing water of crystallization are disclosed in U.S. Patent 4,542,199. In a particular preferred embodiment an aluminum alkyl compound is contacted with a regeneratable water-containing substance such as hydrated alumina, silica or other substance. This is disclosed in European Patent Application No. 338,044.

The supported catalyst according to this embodiment generally comprise a support material combined or treated with the organometal compound and containing at least 0.1 micromol of organometal compound per g of support material, typically at least 5 micromole per g support material, advantageously at least 0.5 weight percent of the metal, preferably aluminum, expressed in gram of metal atoms per g of support material. Preferably, the amount of metal is at least 2 weight percent, and generally not more than 40 weight percent, and more preferably not more than 30 weight percent. At too high amounts of metal the supported catalyst becomes expensive. At too low amounts the catalyst efficiency goes down to drop below acceptable levels.

The supported catalyst preferably contain a treated support material (a) comprising a support material and an alumoxane wherein not more than about 10 percent aluminum present in the treated support material is extractable in a one hour extraction with toluene of 90°C using about 10 mL toluene per gram of pretreated support material. More preferably, not more than about 9 percent aluminum present in the supported catalyst component is extractable, and most preferably not more than about 8 percent. This is especially advantageous when the supported catalyst is used in a polymerization process where a diluent or solvent is used which may extract non-fixed alumoxane from the support material. It has been found that when the amount of extractables is below the levels given above, the amount of alumoxane that can diffuse into the polymerization solvent or diluent, if used, is so low that no appreciable amount of polymer will be formed in the diluent, as compared to polymer formed on the support material. If too much polymer is formed in the diluent the polymer bulk density will decrease below acceptable levels and reactor fouling problems may occur.

The toluene extraction test is carried out as follows: About 1 g of supported catalyst component or supported catalyst, with a known aluminum content, is added to 10 mL toluene and the mixture is then heated to 90°C under an inert atmosphere. The suspension is stirred well at this temperature for 1 hour. Then the suspension is filtered applying reduced pressure to assist in the filtration step. The solids are washed twice with 3 to 5 mL toluene of 90°C per gram of solids. The solids are then dried at 120°C for 1 hour, and subsequently the aluminum content of the solids is measured. The difference between the initial aluminum content and the aluminum content after the extraction divided by the initial aluminum content and multiplied by 100 percent, gives the amount of extractable aluminum.

The aluminum content can be determined by slurrying about 0.5 g of supported catalyst component or supported catalyst in 10 mL hexane. The slurry is treated with 10 to 15 mL 6N sulfuric acid, followed by addition of a known excess of EDTA. The excess amount of EDTA is then back-titrated with zinc chloride.

Without wishing to be bound by any theory, it is believed that the activator compound according to this embodiment reacts with the organometal compound through the active hydrogen-containing substituent. It is believed that a group $R^1$ of the organometal compound combines with the active hydrogen moiety of the activator compound to release a neutral organic compound, for example an alkane, or hydrogen gas thereby chemically coupling the metal atom with

the activator compound residue. Thus the activator is believed to become chemically attached to the support material once the support material has been treated with the organometal compound or adduct of organometal compound and activator compound. Upon addition of the transition metal compound a supported catalyst is formed having improved properties.

The activator compound useful in the present invention contains a compatible anion having up to 100, and preferably up to 50 nonhydrogen atoms and having at least one substituent comprising an active hydrogen moiety. Preferred substituents comprising an active hydrogen moiety correspond to the formula (I):

$$G_q(T\text{-}H)_r \qquad (I)$$

wherein G is a polyvalent hydrocarbon radical, T is O, S, NR, or PR, wherein R is a hydrocarbyl radical, a trihydrocarbyl silyl radical, a trihydrocarbyl germyl radical, or hydrogen, H is hydrogen, q is 0 or 1, and preferably 1, and r is an integer from 1 to 3, preferably 1. Polyvalent hydrocarbon radical G has r+1 valencies, one valency being with a metal or metalloid of the Groups 5-15 of the Periodic Table of the Elements in the compatible anion, the other valency or valencies of G being attached to r groups T-H. Preferred examples of G include divalent hydrocarbon radicals such as: alkylene, arylene, aralkylene, or alkarylene radicals containing from 1 to 20 carbon atoms, more preferably from 2 to 12 carbon atoms. Suitable examples of G include phenylene, biphenylene, naphthylene, methylene, ethylene, 1,3-propylene, 1,4-butylene, phenylmethylene ($-C_6H_4-CH_2-$). The polyvalent hydrocarbyl portion G may be further substituted with radicals that do not interfere with the coupling function of the active hydrogen moiety. Preferred examples of such non-interfering substituents are alkyl, aryl, alkyl- or aryl-substituted silyl and germyl radicals, and fluoro substituents.

The group T-H in the previous formula thus may be an -OH, -SH, -NRH, or -PRH group, wherein R preferably is a $C_{1-18}$, preferably a $C_{1-10}$ hydrocarbyl radical or hydrogen, and H is hydrogen. Preferred R groups are alkyls, cycloalkyls, aryls, arylalkyls, or alkylaryls of 1 to 18 carbon atoms, more preferably those of 1 to 12 carbon atoms. The -OH, -SH, -NRH, or -PRH groups may be part of a larger functionality such as, for example, C(O)-OH, C(S)-SH, C(O)-NRH, and C(O)-PRH. Most preferably, the group T-H is a hydroxy group, -OH, or an amino group, -NRH.

Very preferred substituents $G_q(T\text{-}H)_r$ comprising an active hydrogen moiety include hydroxy- and amino-substituted aryl, aralkyl, alkaryl or alkyl groups, and most preferred are the hydroxyphenyls, especially the 3- and 4-hydroxyphenyl groups, hydroxytolyls, hydroxy benzyls (hydroxymethylphenyl), hydroxybiphenyls, hydroxynaphthyls, hydroxycyclohexyls, hydroxymethyls, and hydroxypropyls, and the corresponding amino-substituted groups, especially those substituted with -NRH wherein R is an alkyl or aryl radical having from 1 to 10 carbon atoms, such as for example methyl, ethyl, propyl, i-propyl, n-, i-, or t-butyl, pentyl, hexyl, heptyl, octyl, nonyl, and decyl, phenyl, benzyl, tolyl, xylyl, naphthyl, and biphenyl.

The compatible anion containing the substituent which contains an active hydrogen moiety, may further comprise a single Group 5-15 element or a plurality of Group 5-15 elements, but is preferably a single coordination complex comprising a charge-bearing metal or metalloid core, which anion is bulky. A compatible anion specifically refers to an anion which when functioning as a charge balancing anion in the catalyst system of this invention, does not transfer an anionic substituent or fragment thereof to the transition metal cation thereby forming a neutral transition metal compound and a neutral metal by-product. "Compatible anions" are anions which are not degraded to neutrality when the initially formed complex decomposes and are noninterfering with desired subsequent polymerizations.

Preferred anions are those containing a single coordination complex comprising a charge-bearing metal or metalloid core carrying a substituent containing an active hydrogen moiety which anion is relatively large (bulky), capable of stabilizing the active catalyst species (the transition metal cation) which is formed when the activator compound and transition metal compound are combined and said anion will be sufficiently labile to be displaced by olefinic, diolefinic and acetylenically unsaturated compounds or other neutral Lewis bases such as ethers and nitriles. Suitable metals for the anions of activator compounds include, but are not limited to, aluminum, gold, and platinum. Suitable metalloids include, but are not limited to, boron, phosphorus, and silicon. Activator compounds which contain anions comprising a coordination complex containing a single boron atom and a substituent comprising an active hydrogen moiety are preferred.

Preferably, compatible anions containing a substituent comprising an active hydrogen moiety may be represented by the following general formula (II):

$$[M'^{m+}Q_n(G_q(T\text{-}H)_r)_z]^{d-} \qquad (II)$$

wherein:

M' is a metal or metalloid selected from Groups 5-15 of the Periodic Table of the Elements;

Q independently in each occurrence is selected from the group consisting of hydride, dihydrocarbylamido, preferably

dialkylamido, halide, hydrocarbyloxide, preferably alkoxide and aryloxide, hydrocarbyl, and substituted-hydrocarbyl radicals, including halo-substituted hydrocarbyl radicals, and hydrocarbyl- and halohydrocarbyl-substituted organometalloid radicals, the hydrocarbyl portion having from 1 to 20 carbons with the proviso that in not more than one occurrence is Q halide;

G is a polyvalent hydrocarbon radical having r+1 valencies and preferably divalent hydrocarbon radical bonded to M' and T;

T is O, S, NR, or PR, wherein R is a hydrocarbon radical, a trihydrocarbyl silyl radical, a trihydrocarbyl germyl radical, or hydrogen;

m is an integer from 1 to 7, preferably 3;

n is an integer from 0 to 7, preferably 3;

q is an integer 0 or 1, preferably 1;

r is an integer from 1 to 3, preferably 1;

z is an integer from 1 to 8, preferably 1;

d is an integer from 1 to 7, preferably 1; and

n+z-m = d.

Preferred boron-containing anions which are particularly useful in this invention may be represented by the following general formula (III):

$$[BQ_{4-z'}(G_q(T\text{-}H)_r)_{z'}]^{d-} \qquad \text{(III)}$$

wherein:

B is boron in a valence state of 3;
z' is an integer from 1-4, preferably 1;
d is 1; and
Q, G, T, H, q, and r are as defined for formula (II). Preferably, z' is 1, q is 1, and r is 1.

Illustrative, but not limiting, examples of anions of activator compounds to be used in the present invention are boron-containing anions such as triphenyl(hydroxyphenyl)borate, diphenyl-di(hydroxyphenyl)borate, triphenyl(2,4-dihydroxyphenyl)borate, tri(p-tolyl) -(hydroxyphenyl)borate, tris(pentafluorophenyl)(hydroxyphenyl)borate, tris-(2,4-dimethylphenyl)(hydroxyphenyl) borate, tris-(3,5-dimethylphenyl)(hydroxyphenyl)borate, tris-(3,5-di-trifluoromethylphenyl)(hydroxyphenyl)borate, tris(pentafluorophenyl)(2-hydroxyethyl) borate, tris(pentafluorophenyl)(4-hydroxybutyl)borate, tris(pentafluorophenyl)(4-hydroxy- cyclohexyl)borate, tris(pentafluorophenyl)(4-(4'-hydroxyphenyl)phenyl)borate, and tris(pentafluorophenyl)(6-hydroxy-2-naphthyl)borate. A highly preferred activator complex is tris(pentafluorophenyl)(4-hydroxyphenyl)borate. Other preferred anions of activator compounds are those above mentioned borates wherein the hydroxy functionality is replaced by an amino NHR functionality wherein R preferably is methyl, ethyl, or *t*-butyl.

The cationic portion (b-1) of the activator compound to be used in association with the compatible anion (b-2) can be any cation which is capable of reacting with the transition metal compound to form a catalytically active transition metal complex, especially a cationic transition metal complex. The cations (b-1) and the anions (b-2) are used in such ratios as to give a neutral activator compound. Preferably the cation is selected from the group comprising Brønsted acidic cations, carbonium cations, silylium cations, and cationic oxidizing agents.

Brønsted acidic cations may be represented by the following general formula:

$$(L\text{-}H)^+$$

wherein:

L is a neutral Lewis base, preferably a nitrogen, phosphorus, or sulfur containing Lewis base; and $(L\text{-}H)^+$ is a Brønsted

acid. The Brønsted acidic cations are believed to react with the transition metal compound by transfer of a proton of said cation, which proton combines with one of the ligands on the transition metal compound to release a neutral compound.

Illustrative, but not limiting, examples of Brønsted acidic cations of activator compounds to be used in the present invention are trialkyl-substituted ammonium cations such as triethylammonium, tripropylammonium, tri(n-butyl) ammonium, trimethylammonium, tributylammonium, and tri(n-octyl)ammonium. Also suitable are N,N-dialkylanilinium cations such as N,N-dimethylanilinium, N,N-diethylanilinium, N,N-2,4,6-pentamethylanilinium, N,N-dimethylbenzylammonium; and dialkylammonium cations such as di-(*i*-propyl)-ammonium, dicyclohexylammonium; and triarylphosphonium cations such as triphenylphosphonium, tri(methylphenyl)phosphonium, tri(dimethylphenyl)phosphonium, dimethylsulphonium, diethylsulphonium, and diphenylsulphonium.

A second type of suitable cations corresponds to the formula:

$$©^+,$$

wherein $©^+$ is a stable carbonium or silylium ion containing up to 30 nonhydrogen atoms, the cation being capable of reacting with a substituent of the transition metal compound and converting it into a catalytically active transition metal complex, especially a cationic transition metal complex. Suitable examples of cations include tropyllium, triphenylmethylium, benzene(diazonium). Silylium salts have been previously generically disclosed in J. Chem. Soc. Chem. Comm., 1993, 383-384, as well as Lambert, J.B., et. al., Organometallics, 1994, 13, 2430-2443. Preferred silylium cations are triethylsilylium, and trimethylsilylium and ether substituted adducts thereof.

Another suitable type of cation comprises a cationic oxidizing agent represented by the formula:

$$O_x^{e+}$$

wherein $Ox^{e+}$ is a cationic oxidizing agent having a charge of e+, and e is an integer from 1 to 3.

Examples of cationic oxidizing agents include: ferrocenium, hydrocarbyl-substituted ferrocenium, $Ag^+$, and $Pb^{2+}$.

The quantity of activator compound in the supported catalyst component and the supported catalyst is not critical, but typically ranges from 0.1, preferably from 1 to 2,000 micromoles of activator compound per gram of treated support material. Preferably, the supported catalyst or component contains from 10 to 1,000 micromoles of activator compound per gram of treated support material.

Generally, the ratio of moles of activator compound to gramatoms of transition metal in the supported catalyst is from 0.05:1 to 100:1, preferably from 0.5:1 to 20:1 and most preferably from 1:1 to 5:1 mole activator compound per gramatom of transition metal in the supported catalyst. At too low ratios the supported catalyst will not be very active, whereas at too high ratios the catalyst becomes less economic due to the relatively high cost associated with the use of large quantities of activator compound.

The supported catalyst according to this embodiment can be prepared by combining the support material with the organometal compound and the activator compound. The order of addition is not critical. The organometal compound may be either first combined with the support material or with the activator compound, and subsequently the activator compound or the support material may be added. One preferred embodiment comprises treating the support material first with the organometal compound by combining the organometal compound in a suitable solvent, such as a hydrocarbon solvent, with the support material. The temperature, pressure, and contact time for this treatment are not critical, but generally vary from -20°C to 150 °C, from subatmospheric to 1000 Kpa (10 bar) more preferably at atmospheric pressure, for 5 minutes to 48 hours. Usually the slurry is agitated. After this treatment the solids are typically separated from the solvent. Any excess of organometal compound could then be removed by techniques known in the art. This method is especially suitable for obtaining support material with relatively low metal loadings.

According to a preferred embodiment, the support material is first subjected to a thermal treatment at 100°C to 1000 °C, preferably at 200°C to 850 °C. Typically, this treatment is carried out for 10 minutes to 72 hours, preferably from 0.5 hours to 24 hours. Then the thermally treated support material is combined with the organometal compound, preferably $AlR'_3$ wherein R' has the meaning defined hereinbefore in a suitable diluent or solvent, preferably one in which the organometal compound is soluble. Typical solvents are hydrocarbon solvents having from 5 to 12 carbon atoms, preferably aromatic solvents such as toluene and xylenes, or aliphatic solvents of 6 to 10 carbon atoms, such as hexane, heptane, octane, nonane, decane, and isomers thereof, cycloaliphatic solvents of 6 to 12 carbon atoms such as cyclohexane, or mixtures of any of these.

The support material is combined with the organometal compound at a temperature of -20°C to 150 °C, preferably at 20°C to 100 °C. The contact time is not critical and can vary from 5 minutes to 72 hours, and is preferably from 0.5 hours to 36 hours. Agitation is preferably applied. The thus treated support material is then preferably contacted with the activator compound.

An alternative treatment of the support material, suitable for obtaining alumoxane loadings attached to the support material, involves one or both of the following steps (A) and (B):

(A) heating a support material containing alumoxane under an inert atmosphere for a period and at a temperature sufficient to fix alumoxane to the support material;

(B) subjecting the support material containing alumoxane to one or more wash steps to remove alumoxane not fixed to the support material;

thereby selecting the conditions in heating step A and washing step B so as to form a treated support material wherein not more than about 10 percent aluminum present in the treated support material is extractable in a one hour extraction with toluene of 90°C using about 10 mL toluene per gram of supported catalyst component. High amounts of alumoxane attached to the support material are obtained using first heating step A, optionally followed by wash step B.

In this process the alumoxane treated support material may be obtained by combining in a diluent an alumoxane with a support material containing from zero to not more than 20 weight percent of water, preferably from zero to not more than 6 weight percent of water, based on the total weight of support material and water. The alumoxane desirably is used in a dissolved form.

Alternatively, the alumoxane pretreated support material may be obtained by combining in a diluent, a support material containing from 0.5 to 50 weight percent water, preferably from 1 to 20 weight percent water, based on the total weight of support material and water, with a compound of the formula $R''_{n*}AlX''_{3-n*}$ wherein R" in independently each occurrence is a hydrocarbyl radical, X" is halogen or hydrocarbyloxy, and n* is an integer from 1 to 3. Preferably, n* is 3. R" in independently each occurrence is preferably an alkyl radical, advantageously one containing from 1 to 12 carbon atoms. Preferred alkyl radicals are methyl, ethyl, propyl, isopropyl, n-butyl, isobutyl, tert-butyl, pentyl, iso-pentyl, hexyl, iso-hexyl, heptyl, octyl, and cyclohexyl. Highly preferred compounds of formula $R''_n{*}AlX''_{3-n}{*}$ are trimethylaluminum, triethylaluminum and tri-isobutylaluminum. When the alumoxane is prepared *in situ* by reacting the compound of the formula $R''_n{*}AlX''_{3-n*}$ with water, the mole ratio of $R''_{n*}AlX''_{3-n*}$ to water is typically 10:1 to 1:1, preferably from 5:1 to 1:1.

The support material is added to the alumoxane or compound of the formula $R''_{n*}AlX''_{3-n*}$, preferably dissolved in a solvent, most preferably a hydrocarbon solvent, or the solution of alumoxane or compound of the formula $R''_{n*}AlX''_{3-n*}$ is added to the support material. The support material can be used as such in dry form or slurried in a hydrocarbon diluent. Both aliphatic and aromatic hydrocarbons can be used. Suitable aliphatic hydrocarbons include, for example, pentane, isopentane, hexane, heptane, octane, iso-octane, nonane, isononane, decane, cyclohexane, methylcyclohexane and combinations of two or more of such diluents. Suitable examples of aromatic diluents are benzene, toluene, xylene, and other alkyl or halogen-substituted aromatic compounds. Most preferably, the diluent is an aromatic hydrocarbon, especially toluene. Suitable concentrations of solid support in the hydrocarbon medium range from 0.1 to 15, preferably from 0.5 to 10, more preferably from 1 to 7 weight percent. The contact time and temperature are not critical. Preferably the temperature is from 0°C to 60 °C, more preferably from 10°C to 40 °C. The contact time is from 15 minutes to 40 hours, preferably from 1 to 20 hours.

Before subjecting the alumoxane-treated support material to the heating step or washing step, the diluent or solvent is preferably removed to obtain a free flowing powder. This is preferably done by applying a technique which only removes the liquid and leaves the aluminum compounds on the solids, such as by applying heat, reduced pressure, evaporation, or a combination thereof. If desired, the removal of diluent can be combined with the heating step, although care should be taken that the diluent is removed gradually.

The heating step and/or the washing step are conducted in such a way that a very large proportion (more than about 90 percent by weight) of the alumoxane which remains on the support material is fixed. Preferably, a heating step is used, more preferably a heating step is used followed by a washing step. When used in the preferred combination both steps cooperate such that in the heating step the alumoxane is fixed to the support material, whereas in the washing step the alumoxane which is not fixed is removed to a substantial degree. The upper temperature for the heat-treatment is preferably below the temperature at which the support material begins to agglomerate and form lumps which are difficult to redisperse, and below the alumoxane decomposition temperature. When the transition metal compound c) is added before the heat treatment, the heating temperature should be below the decomposition temperature of the transition metal compound. Preferably, the heat-treatment is carried out at a temperature from 75°C to 250°C for a period from 15 minutes to 24 hours. More preferably, the heat treatment is carried out at a temperature from 160°C to 200°C for a period from 30 minutes to 4 hours. Good results have been obtained while heating for 8 hours at 100°C as well as while heating for 2 hours at 175 °C. By means of preliminary experiments, a person skilled in the art will be able to define the heat-treatment conditions that will provide the desired result. It is also noted, that the longer the heat treatment takes, the higher the amount of alumoxane fixed to the support material will be. The heat-treatment is carried out at reduced pressure or under an inert atmosphere, such as nitrogen gas, or both but preferably at reduced pressure. Depending on the conditions in the heating step, the alumoxane may be fixed to the support material to such a high degree that a

wash step may be omitted.

In the wash step, the number of washes and the solvent used are such that sufficient amounts of non-fixed alumoxane are removed. The washing conditions should be such that non-fixed alumoxane is soluble in the wash solvent. The support material containing alumoxane, preferably already subjected to a heat-treatment, is preferably subjected to one to five wash steps using an aromatic hydrocarbon solvent at a temperature from 0°C to 110 °C. More preferably, the temperature is from 20°C to 100 °C. Preferred examples of aromatic solvents include toluene, benzene and xylenes. More preferably, the aromatic hydrocarbon solvent is toluene. At the end of the wash treatment, the solvent is removed by a technique that also removes the alumoxane dissolved in the solvent, such as by filtration or decantation. Preferably, the wash solvent is removed to provide a free flowing powder.

The organometal compound treated support material is then typically reslurried in a suitable diluent and combined with the activator compound. The activator compound is preferably used in a diluent. Suitable diluents include hydrocarbon and halogenated hydrocarbon diluents. Any type of solvent or diluent can be used which does not react with the catalyst components in such a way as to negatively impact the catalytic properties. Preferred diluents are aromatic hydrocarbons, such as toluene, benzene, and xylenes, and aliphatic hydrocarbons such as hexane, heptane, and cyclohexane. Preferred halogenated hydrocarbons include methylene chloride and carbon tetrachloride. The temperature is not critical but generally varies between -20 °C and the decomposition temperature of the activator. Typical contact times vary from a few minutes to several days. Agitation of the reaction mixture is preferred. Advantageously, the activator compound is dissolved, using heat to assist in dissolution where desired. It may be desirable to carry out the contacting between the organometal-treated support material and the activator compound at elevated temperatures. Preferably, such elevated temperatures are from 45 °C to 120 °C.

Instead of first treating the support material with the organometal compound, preferably aluminum component, and subsequently adding the activator compound, the organometal compound, preferably aluminum component, and activator compound may be combined in a suitable diluent prior to adding or combining the reaction mixture to or with the thermally treated support material or the support material containing from 0.5 to 50 weight percent water.

Without wishing to be bound by any theory, it is believed that an organo group of the organometal compound reacts with the active hydrogen moiety contained in the activator anion (b-2) to form a reaction or contact product (hereinafter also referred to as "adduct"). For example, when the organometal compound is trialkylaluminum $AlR_3$ and the active hydrogen-containing moiety is represented by G-OH, the reaction product is believed to comprise G-O-$AlR_2$ whereas further an alkane by-product RH is formed. This adduct G-O-$AlR_2$ when combined with the support material containing hydroxyl groups, Si-OH in case of a silica support material, is believed to form Si-O-Al(R)-O-G together with alkane RH as by-product. This method of preparing the supported catalyst component has been found to run very smoothly and to provide catalysts and catalyst precursors or components having desirable properties. Typical ratios to be used in this reaction are from 1:1 to 20:1 moles of organometal compound to mole equivalents of active hydrogen moieties contained in the activator anion (b-2).

The amount of adduct, formed by combining the organometal compound with the activator compound, to be combined with the support material is not critical. Preferably, the amount is not higher than can be fixed to the support material. Typically, this is determined by the amount of support material hydroxyls. The amount of adduct to be employed is preferably not more than the equivalent amount of such hydroxyl groups. Less than the equivalent amount is preferably used, more preferably the ratio between moles of adduct to moles of surface reactive groups such as hydroxyls is between 0.01 and 1, even more preferably between 0.02 and 0.8. Prior to adding the transition metal compound it is preferred, especially when less than an equivalent amount of adduct is added with respect to surface reactive groups, to add an additional amount of organometal compound to the reaction product of support material and the adduct to remove any remaining surface reactive groups which otherwise may react with the transition metal and thus require higher amounts thereof to achieve equal catalytic activity. Prior to combining it with the transition metal compound, the supported catalyst component can be washed, if desired, to remove any excess of adduct or organometal compound.

The supported catalyst component comprising the support material, organometal compound, and the activator may be isolated to obtain a free flowing powder by removing the liquid medium using preferably filtration or evaporation techniques.

Although the transition metal compound may be combined with the activator compound, or the adduct of the organometal compound and the activator compound, prior to combining the activator compound or its adduct with the support material, this results in reduced catalyst efficiencies. Preferably, the transition metal is first combined with the support material treated with the organometal component and before adding the activator compound, or the transition metal is added after the treated support material and activator have been combined, or after the activator adduct and the support material have been combined. Most preferably, the transition metal compound (c) is added to the reaction product of the support material treated with the organometal compound and activator compound, or after the activator adduct and the support material have been combined.

The transition metal compound is preferably used dissolved in a suitable solvent, such as a hydrocarbon solvent, advantageously a $C_{5-10}$ aliphatic or cycloaliphatic hydrocarbon or a $C_{6-10}$ aromatic hydrocarbon. The contact temperature

is not critical provided it is below the decomposition temperature of the transition metal and of the activator. Good results are obtained in a temperature range of 0 °C to 100 °C. All steps in the present process should be conducted in the absence of oxygen and moisture.

Upon combining the transition metal compound with the supported catalyst component, the supernatant liquid typically is colorless indicating that the transition metal compound, which solution typically is colored, substantially remains with the solid supported catalyst.

According to an alternative preferred embodiment the solid (or supported) catalyst comprises:

> a supported catalyst component comprising a support material and an alumoxane wherein not more than about 10 percent aluminum present in the supported catalyst component is extractable in a one hour extraction with toluene of 90°C using about 10 ml toluene per gram of supported catalyst component;
> and a transition metal compound.

This solid catalyst according to this embodiment may be used in the absence of the activator compound comprising (b-1) a cation which is capable of reacting with a transition metal compound to form a catalytically active transition metal complex, and (b-2) a compatible anion having up to 100 nonhydrogen atoms and containing at least one substituent comprising an active hydrogen moiety.

According to this alternative embodiment, the aluminum atom (from the alumoxane component) to transition metal atom mole ratio in the supported catalyst generally is from I to 5000, preferably from 25 to 1000 and most preferably from 50 to 500.

The quantity of transition metal compound in the supported catalyst of the present invention is not critical, but typically ranges from 0.1 to 1000 micromoles of transition metal compound per gram of support material. Preferably, the supported catalyst contains from 1 to 250 micromoles of transition metal compound per gram of support material.

The supported catalyst according to this embodiment is obtainable by heating and/or washing a support material containing alumoxane under an inert atmosphere for a period and at a temperature sufficient to fix alumoxane to the support material, as discussed above.

It may be advantageous to use in the present process the solid catalyst in association with impurity scavengers which serve to protect the solid catalyst from catalyst poisons such as water, oxygen, and polar compounds. Preferred compounds for this purpose include an organoaluminum compound represented by the following formula:

$$R_nAlX_{3-n}$$

wherein R is a $C_1$-$C_{20}$ hydrocarbyl group; X is a halogen atom or a $C_1$-$C_{20}$ hydrocarbyloxy group; and n is a positive integer selected from 1 to 3,
or an organoaluminumoxy compound represented by the following formula:

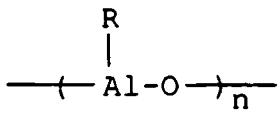

wherein R is a $C_1$-$C_{20}$ hydrocarbyl group; and n is a positive integer selected from 5 to 50.

By the treatment with the organoaluminum compound or the organoaluminumoxy compound, the resistance of the solid catalyst system to impurities, such as water, and oxygen which are present in the solid catalyst system, can be improved, and the solid catalyst system can be stored for a prolonged period of time.

In the above treatment, the organoaluminum compound or the organoaluminumoxy compound is used preferably in an amount of 0.1 to 100 mol in terms of aluminum, more preferably in an amount of 1 to 30 mol, per mol of a transition metal compound contained in the solid catalyst system. It is noted that the organoaluminiumoxy compound should preferably not be used in amount that may cause desorption of the transition metal compound from the solid catalyst. The solid catalyst system to be used in the method of the present invention can be stored in the form of a slurry thereof in an inert hydrocarbon solvent, or dried and stored in a solid form thereof.

The polymerization conditions for manufacturing the higher density ethylene homopolymer of the present invention are generally those useful in the slurry polymerization process, although gas phase polymerization processes are also believed to be useful, provided the proper catalysts and polymerization conditions are employed. A description of the slurry process can be found in Volume 6 of the "Encyclopedia of Polymer Science and Engineering" (John Wiley and Sons) pages 472 to 477.

By conducting the slurry polymerization under appropriately controlled reaction conditions, the ethylene copolymer being formed around the solid catalyst system is not melted or dissolved during the polymerization reaction, but maintains a powdery form (which powdery form is achieved by the use of the above-mentioned specific catalyst system) during the reaction.

When a polymerization reaction is conducted under slurry process conditions, the polymerization pressure is generally from 1 to 100 atm, preferably from 3 to 30 atm, and the polymerization temperature is generally from 20 to 115 °C, preferably from 50 to 105 °C. However, the upper limit of the polymerization temperature is a temperature which is highest among temperatures at which the ethylene copolymer produced can maintain substantially a powdery state. This temperature varies depending on the density of the ethylene copolymer produced and the type of diluent used.

As a diluent to be used for slurry polymerization, typical inert aliphatic or aromatic hydrocarbon solvents can be suitably used, including xylene, benzene, toluene, isobutane, isopentane, heptane, hexane and octane. Hexane, isobutane and isopentane are especially preferred.

In producing the higher density ethylene homopolymer, the molecular weight can be controlled by changing the content of hydrogen in the reaction system or by changing the polymerization temperature, as described in DE 3127133.2, incorporated herein by reference.

In the present invention, the solid catalyst system may contain, in addition to the above-mentioned components, various additives which are known to be useful for ethylene polymerization.

Properties of the Ethylene Homopolymer

The ethylene homopolymers of the present invention have the following unusual combination of properties.

The density satisfies the following inequality;

$$\text{density (g/cm}^3) \geq 0.9611 + 0.0058 \log (I_2) - 0.00128 \log^2 (I_2)$$

In addition the density is of from 0.915, to 0.985, preferably of from 0.935 to 0.983, more preferably of from 0.945 to 0.980 g/cm$^3$.

The melt index ($I_2$) is of from 0,0001 to 10,000, preferably of from 0.001 to 5,000, more preferably of from 0.01 to 3,000 g/10 min.

The $I_{21}/I_2$ ratio is of from 15 to 65, preferably of from 18 to 55, more preferably of from 20 to 50, or the $I_{10}/I_2$ ratio is of from 5 to 30, preferably of from 5 to to 28, more preferably of from 5.5 to 25.

The $M_w/M_n$ ratio (as measured by GPC) greater than 2.5, preferably from 2.5 to 10, more preferably from 2.8 to 8, most preferably from 3 to 6.

In addition, the $M_w/M_n$ satisfies the following inequalities;

$M_w/M_n \leq 11.67 \log M_w - 43.67$; preferably

$M_w/M_n \leq 5.15 \log M_w - 11.59$; more preferably

$M_w/M_n \leq 3.50 \log M_w - 11.00$; even more preferably

$1.25 \log M_w - 2.5 \leq M_w/M_n \leq \log M_w - 11.0$

Blend Compositions Comprising the Ethylene Homopolymer.

In addition to the ethylene homopolymer, also included the current invention are blend compositions comprising the ethylene homopolymer (Component A) with a polyolefin composition having a molecular weight maximum occurring in the fraction with the highest comonomer content (Component B).

Blend Compositions of the Ethylene Homopolymer with Polyolefin Compositions Having a Molecular Weight Maximum Occurring in the Fraction Having the Highest Comonomer Content.

Blends of the ethylene homopolymers can also be prepared with polyolefin compositions having a molecular weight maximum occuring in that pan of the composition that has the highest comonomer content. A process for the preparation of these compositions under slurry process conditions is disclosed in Japanese Application Serial No. 148392/96 filed May 17, 1996. Said polymer compositions comprise a copolymer of ethylene with at least one comonomer selected from the group consisting of a compound represented by the formula $H_2C = CHR$ wherein R is a $C_1$ - $C^{18}$ linear,

branched or cyclic alkyl group or a $C_6$ - $C_{20}$ aryl group, and a $C_4$-$C_{20}$ linear, branched or cyclic diene.

These polymer compositions also have the following properties (1) to (5):

(1) a density d ($g/cm^3$) of from 0.870 to 0.980;

(2) an Mw/Mn of from 2.5 to 10, preferably which satisfies the following inequalities;

$$1.25 \log M_w - 2.5 \leq M_w/M_n \leq 3.5 \log M_w - 11.0$$

wherein $M_w$ and $M_n$ are, respectively, a weight average molecular weight and a number average molecular weight, both as measured by gel permeation chromatography (GPC);

(3) within a range in molecular weight of the ethylene copolymer which is defined by the formula (IV):

$$\log (Mt) - \log (Mc) \leq 0.5 \qquad (IV)$$

wherein:

Mt is a point in molecular weight on a molecular weight distribution profile at which the profile shows a peak having a maximum intensity, and

Mc is an arbitrary point in molecular weight on the molecular weight distribution profile, the molecular weight distribution profile being obtained together with a comonomer content distribution profile by subjecting the ethylene copolymer to gel permeation chromatography/Fourier transformation infrared spectroscopy (GPC/FT-IR); and

an approximate straight line obtained from the comonomer content distribution profile by the least squares method has a gradient within the range defined by the formula(V):

$$0.0005 \leq \{C(Mc^1)-C(Mc^2)\}/(\log Mc^1-\log Mc^2) \leq 0.05 \quad (V)$$

wherein:

$Mc^1$ and $Mc^2$ are two different arbitrary points (Mc) in molecular weight which satisfy the formula (I), and

$C(Mc^1)$ and $C(Mc^2)$ are, respectively, comonomer contents corresponding to $Mc^1$ and $Mc^2$ on the approximate straight line;

In the present invention, it is preferred that, within the above-defined range in molecular weight of the ethylene copolymer, the above-mentioned gradient be within the range defined by the formula (IV):

$$0.001 \leq \{C(Mc^1)-C(Mc^2)\}/(\log Mc^1-\log Mc^2) \leq 0.02 \quad (IV)$$

wherein $Mc^1$, $Mc^2$, $C(Mc^1)$ and $C(Mc^2)$ are as defined for the formula (V).

(4) when, in cross fractionation chromatography (CFC) of the ethylene copolymer, with respect to extraction at an arbitrary temperature T(°C) falling within the range of between a first temperature at which a maximum amount of extraction is exhibited and a second temperature which is 10 °C higher than the first temperature, the relationship between the arbitrary temperature T(°C) and a point in molecular weight on a molecular weight distribution profile

of a copolymer fraction extracted at the arbitrary temperature T(°C) at which point in molecular weight the molecular weight distribution profile of the copolymer fraction shows a peak having a maximum intensity is treated by the least squares method to obtain an approximate straight line, the approximate straight line has a gradient within the range defined by the formula (VI):

$$-1 \leq \{\log Mp(T^1) - \log Mp(T^2)\}/(T^1 - T^2) \leq -0.005 \qquad (VI)$$

wherein:

$T^1$ and $T^2$ are two different arbitrary extraction temperatures T(°C) within the range of between the first temperature and the second temperature, and $Mp(T^1)$ and $Mp(T^2)$ are, respectively, molecular weights corresponding to $T^1$ and $T^2$ on the approximate straight line; and

Further, in the present invention, the gradient be preferably within the range defined by the formula:

$$-0.5 \leq \{\log Mp(T^1) - \log Mp(T^2)\}/(T^1 - T^2) \leq -0.007;$$

preferably,

$$-0.1 \leq \{\log Mp(T^1) - \log Mp(T^2)\}/(T^1 - T^2) \leq -0.01;$$

more preferably,

$$-0.08 \leq \{\log Mp(T^1) - \log Mp(T^2)\}/(T^1 - T^2) \leq -0.02;$$

wherein $T^1$, $T^2$, $Mp(T^1)$ and $Mp(T^2)$ are as defined for the formula (VI).

(5) the measurement of the ethylene copolymer by CFC shows characteristics such that the sum of respective amounts of copolymer fractions extracted at temperatures which are at least 10 °C lower than the first temperature as defined above is 8 percent by weight or less, preferably 5 percent by weight or less, more preferably 3.5 percent by weight or less; based on the total amount of, excluding purge, copolymer fractions extracted at temperatures in the overall range of extraction temperatures in CFC.

The polyolefin compositions having a molecular weight maximum occurring in the fraction having the highest comonomer content are prepared by copolymerizing ethylene with a comonomer, under slurry polymerization conditions in the presence of the previously described constrained geometry catalysts and the solid component used to prepare the ethylene homopolymers of the present invention. The copolymerization reaction is conducted by slurry polymerization using the conditions previously defined for preparation of the ethylene homopolymers of the present invention.

As a diluent to be used for slurry polymerization, the inert solvents, which are mentioned above in connection with the preparation of the solid catalyst system, can be suitably used. Especially, isobutane, isopentane, heptane, hexane and octane are preferred.

It is also important that the copolymerization reaction is performed at a diffusion-limited rate. This means that the ethylene copolymer produced must maintain a powdery state during the polymerization reaction. Therefore, the upper limit of the polymerization temperature is extremely important and must remain below the melting point of the copolymer.

Also ethylene is copolymerized with at least one comonomer selected from the group consisting of a compound represented by the formula $H_2C = CHR$ wherein R is a $C_1$ - $C_{18}$ linear, branched or cyclic alkyl group or a $C_6$ - $C_{20}$ aryl group, and a $C_4$ - $C_{20}$ linear, branched or cyclic diene. Illustrative examples of the compounds represented by the formula $H_2C = CHR$ include propylene, 1-butene, 1-pentene, 1-hexene, 4-methyl-1-pentene, 1-octene, 1-decene, 1-dodecene, 1-tetradecene, 1-hexadecene, 1-octadecene, 1-eicosene, vinylcyclohexene and styrene. Illustrative examples of $C_4$ - $C_{20}$ linear, branched and cyclic dienes include 1,3-butadiene, 1,4-pentadiene, 1,5-hexadiene, 1,4-hexadiene and cyclohexadinene. Of these, propylene, 1-butene, 1-pentene, 1-hexene, 4-methyl-1-pentene, 1-octene, 1-decene, 1-dodecene, 1-tetradecene, 1-hexadecene, 1-octadecene and 1-eicosene are especially preferred.
The molecular weight of the ethylene copolymer produced can be controlled by changing the content of hydrogen in the reaction system or by changing the polymerization temperature, as described in DE 3127133.2.

Preparation of the Blend Compositions.

If blends of the higher density ethylene homopolymer with further ethylene interpolymers or homopolymers as described herein, are required, each component can be made separately in different reactors, and subsequently blended together.
The blend compositions may also be produced via a continuous (as opposed to a batch or semi-batch operation) controlled polymerization process using at least one reactor. Preferably, though, the higher density ethylene interpolymer and the additional ethylene interpolymers of the blend compositions are made in a multiple reactor scheme, operated either in parallel or in series, such as those disclosed in USP 3,914,342 (Mitchell) and WO 94/00500. For example, at least two reactors operated in series, that is, one after the other, may be used. Alternatively, the reactors may be operated in parallel, that is, conducting the polymerization steps A and B in separate reactors and subsequently combining melt streams to yield a composite product blend. In the multiple reactor scheme, at least one of the reactors makes the higher density ethylene interpolymer using the supported metallocene catalyst described herein, under gas phase or slurry process conditions, and at least one of the reactors makes the additional components of the blend using the required single or multiple catalysts at polymerization temperatures, pressures and feed concentrations required to produce the polymer with the desired properties. The reactors may be any of the type commonly used for ethylene polymerization, including but not restricted to autoclave or loop-type' reactors.
Thus in one embodiment, the ethylene homopolymer using the supported metallocene catalyst described herein, is made under slurry process conditions in a first reactor in Step A and the contents of the first reactor passed to a second reactor in which the feed concentrations and the temperature are adjusted, to form under slurry process conditions in Step B either a second ethylene homopolymer or, if comonomer is added, to form, the polyolefin component of the polymer blend having a molecular weight maximum occurring in the fraction having the highest comonomer content.
In a further embodiment, the higher density ethylene homopolymer using the supported metallocene catalyst described herein, is made under slurry process conditions in a first reactor in Step A and the contents of the first reactor passed to a second reactor in which the feed concentrations and the temperature are adjusted, and one or more of the Ziegler catalysts described herein added, to form, in Step B, under slurry process conditions, the heterogeneous ethylene interpolymer component of the polymer blend with the desired properties.
In a further embodiment the higher density ethylene homopolymer using the supported metallocene catalyst described herein, is made under slurry process conditions in a first reactor in Step A and the contents of the first reactor enter a second reactor in which the feed concentrations and temperatures are adjusted and one of the metallocene catalysts described herein is added to from the homogeneous component of the polymer blend with the desired properties in Step B under solution process conditions.
In a further embodiment, the higher density ethylene homopolymer using the supported metallocene catalyst described herein, is made under slurry process conditions in a first reactor in Step A and the contents of the first reactor passed to a second reactor in which the temperature and feed concentrations are adjusted, and one or more of the Ziegler catalysts described herein added, to form, in Step B, under solution process conditions; the heterogeneous ethylene interpolymer component of the polymer blend with the desired properties.
Additives such as antioxidants (for example, hindered phenolics (for example, Irganox™ 1010), phosphites (for example, Irgafos™ 168)), cling additives (for example, PIB), antiblock additives, pigments, and fillers can also be included in the formulations, to the extent that they do not interfere with the enhanced formulation properties discovered by Applicants. Both Irganox™ and Irgafos™ are made by and trademarks of Ciba Geigy Corporation. Irgafos™ 168 is a phosphite stabilizer and Irganox™ 1010 is a hindered polyphenol stabilizer (for example, tetrakis [methylene 3-(3,5-ditert.butyl-4-hydroxyphenylpropionate)]methane.

Properties of Blend Compositions Comprising the Higher Density Ethylene Homopolymer.

(a) Properties of the Heterogeneous Broad Composition Distribution Ethylene/α-Olefin Interpolymer Blend Component.

The amount of the heterogeneous broad composition distribution ethylene/α-olefin interpolymer incorporated into the blended compositions of the present invention is of from 1 to 99, preferably of from 10 to 90, more preferably of from 25 to 75, most preferably of from 35 to 65 percent, by weight based on the combined weights of components A and B.

The density of the heterogeneous broad composition distribution ethylene/α-olefin interpolymer incorporated into the blended composition of the present invention is generally of from 0.870 to 0.980, preferably of from 0.890 to 0.965, more preferably of from 0.915 to 0.955 g/m$^3$.

The melt index ($I_2$) for the heterogeneous broad composition distribution ethylene/α-olefin interpolymer incorporated into the blended composition of the present invention is generally of from 0.0001 to 10000, preferably of from 0.001 to 5000, more preferably of from 0.01 to 3000 g/10 min.

The $I_{21}/I_2$ ratio of the heterogeneous broad composition distribution ethylene/α-olefin interpolymer incorporated into the blended composition of the present invention is of from 15 to 80, preferably of from 20 to 70, more preferably of from 25 to 60 or the $I_{10}/I_2$ ratio of the heterogeneous broad composition distribution ethylene/α-olefin interpolymer incorporated into the blended composition of the present invention is of from 5 to 40, preferably of from 5.3 to 35, more preferably of from 5.5 to 30.

The $M_w/M_n$ ratio of the heterogeneous broad composition distribution ethylene/α-olefin interpolymer incorporated into the blended composition of the present invention is generally of from 3 to 12 preferably of from 3.5 to 10, more preferably of from 4 to 9.

d) Properties of the Polyolefin Composition Having a Molecular Weight Maximum Occurring in the Fraction Having the Highest Comonomer Content Blend Component.

The amount of polyolefin compositions having a molecular weight maximum occurring in the fraction having the highest comonomer content, incorporated into the blended compositions of the present invention is of from 1 to 99, preferably of from 10 to 90, more preferably of from 25 to 75, most preferably of from 35 to 65 percent, by weight based on the combined weights of Components A and B.

The density of the polyolefin compositions having a molecular weight maximum occurring in the fraction having the highest comonomer content incorporated into the blended compositions of the present invention is generally of from 0.870 to 0.980, preferably of from 0.890 to 0.965, more preferably of from 0.915 to 0.955 g/cm$^3$.

The melt index ($I_2$) of the polyolefin compositions having a molecular weight maximum occurring in the fraction having the highest comonomer content incorporated into the blended compositions of the present invention is generally of from 0.0001 to 10000, preferably of from 0.001 to 5000, more preferably of from 0.01 to 3000 g/10 min.

The $I_{21}/I_2$ ratio of the polyolefin compositions having a molecular weight maximum occurring in the fraction having the highest comonomer content, incorporated into the blended compositions of the present invention is of from 15 to 65, preferably of from 18 to 55, more preferably of from 20 to 50 or the $I_{10}/I_2$ ratio of the polyolefin compositions having a molecular weight maximum occurring in the fraction having the highest comonomer content, incorporated into the blended compositions of the present invention is of from 5 to 30, preferably of from 5 to 28, more preferably of from 5.5 to 25.

The $M_w/M_n$ ratio of the polyolefin compositions having a molecular weight maximum occurring in the fraction having the highest comonomer content, incorporated into the blended compositions of the present invention is generally of from 2.5 to 10 preferably of from 2.8 to 8, more preferably of from 3 to 7.

b) Properties of the Final Blend Compositions

The density of the final blend compositions of the present invention is generally from 0.870 to 0.980. preferably of from 0.915 to 0.975, more preferably of from 0.935 to 0.970 g/cm$^3$.

The melt index of the final blend compositions of the present invention is generally of from 0.0001 to 10000 preferably of from 0.001 to 5000, more preferably of from 0.01 to 3000 g/10 min

The $I_{21}/I_2$ ratio of the final blend compositions of the present invention is of from 20 to 200, preferably of from 30 to 180, more preferably of from 40 to 150 or the $I_{10}/I_2$ ratio of the final blend compositions of the present invention is of from 5 to 100, preferably of from 5 to 90, more preferably of from 5 to 80.

The $M_w/M_n$ ratio of the final blend compositions of the present invention is generally of from 2.5 to 50, preferably of from 3 to 45, more preferably of from 5 to 40.

Possible applications for the novel resin blends taught by the present invention include pipe, especially pipe used in high temperature applications, geomembranes, wire and cable jacketing, thermoformed articles, stackable plastic

pallets, blow molded bottles and containers, rotomolded articles, films, including thick film applications such as environmental pond liners, and vinyl benzocyclobutene cross linking.

The present invention is now illustrated by, but is by no means limited to, the following examples.

EXAMPLES

Test Methods

Tensile Properties

The tensile properties of the molded materials were measured in accordance with ASTM D 638-76. Tensile strength, yield, toughness and 2 percent secant modulus of the films was measured in accordance with ASTM D-882; PPT tear was measured in accordance with ASTM D-2582.

Modulus Of Elasticity

The modulus of elasticity of the materials was measured in accordance with ISO 527.

Viscosity Number

**[0180]** The viscosity number of the materials in decaline was measured in accordance with ISO 1191.

Haze.

Haze was measured on a 0.5 mm thick compression molded specimen according to ASTM D 1003.

Impact Strength

The Double-V notched impact strength of the materials was measured in accordance with DIN 53753 (1J pendulum).

Ball Indentation Hardness

The ball indentation hardness of the materials was measured in accordance with ISO 527.

Impact Properties

The impact properties were evaluated in accordance with JIS-K7111.

Critical Strain Energy Release Rate

The critical strain energy release rate $G_C$ was measured in the Charpy mode, in accordance with the procedure described by E. Plati and J.G. Williams in Polymer Engineering and Science, June, 1975, Volume 15, No 6, pp. 470 to 477. For each temperature at least 6 samples are used. The sample dimensions are 125 mm x 10 mm x 10 mm. The bars are machined out of thick compression molded sheets. The procedure used to mold these sheets was a modification of the procedure outlined in "A compression molding technique for thick sheets of thermoplastics" by M. J. Cawood and G. A. H. Smith in Polymer Testing 1 (1980), 3-7, was used:

Thus the polymer granules or powders were compression molded in a 10 mm thick mold, laterally insulated using Teflon™. They were heated up to 160°C and kept at 6.7 MPa for three minutes followed by three one minute cycles of exertion and release. Excessive flash was removed. The material was then heated to 180°C and kept for about 5 minutes at 6.7 MPa, which was also exerted and released for 3 cycles of one minute each. Finally the melt was solidified under a pressure of 1.7 MPa and slowly cooled overnight by switching of the heating:

Bending ESCR Test

The Bending ESCR Test was carried out in 10 wt percent of surface-active agent solution in accordance with JIS-K6760. The testing temperature was 50°C or 80°C.

Pennsylvania Notch Test (PENT)

The Pennsylvania Notch Test is a slow crack growth test, performed following the procedure described by X. Lu and N. Brown, Polymer Testing 11 (1992), pages 309319. The test is conducted at 2.4 MPa and 80°C. The sample dimensions are 50 mm x 25 mm x 10 mm and are machined from the same sheet as the $G_C$ bars.

**Rheological Parameters**

Viscosities were measured on an Rheometrics mechanical spectrometer at 190°C in the oscillatory mode.

**Infrared Analysis**

Comonomer content was measured using infrared spectroscopy on a Beckman IR2450 Spectrophotometer.

**Intrinsic Tear**

Intrinsic tear was measured on the compression molded sheet using the Elmendorf tear (type B) method as described in ASTM D-1922.

**Determination of the Slope of Strain Hardening Coefficient**

The slope of strain hardening is measured by compression molding a plaque from the polymer to be tested. Typically, the plaque is molded at about 177°C for 4 minutes under almost no pressure and then pressed for 3 minutes under a pressure of about 1.4 MPa (200 psi). The plaque is then allowed to cool at about 8°C/minute while still under 1.4 MPa (200 psi) pressure. The molded plaque has a thickness of about 0.127mm (0.005 inches). The plaque is then cut into a dogbone shaped test piece using a steel rule die. The test piece is 8.001mm (0.315 inches) wide and 27.002mm (1.063 inches) long. The start of the curved portion of the dogbone shape begins at 8.001mm (0.315 inches) from each end of the sample and gently curves (that is tapers) to a width of 2.29mm (0.09 inches). The curve ends at a point 2.997mm (0.118 inches) from the start of the curve such that the interior portion of the dogbone test piece has a width of 2.286mm (0.09 inches) and a length of 5.0038mm (0.197 inches).

The tensile properties of the test sample is tested on an Instron Tensile Tester at a crosshead speed of 25.4mm/minute (1 inch/minute). The slope of strain hardening is calculated from the resulting tensile curve by drawing a line parallel to the strain hardening region of the resulting stress/strain curve. The strain hardening region occurs after the sample has pulled its initial load (that is, stress) usually with little or no elongation during the intial load) and after the sample has gone through a slight drawing stage (usually with little or no increase in load, but with increasing elongation (that is, strain)). In the strain hardening region, the load and the elongation of the sample both continue to increase. The load increases in the strain hardening region at a much lower rate than during the intial load region and the elongation also increase, again at a rate lower than that experienced in the drawing region. The slope of the parallel line in the strain hardening region is then determined.

The slope of strain hardening coefficient (SHC) is calculated according to the following equation:

$$\text{SHC} = (\text{slope of strain hardening}) * (I_2)^{0.25}$$

where $I_2$ = melt index in grams/10 minutes.

<u>a) The Ethylene Homopolymer.</u>

The following examples illustrate the unique molecular density vs $I_2$ and $M_w$ vs $M_w/M_n$ relationships of the ethylene homopolymers of the current invention as compared to;

a) ethylene homopolymer products of Ziegler catalysts made under slurry phase process conditions (Comparative Experiments A-F),

b) ethylene homopolymer products of unsupported, constrained geometry catalyst made under solution process conditions, (Comparative Experiments G-AB),

c) ethylene homopolymer products of supported, single site catalyst made under slurry process conditions (Comparative Experiments AC-AK), and

d) an ethylene homopolymer product of a supported, single site catalyst made under gas phase process conditions (Comparative Experiment AL).

Example 1.

Catalyst Preparation.

The supported cocatalyst was a silica/methylalumoxane support having the properties of and prepared substantially as described in WO 96/16092 (prepared by Witco GmbH, lot No. TA 02794/HL/30) containing between 23 and 25 weight percent of aluminum. A 100 g sample of the support was slurried for four hours in 800 ml of hexane to which was added an Isopar™ E (Exxon) solution of the constrained geometry catalyst {(tert-butylamido)dimethyl (tetramethyl-$\eta^5$-cyclopentadienyl)silane}dimethyl-titanium(IV) sufficient to obtain a final catalyst loading of 40 micromole of titanium for one gram of support. The catalyst was transferred to the catalyst feed vessel of the plant. In this vessel, the supported catalyst was further diluted with isopentane to obtain a concentration of 0.5 micromole titanium per ml. This catalyst is abbreviated as "CGC/MAO" in Table 1.

Polymerization

The polymerization was performed in a continuous slurry process using a single reactor mode. The reactor volume was 10 liter, and was operated at a constant level of about 65 percent, and agitated at 800 rpm using a Lightnin A310 mixing blade. The reactor temperature was kept constant by jacket cooling and the melt index of the produced polymer controlled via hydrogen addition. All feed streams were introduced to the reactor through dip pipe legs in the liquid phase to allow intimate mixing. The ethylene flow was kept constant during the polymerization and the reactor pressure controlled by the amount of catalyst fed to the reactor. Based on the ethylene flow, the isopentane diluent flow was adapted to obtain a certain percentage of solids in the reactor. The reactor temperature for Example 1 was 80°C, the reactor pressure was 14.6 bar, the ethylene feed rate was 1498 g/hr, the hydrogen feed rate was 0.271 Nl/hr, no comonomer was used. The isopentane feed rate was 3500 g/hr.

Examples 2-7.

Examples 2 - 7 were produced in a similar fashion to Example 1, but using the process conditions listed in Table 2.

Examples 8-14

Catalyst Preparation.

The catalyst used was the combination of a silica-supported borate activator and a constrained geometry prepared essentially as described in WO 96/28480 , Example 28. This catalyst was given the abbreviation of "CGC/Borate" in Table 1.

Polymerization.

Examples 8-14 were produced in a similar fashion as Example 1, but using the process conditions listed in Table 2.

Comparative Experiments A-C

Catalyst Preparation.

The comparative experiments A-C were produced, using the Ziegler-Natta supported catalyst as described in US Patent No.4,661,465 (abbreviated as "Ziegler" in Table 3).

Polymerization.

The polymerization was performed in a continuous slurry process using a single reactor mode similar to that

described for Example 1.

Comparative Experiments D-F

The comparative experiments D-F were produced as for Comparative Experiments A-C but in a commercial size slurry production facility, the process conditions of which are listed in Table 4.

Comparative Experiments G-AB

Catalyst Preparation.

The catalyst/cocatalyst system used was a mixture in Isopar™ E (Exxon) of solutions of the constrained geometry catalyst, {(tert-butylamido)dimethyl(tetramethyl-η$^5$-cyclopentadienyl)-silane}dimethyltitanium(IV) with the activator, tris (pentafluorophenyl) borane and isobutyl-modified methylalumoxane Akzo Chemical) in the respective molar ratios of 1: 3:10. This catalyst was given the abbreviation of "CGC " in Table 3.

Polymerization

Comparative experiments G-AB were produced under solution process conditions. A continuous stirred tank reactor with a volume of five liters was used. Hydrogen, if added for control of melt index, was combined into one stream with the ethylene before being introduced into the diluent mixture. Typically, this diluent mixture comprises a mixture of C8-C10 saturated hydrocarbons (for example Isopar™ E, trademark of Exxon). The reactor feed mixture was continuously introduced into the reactor. The transition metal complex and the cocatalyst, dissolved in the same solvent, were combined into a single stream and were also continuously injected into the reactor. The reactor pressure was held at about 30 bar. Temperature was controlled by the catalyst flow and the use of a cooling jacket. In the outlet stream of the reactor antioxidants (1000 ppm Irganox™ B-900 (trademark of Ciba-Geigy)) were incorporated. This stream was taken to a heat exchanger where its temperature was raised to 270°C and then to a devolatilizing unit where the solvent was separated from the polymer. The molten polymer was then carried to a pelletizer. The reactor conditions used for comparative experiments G-AB are listed in Table 4.

Comparative Experiments AC - AH

Catalyst Preparation

a) Preparation of Phenylsilane-Modified Silica Support.
A heptane (350 ml) slurry of GRACE Davison 948 (800°C; 0.5 mmol -OH/g) silica (30.0 g) was treated with $PhMeH_2Si$ (9.15 g; 97 percent; 72.8 mmol) and $NEt_3$ (10.5 ml; 75 mmol). The resulting mixture was refluxed for 12 hours in an overhead stirrer under argon atmosphere. The resulting solution was cooled to 25 C and the phenylmethylsilane-modified silica product was collected on a frit under argon, washed with pentane (5 x 30 ml), and dried under reduced pressure. Yield: 31.73 g. DRIFTS IR: v (Si-H) 2160 $cm^{-1}$ (s). $^{29}Si$ CPMAS: δ -6 ppm.
b) Preparation of the Activator (dimethylanilinium (4-(4'-hydroxyphenyl)phenyl)tris-(pentafluorophenyl)borate borate, $[PhMe_2NH]^+[(C_6F_5)_3B(C_6H_4\text{-}C_6H_4\text{-p-OH}$.

i). Synthesis of 4-((4'-bromophenyl)phenoxy)trimethylsilane $BrC_6H_4\text{-}C_6H_4\text{-p-OSiMe}_3$
1,1,1,3,3,3-Hexamethyldisilazane (75 ml; 98 percent purity; 0.348 mol) was added to $BrC_6H_4\text{-}C_6H_4\text{-p-OH}$ (30 g; 0.117 mol) and heated to reflux for 4 hours. After cooling to 25 °C , the solid product was filtered and rinsed with cold pentane ( 50 ml; 0 °C). The crude product was then dissolved in diethylether and purified by flash chromatography of silica (Davison 948, 800°C, pentane). The product was a white crystalline solid. Yield: 33.6 g (89 percent)
ii) Synthesis of $MgBrC_6H_4\text{-}C_6H_4\text{-p-OSiMe}_3$
Magnesium powder (50 mesh; 0.47 g; 19.3 mmol) was mixed with THF (5 ml) in a 3-necked flask. 1,2-dibromoethane (0.25 ml; 2.87 mmol) was then syringed into the flask and heated to reflux vigorously. A THF solution (11 ml) of $BrC_6H_4\text{-}C_6H_4\text{-p-OSiMe}_3$ (3.0 g; 9.34 mmol) was added dropwise through a syringe over a period of 20 minutes under reflux conditions. The resulting hot reaction mixture was cooled to 25°C in 1.5 hours. The dark gray solution was filtered and titrated with 2-butanol in the presence of 5-methyl-1,10-phenanthroline. Yield: 87 percent (0.76 M, 10.9 ml).

iii). Synthesis of $[MgBr \cdot 2THF][(C_6F_5)_3B(C_6H_4-C_6H_4-p-OSiMe_3)]$

A solution of $B(C_6F_5)_3$ (3.24 g; 6.33 mmol) in 50 ml diethyl ether was treated with freshly prepared $MgBrC_6H_4-C_6H_4-p-OSiMe_3$ (10.4 ml; 0.76 M; 8.13 mmol) at room temperature. The reaction mixture was stirred for 16 hours, 100 ml pentane was added and the mixture further stirred for 30 minutes to form a two layer mixture. The upper pentane layer was decanted and the lower layer was further washed with pentane (50 ml) two times. The resulting syrup was evaporated under reduced pressure to obtain the white solid product. Yield: 6.84 g (84 percent)

iv) Synthesis of dimethylanilinium 4-((4'-hydroxyphenyl)phenyl)-tris(pentafluorophenyl)borate $[PhMe_2NH]^+[(C_6F_5)_3B(C_6H_4-C_6H_4-p-OH)^-$

$[MgBr \cdot 2THF][(C_6F_5)_3B(C_6H_4-C_6H_4-p-OSiMe_3)]$, (23.9 mmol) and aqueous $NMe_2Ph \cdot HCl$ solution (100 ml; 0.312 M; 31.2 mmol) were stirred at room temperature for 16 hours. The resulting $H_2O$ solution was carefully decanted and the viscous solid was washed with distilled $H_2O$ (6 x 150 ml) and rinsed with pentane (3 x 100 ml) and dried under reduced pressure. Yield: 84 percent.

c) Preparation of Silica-Supported Activator (dimethylanilinium (4-(4'-hydroxyphenyl)phenyl)tris-(pentafluorophenyl) borate borate, $[PhMe_2NH]^+[(C_6F_5)_3B(C_6H_4-C_6H_4-p-O-SiHPh-Osilica)]-$)

An ether (80 ml) slurry of the phenylsilane-modified silica (4.00 g) was treated with dimethylanilinium (4-(4'-hydroxyphenyl)-phenyl)tris(pentafluorophenyl)borate $[PhMe_2NH]^+[(C_6F_5)_3B(C_6H_4-p-OH)]^-$ (prepared according to 1A2(a-d) (1.20 g; 1.49 mmol) at 25 C under an argon atmosphere. The solution was agitated in dry box for 2 days and the resulting white solid was filtered off, washed with ether (5 x 20 ml) and pentane (3 x 20 ml), and dried under reduced pressure. Yield: 5.04 g. DRIFTS IR: v (Si-H) 2191 $cm^{-1}$ (m): v (N-H) 3244 $cm^{-1}$ (w). $^{29}Si$ CPMAS: -O-SiHPh-OSilica (s, -41 ppm). $^{13}C$ CPMAS: $NHMe_2Ph$ (s, 47.7 ppm). ICP boron content: 0.225 percent

d) Final Catalyst Preparation

The final catalyst mixture was prepared by combining 81 mg (200 μmol) of $(n-BuCp)_2ZrCl_2$, 4.90 g of phenylsilane modified silica supported dimethylanilinium 4-(4'-hydroxyphenyl)phenyl)tris- (pentafluorophenyl)borate and 2 mmol triisobutylaluminum (TIBA) in 800 mL of hexane in the dry box and placing the mixture in a 1L bomb. The contents were then transferred under nitrogen to the stirred catalyst vessel and diluted to 8 L with isopentane. This catalyst is given the abbreviation "bisCp/Borate" in Table 3.

Polymerization

Examples AC-AH were produced in a similar fashion as Example 1, but using the process conditions listed in Table 4.

Comparative Experiments AI

Catalyst Preparation

As for Example AC except that the transition metal complex used was $Me_2Si(IND)_2ZrCl_2$ and the resulting catalyst was given the abbreviation "IND/Borate" in Table 3.

Polymerization

Examples AI was produced in a similar fashion as Example 1, but using the process conditions listed in Table 4.

Comparative Experiment AJ and AK.

The catalyst and polymerization procedure used was as prepared for Comparative Experiment AC and the homopolymer prepared using the process conditions listed in Table 4.

Comparative Experiment AL.

The comparative experiment AL was produced as for Example 1, but using the supported single site catalyst as described by Stehling et al. in U.S. Patent No. 5,382,631.

**Table 1***

| Examples | Catalyst type | 12.16 g/ 10 m | 121.6 g/ 10 m | 110/12 - | Density g/cc | Mn g/ mole | Mw g/ mole | Mw/Mn - |
|---|---|---|---|---|---|---|---|---|
| 1** | CGC/MAO | *0.000378* | 0.02 | * | 0.9400 | | | |
| 2** | CGC/MAO | *0.010851* | 0.35 | | 0.9484 | | | |
| 3 | CGC/MAO | 8.65 | | 6.65 | 0.9778 | 20000 | 64500 | 3.23 |
| 4 | CGC/MAO | 26.4 | | 6.57 | 0.9737 | 16000 | 48600 | 3.04 |
| 5 | CGC/MAO | 0.31 | | 7.71 | | 47400 | 143000 | 3.02 |
| 6 | CGC/MAO | 0.21 | | 7.67 | | 49900 | 160000 | 3.21 |
| 7 | CGC/MAO | 0.15 | | 7.40 | | 56600 | 202000 | 3.57 |
| 8 | CCC/ Borate | 5.68 | | 5.95 | 0.9674 | | | |
| 9 | CGC/ Borate | 1.36 | | 8.19 | 0.9648 | | | |
| 10 | CGC/ Borate | 0.12 | | | 0.9554 | 51200 | 295900 | 5.78 |
| 11 | CGC/ Borate | 23.1 | | 5.8 | 0.9689 | 16700 | 51300 | 3.07 |
| 12 | CGC/ Borate | | 1.75 | | | | | |
| 13 | CGC/ Borate | | 1.35 | | | 36300 | 134300 | 3.70 |
| 14 | CGC/ Borate | | <0.01 | | | 318300 | 844600 | 2.65 |

* Empty cell means data are not available
** 12 is calculated from 121 using:
I21.6/I2.16=(21.6/2.16)^(1/n) where log n=-0.1574+0.04645.log(I21.6)
From: Shenoy, A.V., Chattopadhyay, S., Nadkarni, V.M., Rheologica Acta, 1983, 22, 90

**Table 2**

| Slurry Process | | | | | | |
|---|---|---|---|---|---|---|
| **Examples** | **Reactor temperature °C** | **Reactor pressure KPa(bar)** | **Ethylene flow g/hr** | **Hydrogen flow Nl/hr** | **Isopentane flow g/hr** | **Reactor level percent** |
| 1 | 80 | 1460(14.6) | 1498 | 0.271 | 3500 | 65 |
| 2 | 80 | 1530(15.3) | 2500 | 0.495 | 4170 | 65 |
| 3 | 80 | 1500(15) | 1200 | 0.21 | 3300 | 65 |
| 4 | 80 | 1400(14) | 1600 | 0.488 | 3000 | 65 |
| 5 | 80 | 1500(15) | 1600 | 1.1 | 5000 | 65 |
| 6 | 80 | 1500(15) | 166 | 1.0 | 5000 | 65 |
| 7 | 80 | 1500(15) | 1200 | 0.50 | 3300 | 65 |
| 8 | 80 | 1500(15) | 1000 | 2.2 | 2500 | 70 |
| 9 | 80 | 520(5.2) | 650 | 0.7 | 2000 | 65 |
| 10 | 70 | 1500(15) | 800 | 0.4 | 2500 | 65 |

(continued)

| Slurry Process | | | | | | |
|---|---|---|---|---|---|---|
| Examples | Reactor temperature °C | Reactor pressure KPa(bar) | Ethylene flow g/hr | Hydrogen flow Nl/hr | Isopentane flow g/hr | Reactor level percent |
| 11 | 70 | 1500(15) | 750 | 2 | 2500 | 41 |
| 12 | 80 | 1500(15) | 900 | 0.3 | 2500 | 65 |
| 13 | 70 | 1500(15) | 1200 | 0.4 | 2500 | 66 |
| 14 | 60 | 900(9) | 750 | 0 | 2500 | 37 |

Table 3*

| Comparative Experiment | Catalyst type | 12.16 g/ 10 m | 121.6 g/ 10 m | 110/12 - | Density g/cc | Mn g/ mole | Mw g/ mole | Mw/Mn - |
|---|---|---|---|---|---|---|---|---|
| A** | Ziegler | 0.011421 | 0.38 | | 0.9521 | 90300 | 468100 | 5.18 |
| B** | Ziegler | 0.009017 | 0.3 | | 0.9280 | 92800 | 461000 | 4.97 |
| C | Ziegler | 100.4 | | | 0.9730 | 4404 | 41095 | 9.33 |
| D | Ziegler | 0.56 | | | 0.9641 | | | |
| E | Ziegler | 0.94 | 56.9 | 12.3 | 0.9668 | 21350 | 135000 | 6.32 |
| F | Ziegler | 0.23 | 12.7 | 12.6 | 0.9615 | 33100 | 187800 | 5.67 |
| G | CGC | 1.51 | | 10.4 | 0.9586 | | | |
| H | CGC | 3.03 | | 9.1 | 0.9584 | | | |
| I | CGC | 0.25 | | 24.3 | 0.9550 | | | |
| J | CGC | 4.91 | | 8.6 | 0.9596 | | | |
| K | CGC | 23.2 | | 6.7 | 0.9645 | | | |
| L | CGC | 38.7 | | 7.1 | 0.9617 | | | |
| M | CGC | 15.2 | | 7.8 | 0.9618 | | | |
| N | CGC | 2.90 | | 8.6 | 0.9582 | | | |
| O | CGC | 0.67 | | 16.9 | 0.9552 | | | |
| P | CGC | 1.54 | | 13.2 | 0.9558 | | | |
| Q | CGC | 1.66 | | 13.0 | 0.9556 | | | |
| R | CGC | 2.50 | | 12.2 | 0.9567 | | | |
| S | CGC | 3.55 | | 10.3 | 0.9584 | | | |
| T | CGC | 1.40 | | 13.6 | 0.9558 | | | |
| U | CGC | 0.95 | | 15.4 | 0.9543 | | | |
| V | CGC | 3 | | 10.1 | 0.9580 | | | |
| W | CGC | 2.5 | | 10.5 | 0.9580 | | | |
| X | CGC | 1.6 | | 8.4 | 0.9560 | 45300 | 83400 | 1.84 |
| Y | CGC | 1.9 | | 10.5 | 0.9580 | 33300 | 66800 | 2.01 |
| Z | CGC | 4.2 | | 9.1 | 0.9580 | 30900 | 60700 | 1.96 |

(continued)

| Comparative Experiment | Catalyst type | 12.16 g/ 10 m | 121.6 g/ 10 m | 110/I2 - | Density g/cc | Mn g/ mole | Mw g/ mole | Mw/Mn - |
|---|---|---|---|---|---|---|---|---|
| AA | CGC | 1.72 | | 12.1 | 0.9580 | 33700 | 66300 | 1.97 |
| AB | CGC | 1.00 | | 12 | 0.9580 | 34300 | 69100 | 2.01 |
| AC | bisCp/Boratc | 0.30 | | 6.0 | 0.9478 | | | |
| AD | bisCp/Borsic | 1.16 | | | 0.9545 | 35014 | 87466 | 2.50 |
| AE | bisCp/Borate | 2.29 | | | 0.9557 | 34130 | 95069 | 2.79 |
| AF | bisCp/Boratc | 1.53 | | | 0.9557 | 34100 | 78700 | 2.31 |
| AG | bisCp/Boratc | 1.19 | | | 0.9557 | | | |
| AH | bisCp/Boratc | 3.78 | | | 0.9542 | | | |
| AI | IND/Borate | 0.53 | | 17.4 | 0.9548 | | | |
| AJ | $nBuCp_2ZrCl_2$ | 1.80 | | | 0.9565 | | | |
| AK | $nBuCp_2ZrCl_2$ | 4.82 | | | 0.9615 | | | |
| AL*** | $nBuCp_2ZrCl_2$ | 5 | | | 0.9552 | | 76000 | 2.80 |

* Empty cell means data are not available
** 12 is calculated from 121 using:
121.6/12.16=(21.6/2.16)^(1/n) where log n=-0.1574+0.04645.log(121.6)
From: Shenoy, A.V., Chattopadhyay, S., Nadkarni, V.M., Pheologica Acta, 1983, 22, 90
* Empty cell means data are not available
From: Shenoy, A.V., Chattopadhyay, S., Nadkarni, V.M., Rheologica Acta, 1983, 22, 90
*** Stehling et al. US 5,382,631

**Table 4**

| | Slurry Process | | | | | | | Solution Process | | | | |
|---|---|---|---|---|---|---|---|---|---|---|---|---|
| Comparative Experiment | Reactor temperature °C | Reactor pressure kPa(bar) | Ethylene flow g/hr | Hydrogen flow g/hr | Butene flow g/hr | Isopentane flow g/hr | Reactor level percent | Solvent feed kg/hr | Ethylene feed kg/hr | Hydrogen feed 5ml/min | Reactor temperature °C | Ethylene conversion percent |
| A | 80 | 1200 (12) | - | - | 0 | - | - | - | - | - | - | - |
| B | 80 | 1200 (12) | - | - | - | - | - | - | - | - | - | - |
| C | 80 | 1200 (12) | - | - | 0 | - | - | - | - | - | - | - |
| D | 85 | 680 (6.8) | 3750000 | 12500 | - | 10800000 | 50 | - | - | - | - | - |
| E | 85 | 680 (6.8) | 3750000 | 15600 | - | 10800000 | 50 | - | - | - | - | - |
| F | 85 | 650 (6.5) | 3600000 | 10800 | - | 10800000 | 50 | - | - | - | - | - |
| G | - | - | - | - | - | - | - | 26.0 | 3.5 | 45 | 139.5 | 89 |
| H | - | - | - | - | - | - | - | 27.04 | 4 | 51 | 140 | 92 |
| I | - | - | - | - | - | - | - | 27.0 | 3.5 | 22 | 139 | 90 |
| J | - | - | - | - | - | - | - | 27.0 | 4 | 22 | 148 | 90 |
| K | - | - | - | - | - | - | - | 27.0 | 4 | 0 | 145 | 90 |
| L | - | - | - | - | - | - | - | 24.0 | 3.5 | 70 | 138.5 | 90 |
| M | - | - | - | - | - | - | - | 24.0 | 3.5 | 50 | 141 | 93 |
| N | - | - | - | - | - | - | - | 24.0 | 3.5 | 50 | 141 | 93 |
| O | - | - | - | - | - | - | - | 24.0 | 3.5 | 33 | 141 | 95 |
| P | - | - | - | - | - | - | - | 24.0 | 3.5 | 28.4 | 140 | 94 |
| Q | - | - | - | - | - | - | - | 24.0 | 3.5 | 31.5 | 136 | 95 |
| R | - | - | - | - | - | - | - | 24.0 | 3.5 | 31.5 | 136 | 95.5 |

(continued)

| | Slurry Process | | | | | | | Solution Process | | | | |
|---|---|---|---|---|---|---|---|---|---|---|---|---|
| Comparative Experiment | Reactor temperature °C | Reactor pressure kPa(bar) | Ethylene flow g/hr | Hydrogen flow g/hr | Butene flow g/hr | Isopentane flow g/hr | Reactor level percent | Solvent feed kg/hr | Ethylene feed kg/hr | Hydrogen feed 5ml/min | Reactor temperature °C | Ethylene conversion percent |
| S | - | - | - | - | - | - | - | 24.0 | 3.5 | 31.5 | 136 | 95 |
| T | - | - | - | - | - | - | - | 24.0 | 3.5 | 31.5 | 135.5 | 93 |
| U | - | - | - | - | - | - | - | 24.0 | 3.5 | 31.5 | 138 | 94.5 |
| V | - | - | - | - | - | - | - | 24.0 | 3.5 | 31.6 | 140 | 93.5 |
| w | - | - | - | - | - | - | - | 24.0 | 3.5 | 31.5 | 132 | 91 |
| X | - | - | - | - | - | - | - | 24.0 | 3.5 | 34 | 140 | 85 |
| Y | - | - | - | - | - | - | - | 24.0 | 3.5 | 41 | 145 | 87 |
| Z | - | - | - | - | - | - | - | 28.2 | 3.5 | 46 | 145 | 90 |
| AA | - | - | - | - | - | - | - | 22.0 | 3.5 | 43 | 151 | 91 |
| AB | - | - | - | - | - | - | - | - | 3.5 | - | 150 | 90 |
| AC | 75 | 1200 (12) | 750 | 0.3 | 0 | 4000 | 67 | - | - | - | - | - |
| AD | 65 | 1500 (15) | 1100 | 0.3 | 0 | 2500 | 65 | - | - | - | - | - |
| AE | 65 | 1500 (15) | 650 | 0.3 | 0 | 2500 | 65 | - | - | - | - | - |
| AF | 65 | 1500 (15) | 800 | 0.29 | 0 | 2500 | 65 | - | - | - | - | - |
| AG | 65 | 1200 (12) | 835 | 0.32 | 0 | 2000 | 65 | - | - | - | - | - |
| AH | 65 | 1200 (12) | 750 | 0.7 | 0 | 2000 | 45 | - | - | - | - | - |
| AI | 65 | 1200 (12) | 720 | 0.75 | 0 | 2000 | 40 | - | - | - | - | - |

(continued)

| | Slurry Process | | | | | | | Solution Process | | | | |
|---|---|---|---|---|---|---|---|---|---|---|---|---|
| Comparative Experiment | Reactor temperature °C | Reactor pressure kPa(bar) | Ethylene flow g/hr | Hydrogen flow g/hr | Butene flow g/hr | Isopentane flow g/hr | Reactor level percent | Solvent feed kg/hr | Ethylene feed kg/hr | Hydrogen feed 5ml/min | Reactor temperature °C | Ethylene conversion percent |
| AJ | 65 | 1200 (12) | 650 | 0.375 | 0 | 2000 | 41 | - | - | - | - | - |
| AR | 65 | 1200 (12) | 700 | 0.55 | 0 | 2000 | 41 | - | - | - | - | - |
| AL | - | - | - | - | - | - | - | - | - | - | - | - |
| *Empty cell means data are not available | | | | | | | | | | | | |

**b) The Ethylene Homopolymers as Sintering Powders**

Examples 15 and 16 illustrate the improved modulus of elasticity, ball indentation hardness and notched impact strength of the ethylene homopolymers of the current invention as compared to commercial products used as sintering powders of similar molecular weight.

Example 15

The higher density ethylene homopolymer of Example 13 was used to prepare a sample for the notched impact strength, ball indentation hardness and modulus of elasticity tests the results of which are shown in Table 5.

Example 16

The sample was prepared as for Example 15 but used the ethylene homopolymer of Example 14

Comparative Experiments AM - AR

The samples were prepared as for Example 15 but the following commercial resins were used: AM = Lupolen HM071 (BASF), and AN = Hostalen GUR 8110, AO = Hostalen GUR 4113, AP = Hostalen GUR 4120, AQ = Hostalen GUR 4130, AR = Hostalen GUR 4150, all from Hoechst (see Table 5).

**Table 5***

| Property | Example 15 | Example 16 | Comp. Exp AM | Comp. Exp AN | Comp. Exp AO | Comp. Exp AP | Comp. Exp. AQ | Comp. Exp. AR |
|---|---|---|---|---|---|---|---|---|
| density $g/cm^3$ | 0.947 | | 0.950 | 0.950 | | | | |
| viscosity number (decaline) $cm^3/g$ | 457 | 2048 | 460 | 510 | 1800 | 2300 | 2800 | 3500 |
| modulus of elasticity $N/mm^2$ | 1110 | 788 | 1000 | 1060 | 750 | 720 | 680 | 680 |
| ball indentation hardness $N/mm^2$ | 49 | 40 | 46 | 46 | 38 | 38 | 37 | 36 |
| Double notched impact strength $kJ/m^2$ | 210 | | 60 | ≤25 | | | | |
| *Empty cell means data are not available | | | | | | | | |

**c) Blend Compositions Comprising The Ethylene Homopolymers**

The individual components of the blend compositions of Examples 17 to 21 were prepared by the catalyst and polymerization process used for Example 1, the process conditions that is hydrogen and comonomer concentrations were adjusted to produce the components having the desired properties summarized in Table 6.

Example 17

Example 17 is a blend of 48 percent by weight of the ethylene homopolymer of the present invention having an $I_2$ of 26.4 g/10 min and a density of 0.9734 $g/cm^3$ and 52 percent by weight of an ethylene/butene-1 copolymer

prepared under slurry process conditions and having a molecular weight maximum occurring in the fraction having the highest comonomer content and having an $I_2$ of 0.00194 g/10 min a density of 0.9203 g/cm$^3$. The blend was prepared in a Winkworth 2Z-blade mixer. This internal mixer is equipped with two mixing blades running at different rpm: the front screw rotates at 52 rpm, the rear screw at 30 rpm. The working capacity is 1.2 liters. The powders were first dry blended with 2000 ppm Irganox® B225 available from Ciba Geigy. Charges of 350g of the mixture of the desired composition were then loaded and mixed for 10 minutes at 190°C. After mixing the polymer it is removed and is milled in a Heinrich Dreher S20 grinder. The ground polymer is then ready for compression molding.

Examples 18 - 19

These blends were prepared as for Example 17 using the components and weight ratio's summarized in Table 6.

Examples 17 - 19 (Table 7) illustrate the surprising and dramatic improvement in room and low temperature impact properties of the various blends as measured by GC versus the commercial resins of Comparative Experiments AS - AV. They also demonstrate that excellent stress crack resistance is observed (as measured by PENT) while maintaining excellent processability (as measured by the viscosity numbers). These examples also show the surprising improvement in impact properties as the comonomer content of Component B is increased (as shown by its density). Examples 20 - 21 and Example 18 (Table 8) illustrate the surprising and dramatic improvement in room and low temperature impact properties of the various blends as measured by GC and in stress crack resistance (as measured by PENT) on increasing the molecular weight of Component B while maintaining modulus.

Example 20

Example 20 is a blend of 48 percent by weight of the ethylene homopolymer of the present invention having an $I_2$ of 26.4 g/10 min and a density of 0.9734 g/cm$^3$ and 52 percent by weight of an ethylene/butene-1 copolymer prepared under slurry process conditions and having a molecular weight maximum occurring in the fraction having the highest comonomer content and having an $I_2$ of 0.00083 g/10 min a density of 0.9128 g/cm$^3$. The blend was prepared as for Example 17.

Example 21

Example 21 is a blend of 65 percent by weight of the ethylene homopolymer of the present invention having an $I_2$ of 8.65 g/10 min and a density of 0.9779 g/cm$^3$ and and 35 percent by weight of an ethylene/butene-1 copolymer prepared under slurry process conditions and having a molecular weight maximum occurring in the fraction having the highest comonomer content and having an $I_2$ of 0.00083 g/10 min a density of 0.9128 g/cm$^3$. The blend was prepared as for Example 17.

Examples 17 to 21 illustrate that the excellent properties of the various blends as well and that their range in processability as measured by the viscosity at 100/s over a wide range of molecular weights and densities of Components A and B is similar to those of Comparative Materials AS to AV. Therefore it can be expected that materials can be fabricated that have at least equivalent extrudability on the machine as the comparative examples.

Comparative Experiments AS-AV are resins prepared using Ziegler and single site catalysts the properties of which are summarized in Table 10.

Comparative Experiment AS.

Comparative Experiment AS is an ethylene/octene copolymer prepared under similar continuous solution process conditions as Comparative Experiment G using a Ziegler catalyst and is commercially available from the Dow Chemical Company under the tradename Dowlex™ 2344E and having the properties summarized in Table 10.

Comparative Experiment AT.

Comparative Experiment AT is a ethylene/octene copolymer produced under similar continuous solution process conditions as Comparative Experiment G using a constrained geometry catalyst and having the properties summarized in Table 10.

Comparative Experiment AU.

Comparative Experiment AU is a ethylene/octene copolymer prepared under similar continuous solution process conditions as Comparative Experiment G using a Ziegler catalyst and is commercially available from the Dow Chemical

Company under the tradename Dowlex™ 5056.01 and having the properties summarized in Table 10.

Comparative Experiment AV.

Comparative Experiment AV is a ethylene/octene copolymer prepared under similar continuous solution process conditions as Comparative Experiment G using a constrained geometry catalyst and having the properties summarized in Table 10.

Examples 22-23.

The individual components of the blend compositions of Examples 22 and 23 were prepared using the following catalyst and polymerization procedure.

A sample of 6.2 g (8.8 mmol) of triethylammonium tris(pentafluorophenyl)(4-hydroxyphenyl)borate was dissolved in 4 liter of toluene which had been heated to and maintained at 90°C for 30 minutes. To this solvent was added a 40ml aliquot of a 1M solution of triehexylaluminum in toluene. The resultant mixture was stirred for 1 min at 90°C. In a separate vessel, 100g of silica P-10 (manufactured and sold by Fuji silysia, Japan), which had been treated at 500°C for 3 hours in flowing nitrogen, was slurried in 1.7 liter of toluene. This silica slurry was heated to 90°C. To this silica slurry was added said mixture of triethylammonium tris(pentafluorophenyl)(4-hydroxy phenyl) borate and triethylaluminum keeping 90°C ,and stirred for 3 hours at 90°C. To the resultant was added a 206 ml aliquot of a 1 M solution of trihexylaluminum in toluene. The resultant mixture in about 5.9 liter of toluene was stirred at 90°C for 1 hour. Then the supernatant of the resultant mixture was removed by decantation and washed using 90°C toluene to remove excess trihexylaluminum. The decantation was repeated 5 times. After that, a 20 ml aliquot of a dark violet colored 0.218M solution of titanium (N-1,1-dimethylethyl)dimethyl[1-(1,2,3,4,5,-eta)-2,3,4,5-tetramethyl-2,4-cyclopentadien-1-yl]silanaminato[(2-)N]-($\eta^4$-1,3-pentadiene) in ISOPAR™ E (manufactured and sold by Exxon Chemical Co., USA) was added to the mixture and the resultant mixture was stirred for 3 hours to thereby obtain a green colored solid catalyst system.

Hexane, ethylene, 1-butene, hydrogen and the solid catalyst system were continuously fed to a continuously stirred tank reactor. The flow rates of hexane, ethylene, and hydrogen and 1-butene were adjusted to give the desired properties molecular weight and density for each component of the blend. The butene flow rate used to prepare the copolymer Component B of Examples 22 and 23 was 0.11 kg/hr. The slurry product formed was continuously withdrawn from the reactor. The total pressure of the reactor was 10 atm and the internal temperature of the reactor was maintained at 80°C. The slurry withdrawn was fed to a flash tank to remove the diluent and the dry, free flowing ethylene copolymer powder was obtained.

The blends were prepared using the twin-screw extruder (PCM-45, manufactured by IKEGAI, Co., Ltd., Japan). The screw rotates at 100-200 rpm. The mixing temperature was set up at 220°C (screw barrel temperature). The powders were first dry blended with 2000 ppm Irganox® 1076 available from Ciba Geigy, 600 ppm Calcium Stearate and 1000 ppm P-EPQ® available from Sandoz.

The butene flow rate used to prepare the copolymer Component B of Examples 24 and 25 was 0.05 kg/hr.

Example 22.

Examples 22 is a blend of 50 percent by weight of the ethylene homopolymer of the present invention having $I_2$ of 67.3 g/10 min and a density of 0.9734 g/cm$^3$ and and 50 percent by weight of an ethylene/butene-1 copolymer prepared under slurry process conditions and having a molecular weight maximum occurring in the fraction having the highest comonomer content and having an $I_2$ of 0.012 g/10 min a density of

Example 23.

Examples 23 is a blend of 50 percent by weight of the ethylene homopolymer of the present invention having an $I_2$ of 380 g/10 min and a density of 0.9788 g/cm$^3$ and and 50 percent by weight of an ethylene/butene-1 copolymer prepared under slurry process conditions and having a molecular weight maximum occurring in the fraction having the highest comonomer content and having an $I_2$ of 0.012 g/10 min a density of 0.9295 g/cm$^3$.

Examples 24-25.

The individual components of the blend compositions of Examples 24 and 25 were prepared using the same polymerization and blending process used for Examples 22 and 23, however the butene flow rate used to prepare the copolymer Component B of Examples 24 and 25 was 0.05kg/hr and the following catalyst preparation was used.

200g of silica P-10 (manufactured and sold by Fuji Silysia, Japan), which had been treated at 500°C for 3 hours

in flowing nitrogen, was slurried in 5 liter of hexane. To the resultant slurry was added a 400 ml aliquot of a 1 M solution of triethylaluminum in hexane. The resultant mixture was stirred for 0.5 hour at room temperature. To this slurry was added a solution of 20.1g (17.6 mmol) of bis(hydrogenated tallowalkyl) methylammonium tris(pentafluorophenyl)(4-hydroxyphenyl)borate in 296 ml of toluene. The resultant mixture was stirred for 0.5 hour at room temperature. After that, a 60 ml aliquot of a dark violet colored 0.218M solution of titanium (N-1,1-dimethylethyl)dimethyl[1-(1,2,3,4,5,-eta)-2,3,4,5-tetramethyl-2,4-cyclopentadien-1-yl]silanaminato[(2-)N]-$\eta^4$-1,3-pentadiene) in ISOPAR™ E (manufactured and sold by Exxon Chemical Co., USA) was added to the mixture and the resultant mixture was stirred for 3 hours at room temperature to thereby obtain a green colored solid catalyst system.

Example 24.

Examples 24 is a blend of 50 percent by weight of the ethylene homopolymer of the present invention having an $I_2$ of 380 g/10 min and a density of 0.9788 g/cm$^3$ and and 50 percent by weight of an ethylene/butene-1 copolymer prepared under slurry process conditions and having a molecular weight maximum occurring in the fraction having the highest comonomer content and having an $I_2$ of 0.013 g/10 min a density of 0.9378 g/cm$^3$.

Example 25.

Example 25 is a blend of 50 percent by weight of the ethylene homopolymer of the present invention having an $I_2$ of 380 g/10 min and a density of 0.9788 g/cm$^3$ and and 50 percent by weight of an ethylene/butene-1 copolymer prepared under slurry process conditions and having a molecular weight maximum occurring in the fraction having the highest comonomer content and having an $I_2$ of 0.013 g/10 min a density of 0.9378 g/cm$^3$.

Comparative Example AW-AY

The ethylene homopolymer used as Component A was produced using a Ziegler-Natta catalyst under slurry process conditions. The ethylene copolymers used as Component B were produced using a Ziegler-Natta catalyst substantially similar to those particularly useful for the preparation of heterogeneous polymers under slurry process conditions as described herein. The Ziegler-Natta catalyst had about 2 wt percent of Ti on the surface of the support comprising mainly magnesium dichloride.

Comparative Example AW.

Example AW is a blend of 50 percent by weight of the ethylene homopolymer produced using a Ziegler catalyst having an $I_2$ of 113 g/10 min and a density of 0.9753 g/cm$^3$, and 50 percent by weight of an ethylene/butene-1 copolymer prepared under slurry process conditions using a Ziegler catalyst and having an $I_2$ of 0.015 g/10 min and a density of 0.9306 g/cm$^3$.

Comparative Example AX.

Example AX is a blend of 50 percent by weight of the ethylene homopolymer produced using a Ziegler catalyst having an $I_2$ of 280 g/10 min and a density of 0.9795 g/cm$^3$ and 50 percent by weight of an ethylene/butene-1 copolymer prepared under slurry process conditions using a Ziegler catalyst and having an $I_2$ of 0.015 g/10 min and a density of 0.9306 g/cm$^3$.

Comparative Example AY.

Comparative Example AY is a blend of 60 percent by weight of the ethylene weight of the ethylene homopolymer produced using a Ziegler catalyst having an $I_2$ of 280 g/10 min and a density of 0.9795 g/cm$^3$ and 40 percent by weight of an ethylene/butene-1 copolymer prepared under slurry process condition using a Ziegler catalyst and having an $I_2$ of 0.015 g/10 min and a density of 0.9306 g/cm$^3$.

The polymer properties for Component A and Component B of these blend formulation are summarized in Table 11. The results of the testing of the various blend compositions are shown in Table 12.

Examples 22-25 show the excellent balance of properties such as impact strength at low temperature (as measured by Charpy Impact Strength -20°C), processability (as measured by $I_{21.6}$), and ESCR (as measured by Bending ESCR TEST) for the various blend compositions and such balance is best achieved by having the comonomer preferentially in the high molecular weight component. Further, it is clear that the Example 22-25 exhibit the superior properties comparing to the Comparative Examples AW-AY.

**Table 6**

| Example | Low $M_w$ Ethylene Homopolymer (Component A) | | | High $M_w$ Ethylene Interpolymer (Component B) | | | |
|---|---|---|---|---|---|---|---|
| | $I_2$ g/10 min | wt percent blend | density g/cm$^3$ | $I_2$ g/10min | wt percent in blend | mole percent butene | density g/cm$^3$ |
| 17 | 26.4 | 48 | 0.9734 | 0.00194 | 52 | 1.45 | 0.9203 |
| 18 | 26.4 | 48 | 0.9734 | 0.01085 | 52 | 2.91 | 0.9148 |
| 19 | 26.4 | 48 | 0.9734 | 0.00872 | 52 | 5.96 | 0.9033 |
| 20 | 26.4 | 0 | 0.9734 | 0.00083 | | 3.12 | 0.9128 |
| 21 | 8.65 | 0 | 0.9779 | 0.00083 | | 3.12 | 0.9128 |

**Table 7**

| Example # | | 17 | 18 | 19 |
|---|---|---|---|---|
| Melt Flow Properties | Units | | | |
| $I_2$ | g/10min | - | 0.09 | 0.08 |
| $I_5$ | g/10min | 0.08 | 0.31 | 0.28 |
| $I_{10}$ | g/10min | 0.27 | | 0.86 |
| $I_{21.6}$ | g/10min | 1.82 | 4.99 | 5.02 |
| $I_{10}/I_2$ | g/10min | - | 11.1 | 10.8 |
| $I_{21.6}/I_5$ | | 22.8 | 16.1 | 17.9 |
| $I_{21.6}/I_2$ | | - | 55.4 | 62.8 |
| Density | g/cm$^3$ | 0.946 | 0.942 | 0.9349 |
| IR Butene Content | Mole percent | 0.85 | 1.64 | 3.13 |
| Density Calc | g/cm$^3$ | 0.9422 | 0.9371 | 0.931 |
| GPC Anaylsis | | | | |
| $M_n$ | g/mole | 29200 | 28400 | 29500 |
| $M_w$ | g/mole | 310000 | 201000 | 212000 |
| $M_w/M_n$ | - | 10.62 | 7.08 | 7.19 |
| Rheology Bohlin | | | | |
| Viscosity at 0.1 l/s | Pa.s | 189326 | 49320 | 60305 |
| Viscosity at 100 l/s | Pa.s | 3807 | 2572 | 2564 |
| Mechanical Properties | | | | |
| Tensile Properties | | | | |
| Yield Stress | Mpa | 21.23 | 18.65 | 14.96 |
| Ultim Stress | Mpa | 27.42 | 29.48 | 31.89 |
| Elongation | percent | 484 | 555 | 558 |
| Toughness | Mpa | 91 | 103 | 102 |
| Slope SH | Mpa | 4.63 | 4.43 | 5.02 |
| 2 percent Sec. Mod. | Mpa | 572 | 534 | 417 |

(continued)

| Example # | | 17 | 18 | 19 |
|---|---|---|---|---|
| Young's Modulus | Mpa | 710 | 674 | 503 |
| Impact Properties | | | | |
| Ge - 20C | kJ/$m^2$ | 38.4 | 34.6 | 71.5 |
| Ge - 0C | kJ/$m^2$ | 30.5 | 29.2 | 61.3 |
| Ge - 20C | kJ/$m^2$ | 23.9 | 20.2 | 40.8 |
| PENT | | | | |
| 2.4 Mpa | Min. | >100000 | >100000 | >100000 |
| Intransic Tear | g/μm (g/mil) | 5.9(151) | 8.1(206) | 11.1(282) |
| Haze | percent (0.5 mm) | 84.5 | 94.6 | 98.4 |

**Table 8**

| Example # | | 18 | 20 |
|---|---|---|---|
| Melt Flow Properties | Units | | |
| $I_2$ | g/10 min | 0.09 | - |
| $I_5$ | g/10 min | 0.31 | 0.08 |
| $I_{10}$ | g/10 min | 1 | 0.32 |
| $I_{21.6}$ | g/10 min | 4.99 | 2.42 |
| $I_{10}/I_2$ | | 11.1 | - |
| $I_{21.6}/I_5$ | | 16.1 | 30.3 |
| $I_{21.6}/I_2$ | | 55.4 | - |
| Density | g/$cm^3$ | 0.942 | 0.9448 |
| IR Butene | Mole percent | 1.64 | 1.39 |
| Density Calc. | g/$cm^3$ | 0.9371 | 0.9372 |
| GPC Analysis | | | |
| $M_n$ | g/mole | 28400 | 22000 |
| $M_w$ | g/mole | 201000 | 335000 |
| $M_w/M_n$ | - | 7.08 | 15.23 |
| Rheology Bohlin | | | |
| Viscosity at 0.1 l/s | Pa.s | 49320 | 247070 |
| Viscosity at 100 l/s | Pa.s | 2572 | 3389 |
| Mechanical Properties | | | |
| Tensile Properties | | | |
| Yield Strese | Mpa | 18.65 | 20.17 |
| Ultim. Stress | Mpa | 29.48 | 33.99 |
| Elongation | percent | 555 | 566 |
| Toughness | Mpa | 103 | 115 |
| Stope SH | Mpa | 4.48 | 5.59 |
| 2 percent Sec. Mod. | Mpa | 534 | 557 |

(continued)

| Example # | | 18 | 20 |
|---|---|---|---|
| Young's Modulus | Mpa | 674 | 696 |
| Impact Properties | | | |
| Gc + 20C | kJ/m$^2$ | 34.6 | 40.2 |
| Gc + 0C | kJ/m$^2$ | 29.2 | |
| Gc - 20C | kJ/m$^2$ | 20.2 | 20.3 |
| PENT | | | |
| 2.4 Mpa | Min. | >100000 | >100000 |
| Intrinsic Tear | g/μm (g/mil.) | 8-1 (206) | 7-5 (190) |
| Haze | percent (0.5 mm) | 94.6 | 94 |

**Table 9**

| Example # | | 18 | 21 |
|---|---|---|---|
| Melt Flow Properties Units | | | |
| $I_2$ | g/10min | 0.09 | 0.05 |
| $I_5$ | g/10 min | 0.31 | 0.21 |
| $I_{10}$ | g/10min | 1 | 1 |
| $I_{21.6}$ | g/10 min | 4.99 | 6.54 |
| $I_{10}/I_2$ | | 11.1 | 20 |
| $I_{21.6}/I_5$ | | 16.1 | 31.1 |
| $I_{21.6}/I_2$ | | 55.4 | 130.8 |
| Density | g/cm$^3$ | 0.942 | 0.9497 |
| IR Butene | Mole percent | 1.64 | 1.28 |
| Density Calc. | g/cm$^3$ | 0.9371 | 0.9401 |
| GPC Analysis | | | |
| $M_n$ | g/mole | 28400 | 30900 |
| $M_w$ | g/mole | 201000 | 288000 |
| $M_w/M_n$ | - | 7.08 | 9.32 |
| Rheology Bohlin | | | |
| Viscosity in 0.1 l/s | Pa.s | 49320 | 111427 |
| Viscosity at 100 l/s | Pa.s | 2572 | 2316 |
| Mechanical Properties | | | |
| Tensile Properties | | | |
| Yield Strees | Mpa | 18.65 | 20.96 |
| Ultlm, Stress | Mpa | 29.48 | 27.19 |
| Elongation | percent | 555 | 553 |
| Toughness | Mpa | 103 | 101 |
| Slope SH | Mpa | 4.48 | 4.24 |
| 2 percent Sec. Mod. | Mpa | 534 | 617 |

(continued)

| Example # | | 18 | 21 |
|---|---|---|---|
| Melt Flow Properties Units | | | |
| Young's Modulus | Mpa | 674 | 782 |
| Impaet Properties | | | |
| Gc + 20C | kJ/m$^2$ | 34.6 | 38.4 |
| Gc + 0C | kJ/m$^2$ | 29.2 | 25.6 |
| Gc - 20C | kJ/m$^2$ | 20.2 | 18.1 |
| PENT | | | |
| 2.4 Mpa | Min | | |
| Intrinsic Tear | g/μm (g/mil.) | | |
| Haze | percent (5 mm) | 94.6 | 94 |

**Table 10**

| Comparative Experiment # | | AS | AT | AU | AV |
|---|---|---|---|---|---|
| Melt Flow Properties | Units | | | | |
| $I_5$ | g/10 min | 0.77 | 0.41 | 1.12 | 0.43 |
| $I_{10}$ | g/10 min | 5.79 | 5.07 | 8.44 | 6.09 |
| $I_{21.6}$ | g/10 min | 21.02 | 19.5 | 30.29 | 23.77 |
| $I_{10}/I_2$ | - | 7.52 | 12.37 | 7.54 | 14.16 |
| $I_{21.6}/I_5$ | - | | | | |
| $I_{21.6}/I_2$ | - | 27.3 | 47.5 | 27 | 62.6 |
| Density (meas) | g/cm$^3$ | 0.9356 | 0.9284 | 0.9203 | 0.9188 |
| Ir Analysis | | | | | |
| Octene Content | mole percent | 0.79 | 0.85 | 2.86 | 1.86 |
| Gpc Analysis | | | | | |
| Mw | g/mole | 127000 | 95500 | 106000 | 95200 |
| $M_w/M_n$ | - | 3.41 | 2.11 | 3.30 | 2.07 |
| Rheology Bohlin | | | | | |
| Viscosity at 0.1 I/S | Pa.s | *10715* | *25817* | *1357* | *86443* |
| Viscosity at 100 I/S | Pa.s | *1986* | *1643* | *1604* | *4480* |
| Tensiles | | | | | |
| Yield Stress | MPa | 16.29 | 13.52 | 9.34 | 10.08 |
| Uitimate Stress | MPa | 39.76 | 35.73 | 35.24 | 35.56 |
| Elongation | | 926 | 823 | 975 | 856 |
| 2 percent Sec Modulus | MPa | 278 | 213 | 113 | 113 |
| Young Modulus | MPa | 508 | 378 | 166 | 196 |
| Toughness | MPa | 195 | 161 | 176 | 158 |
| Slope SH | MPa | 4.36 | 4.27 | 3.68 | 4.19 |
| Impact Properties | | | | | |

(continued)

| Comparative Experiment # | | AS | AT | AU | AV |
|---|---|---|---|---|---|
| Gc 0°C | $KJ/M^2$ | 6.2 | 13.4 | 95.9 | 96 |
| GC - 20°C | $KJ/M^2$ | 4.8 | 5 | 12.7 | 16.8 |
| Intrinsic Tear | g/μm (g/mil) | 5-7 (144) | 10-4 (264) | 21.7 (551) | 17.0 (432) |
| Haze | percent (0.5 mm) | 88.4 | 78.2 | 87.9 | |
| *Note italic values are calculated | | | | | |

**TABLE 11**

| Example | Low Mw Component (Component A) | | | | | | High Mw Component (Component B) | | | | | |
|---|---|---|---|---|---|---|---|---|---|---|---|---|
| # | $I_2$ g/10min | mole percent butene | Mw g/mol | Mw/Mn | density g/cm$^3$ | wt percent in blend | $I_2$ g/10min | mole percent butene | density g/cm$^3$ | Mw g/mol | Mw/Mn | wt percent in blend |
| Example 22 | 67.3 | 0 | 23000 | 3.20 | 0.9734 | 50 | 0.012 | 0.76 | 0.9295 | 297000 | 5.50 | 50 |
| Example 23 | 380 | 0 | 17200 | 3.30 | 0.9788 | 50 | 0.012 | -0.76 | 0.9295 | 297000 | 5.50 | 50 |
| Example 24 | 380 | 0 | 17200 | 3.30 | 0.9788 | 50 | 0.013 | 0.16 | 0.9378 | 187000 | 3.81 | 50 |
| Example 25 | 380 | 0 | 17200 | 3.30 | 0.9788 | 60 | 0.013 | 0.16 | 0.9378 | 487000 | 5.81 | 40 |
| Comp Ex. AW | 113 | 0 | 79000 | 14.80 | 0.9753 | 50 | 0.015 | 0.95 | 0.9306 | 425000 | 7.64 | 50 |
| Comp.Ex.AX | 280 | 0 | 65000 | 16.20 | 0.9795 | 50 | 0.015 | 0.95 | 0.9306 | 425000 | 7.64 | 50 |
| Complex.Ex.AY | 280 | 0 | 65000 | 16.20 | 0.9795 | 60 | 0.015 | 0.95 | 0.9306 | 425000 | 7.64 | 40 |

**Table 12**

| | | Example 22 | Example 23 | Example 24 | Example 25 | Comparative Ex.Aw | Comparative Ex.AX | Comparative Ex.AY |
|---|---|---|---|---|---|---|---|---|
| Melt Flow Properties | Units | | | | | | | |
| $I_2$ | g/10 min | 0.12 | 0.12 | 0.13 | 0.30 | 0.13 | 0.18 | 0.40 |
| $I_5$ | g/10 min | 0.51 | 0.49 | 0.45 | 1.29 | 0.54 | 0.74 | 1.84 |
| $I_{21,6}$ | g/10 min | 10.9 | 10.8 | 11.6 | 37.0 | 13.9 | 20.1 | 55.5 |
| $I_{21,6}/I_2$ | | 90.8 | 89.8 | 92.0 | 125.5 | 109.5 | 111.4 | 139.1 |
| Density | g/cm3 | 0.9552 | 0.9560 | 0.9613 | 0.9649 | 0.9551 | 0.9560 | 0.9603 |
| Impact Properties | | | | | | | | |
| Charpy 123C | kgfcm/cm2 | 24.4 | 20.6 | 31.0 | 12.2 | 17.6 | 13.5 | 6.6 |
| Charpy 20C | kgfcm/cm2 | 19.0 | 13.0 | 20.6 | 8.0 | 12.5 | 5.2 | 2.7 |
| ESCR | | | | | | | | |
| Bending 80C | hr | 800 | >2,000 | 25 | <10 | 170 | 100 | 20 |
| 50C | hr. | >2,000 | >2,000 | 330 | 140 | 1,000 | >2,000 | 360 |

## Claims

1. A polymer blend composition comprising;

   (A) an ethylene homopolymer in an amount of from 1 to 99 percent by weight based on the combined weight of Components (A) and (B), wherein the ethylene homopolymer is prepared under slurry conditions in the presence of a supported single site catalyst having constrained geometry and is **characterized by**:

   a) an $M_w/M_n$ ratio greater than 2.5;
   b) a melt index ($I_2$) of from 0.0001 to 10000 g/10 min;
   c) a density which satisfies the following inequality;
   d) an $M_w/M_n$ ratio which satisfies the following inequality;

   $$M_w/M_n \leq 11.67 \log M_w - 43.67;$$

   and

   (B) a polyolefin composition having a molecular weight maximum occurring in the fraction with the highest comonomer content wherein said polyolefin composition is present in an amount of from 1 to 99 percent by weight based on the combined weight of Components (A) and (B).

2. The polymer blend of claim 1 wherein the ethylene homopolymer is **characterized by**:

   a) a density of from 0.915 to 0.985 g/cm³,
   b) an $I_{10}/I_2$ ratio of from 5 to 30 or the $I_{21}/I_2$ ratio is from 15 to 65; and
   c) an $M_w/M_n$ ratio that satisfies the following inequality;

   $$M_w/M_n \leq 5.15 \log M_w - 11.59.$$

3. The polymer blend of claim wherein the ethylene homopolymer is **characterized by**:

   a) a density of from 0.935 to 0.983 g/cm³,
   b) an $M_w/M_n$ ratio of from 2.5 to 10,
   c) a melt index ($I_2$) of from 0.001 to 5000 g/10 min.
   d) an $I_{10}/I_2$ ratio of from 5 to 28 or the $I_{21}/I_2$ ratio is from 18 to 55; and
   e) an $M_w/M_n$ ratio that satisfies the following inequality;

   $$M_w/M_n \leq 3.50 \log M_w - 11.00.$$

4. The polymer blend of any one of the preceding claims wherein the $M_w/M_n$ ratio of the ethylene homopolymer satisfies the following inequality;

   $$1.25 \log M_w - 2.5 \leq M_w/M_n \leq 3.50 \log M_w - 11.0.$$

5. The polymer blend of any one of the preceding claims wherein the ethylene homopolymer is **characterized by**:

   a) a density of from 0.945 to 0.980 g/cm³,
   b) a melt index ($I_2$) of from 0.01 to 3000 g/10 min,
   c) an $I_{10}/I_2$ ratio of from 5.5 to 25 or the $I_{21}/I_2$ ratio is from 20 to 50,
   d) a $M_w/M_n$ ratio of from 3 to 6; and

e) wherein said homopolymer contains less than about 1 ppm catalyst chloride residues and less than about 1 ppm catalyst chromium residues

**6.** The polymer blend of claim 1 wherein the ethylene homopolymer contains less than about 1 ppm catalyst chloride residues and less than about 1 ppm catalyst chromium residues.

**7.** The polymer blend composition of Claim 1 having

a) a density of from 0.87 to 0.98 g/cm$^3$,
b) a melt index ($I_2$) of from 0.0001 to 10000 g/10 min,
c) an $I_{21}/I_2$ of from 20 to 200, or an $I_{10}/I_2$ of from 5 to 100, and
d) an $M_w/M_n$ ratio of from 2.5 to 50; and wherein

(I) Component A is present in an amount of from 10 to 90 percent by weight based on the combined weight of Components (A) and (B); and has

a) a density of from 0.915 to 0.985 g/cm$^3$,
b) a melt index ($I_2$) of from 0.0001 to 10,000 g/10min,
c) an $I_{21}/I_2$ of from 15 to 65, or an $I_{10}/I_2$ of from 5 to 30, and
d) an $M_w/M_n$ ratio of from 2.5 to 10; and
e) an $M_w/M_n$ ratio which satisfies the following inequality;

$$M_w/M_n \leq 5.15 \log M_w - 11.59;$$

and

(II) Component B is present in an amount of from 10 to 90 by weight based on the combined weight of Components (A) and (B), and has;

a) a density of from 0.87 to 0.98 g/cm$^3$,
b) a melt index ($I_2$) of from 0.0001 to 1000 g/10 min; and wherein

i) Component B has

a) an $I_{21}/I_2$ of from 15 to 65, or an $I_{10}/I_2$ of from 5 to 30, and
b) an $M_w/M_n$ of from 2.5 to 10; and
c) when, in cross fractionation chromatography (CPC) of said ethylene copolymer, with respect to extraction at an arbitrary temperature T(°C) falling within the range of between a first temperature at which a maximum amount of extraction is exhibited and a second temperature which is the lower temperature of either the temperature of 10°C higher than said first temperature or 96°C, the relationship between said arbitrary temperature T(°C) and a point in molecular weight on a molecular weight distribution profile of a copolymer traction extracted at said arbitrary temperature T(°C) at which point in molecular weight said molecular weight distribution profile of the copolymer fraction shows a peak having a maximum intensity is treated by the least squares method to obtain an approximate straight line within the range of between said first temperature and said second temperature, if there is the copolymer fraction the amount of which is less than 1 percent by weight on the total amount, excluding purge, of copolymer fractions extracted at temperatures in the overall range of extraction temperatures in CFC, the copolymer fraction can be excluded from the calculation for the approximate straight line; the approximate straight line has a gradient within the range defined by the formula (I):

$$-1 \leq \{\log Mp(T^1) - \log Mp(T^2)\}/(T^1 - T^2) \leq -0.005 \quad (I)$$

wherein:

$T^1$ and $T^2$ are two different arbitrary extraction temperatures T(°C) within the range of between said first temperature and said second temperature, and
$Mp(T^1)$ and $Mp(T^2)$ are, respectively, molecular weights corresponding to $T^1$ and $T^2$ on said approximate straight line; and

d) the measurement of said ethylene copolymer by CFC shows characteristics such that the sum of respective amounts of copolymer fractions extracted at temperatures which are at least 10°C lower than said first temperature as defined above is 8 percent by weight or less, based on the total amount, excluding purge, of copolymer fractions extracted at temperatures in the overall range of extraction temperatures in CFC.

**8.** The polymer blend composition of Claim 7 having;

a) a density of from 0.915 to 0 975 g/cm$^3$; and
b) a melt index ($I_2$) of from 0.001 to 5000 g/10min; and
c) an $I_{21}/I_2$ of from 30 to 180, or an $I_{10}/I_2$ of from 5 to 90, and
d) an $M_w/M_n$ ratio of from 3 to 45; and wherein

(I) Component A is present in an amount of from 25 to 75 percent by weight based on the combined weight of Components (A) and (B); and has;

a) a density of from 0.935 to 0.983 g/cm$^3$; and
b) a melt index ($I_2$) of from 0.001 to 5,000 g/10min, and
c) an $I_{21}/I_2$ of from 18 to 55, or an $I_{10}/I_2$ of from 5 to 28; and
d) an $M_w/M_n$ ratio of from 2.8 to 8; and
e) and an $M_w/M_n$ ratio which satisfies the following inequality;

$$M_w/M_n \leq 3.50 \log M_w - 11.00;$$

and

(II) Component B is present in an amount of from 25 to 75 percent by weight based on the combined weight of Components (A) and (B), and has;

a) a density of from 0.89 to 0:965 g/cm$^3$; and
b) a melt index ($I_2$) of from 0.001 to 5000 g/10 min; and wherein

i) Component B has;

a) an $I_{21}/I_2$ of from 18 to 55, or an $I_{10}/I_2$ of from 5 to 28, and
b) an $M_w/M_n$ of from 2.8 to 8;
c) with respect to property (i)(c) for Component (B), said approximate straight line obtained from said molecular weight distribution profile obtained by CFC of said polymer fraction has a gradient with the range defined by the following formula (II):

$$-0.5 \leq \{\log Mp(T^1) - \log Mp(T^2)\}/(T^1 - T^2) \leq -0.007 \quad (II)$$

wherein $T^1$, $T^2$, $Mp(T^1)$ and $Mp(T^2)$ are as defined in claim 7; and wherein
d) with respect to property (i)(d) for Component (B), said sum of respective amounts of copolymer fractions extracted at temperatures which are at least 10°C lower than said first temperature is 5 percent by weight or less, based on the total amount, excluding purge, of copolymer fractions extracted at temperatures in the overall range of extraction temperatures in CFC; and
e) within a range in molecular weight for Component (B), which is defined by the formula (III):

$$(Mt)\log - \log(Mc) \leq 0.5 \quad (III)$$

wherein:

Mt is a point in molecular weight on a molecular weight distribution profile at which said profile shows a peak having a maximum intensity, and
Me is an arbitrary point in molecular weight on said molecular weight distribution profile, said molecular weight distribution profile being obtained together with a comonomer content distribution profile by subjecting said ethylene copolymer to gel permeation chromatography/Fourier transformation infrared spectroscopy (GPC/FT-IR), then an approximate straight line obtained from said comonomer content distribution profile by the least squares method has a gradient within the range defined by the formula (IV):

$$0.0005 \leq \{C(Mc^1)-C(Mc^2)\}/(\log Mc^1-\log Mc^2) \leq 0.05 \quad (IV)$$

wherein:

$Mc^1$ and $Mc^2$ are two different arbitrary points (Mc) in molecular weight which satisfy the formula (III), and
$C(Mc^1)$ and $C(Mc^2)$ are, respectively, comonomer contents corresponding to $Mc^1$ and $Mc^2$ on said approximate straight line.

**9.** The polymer blend composition according to Claim 8 having;

a) a density of from 0.935 to 0.970 g/cm$^3$;
b) a melt index ($I_2$) of from 0.01 to 3000 g/10 min; and
c) an $I_{21}/I_2$ of from 40 to 150, or an $I_{10}/I_2$ of from 5 to 80; and
d) an $M_w/M_n$ ratio of from 5 to 40; and wherein

(I) Component A is present in an amount of from 35 to 65 percent by weight based on the combined weight of Components (A) and (B), and has;

a) a density of from 0.945 to 0.980 g/cm$^3$; and
b) a melt index ($I_2$) of from 0.01 to 3,000 g/10min; and
c) an $I_2/I_2$ of from 20 to 50, or an $I_{10}/I_2$ of from 5.5 to 25; and
d) an $M_w/M_n$ ratio of from 3 to 6; and
e) an $M_w/M_n$ ratio which satisfies the following inequality;

$$1.25 \log M_w - 2.5 \leq M_w/M_n \leq 3.50 \log M_w - 11.0;$$

and

(II) Component B is present in an amount of from 35 to 65 percent by weight based on the combined weight of Components (A) and (B), and has;

a) a density of from 0.915 to 0.955 g/cm$^3$; and
b) a melt index ($I_2$) of from 0.01 to 3400 g/10 min; and wherein;

i) Component B has;

a) an $I_{21}/I_2$ of from 20 to 50, or an $I_{10}/I_2$ of from 5.5 to 25; and

b) an $M_w/M_n$ of from 3 to 7;
c) with respect to property (i)(c) for Component (B), said approximate straight line obtained from said molecular weight distribution profile obtained by CFC of said polymer fraction has a gradient with the range defined by the following formula (V):

$$-0,1 \leq \{\log Mp(T^1)-\log Mp(T^2)\}/(T^1-T^2) \leq 0,01 \quad (V)$$

wherein $T^1$, $T^2$, $Mp(T^1)$ and $Mp(T^2)$ are as defined in claim 7; and wherein
d) with respect to property (i)(d) for Component (B), said sum of respective amounts of copolymer fractions extracted at temperatures which are at least 10°C lower than said first temperature is 35 percent by weight or less, based on the total amount, excluding purge, of copolymer fractions extracted at temperatures in the overall range of extraction temperatures in CFC; and
e) wherein, with respect to property (i)(e) for Component (B), said approximate straight line obtained from said comonomer content distribution profile obtained by GPC/FT-IR of said ethylene comonomer has a gradient within the range defined by the following formula (VI):

$$0.001 \leq \{C(Mc^1)-C(Mc^2)\}/(\log Mc^1-\log Mc^2) \leq 0.02 \quad (VI)$$

wherein $Mc^1$, $Mc^2$, $C(Mc^1)$ and $C(Mc^2)$ are as defined in claim 8.

**10.** The polymer blend composition of any one the preceding claims wherein Component B is Component (B)(3) which comprises a copolymer of ethylene with at least one comonomer selected from the group consisting of a compound represented by the formula $H_2C = CHR$ wherein R is a $C_1$-$C_{20}$ linear,branched or cyclic alkyl group or a $C_6$-$C_{20}$ aryl group, and a $C_4$-$C_{20}$ linear, branched or cyclic diene, prepared by a process, which process comprises copolymerizing said ethylene with said comonomer by slurry polymerization in the presence of a solid catalyst system comprising

(I) a supported catalyst component resulting from admixing:

(A) a support material;
(B) an organometal compound of a metal which is a member of Groups 2-13 of the Periodic Table of the Elements, germanium, tin, or lead;
(C) an activator compound containing a cation which is capable of reacting with a transition metal compound to form a catalytically active transition metal complex, and a compatible anion having up to 100 nonhydrogen atoms and containing at least one substituent comprising an active hydrogen moiety; and
(D) a transition metal compound; or

(II) a supported catalyst component resulting from admixing

(A) a support material and an alumoxane which component contains 15 to 40 weight percent of aluminum, based on the total weight of the support material and alumoxane, which is obtained by;

(a) heating said support material and alumoxane under an inert atmosphere for a period and at a temperature sufficient to fix alumoxane to the support material, to provide a supported catalyst component wherein not more than about 10 percent aluminum present in the supported catalyst component is extractable in a one-hour extraction with toluene at 90°c using about 10 ml toluene per gram of supported catalyst component; and
(b) optionally, subjecting the product produced in step (a) to one or more wash steps to remove alumoxane not fixed to the support material; and

(B) a transition metal compound; or

(III) any combination of I and II.

**11.** A process for preparing an ethylene homopolymer which comprises polymerizing ethylene under slurry process conditions with a catalyst comprising;

(I) a supported catalyst component resulting from admixing:

(A) a support material;
(B) an organometal compound of a metal which is a member of Groups 2-13 of the Periodic Table of the Elements, germanium, tin, or lead;
(C) an activator compound containing a cation which is capable of reacting with a transition metal compound to form a catalytically active transition metal complex, and a compatible anion having up to 100 nonhydrogen atoms and containing at least one substituent comprising an active hydrogen moiety; and
(D) a transition metal compound; or

(II) a supported catalyst component resulting from admixing

(A) a support material and an alumoxane which component contains 15 to 40 weight percent of aluminum, based on the total weight of the support material and alumoxane, which is obtained by;

(a) heating said support material and alumoxane under an inert atmosphere for period and at a temperature sufficient to fix alumoxane to the support material, to provide a supported catalyst component wherein not more than about 10 percent aluminum present in the supported catalyst component is extractable in a one-hour extraction with toluene at 90°C using about 10 ml toluene per gram of supported catalyst component; and
(b) optionally, subjecting the product produced in step (a) to one or more wash steps to remove alumoxane not fixed to the support material; and

(B) a transition metal compound; or

(III) any combination of (I) and (II).

**12.** The process of Claim 11 wherein the supported catalyst component is obtained in prepolymerized form by subjecting the supported catalyst, in the presence of an olefin, to polymerization conditions.

**13.** The process of Claim 11 or 12 wherein the transition metal compound corresponds to the formula:

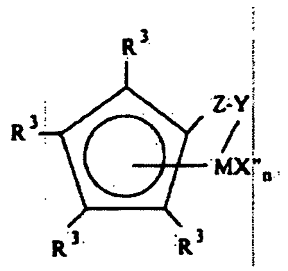

wherein:

M is titanium, zirconium or hafnium in the +2, +3 or +4 formal oxidation state;
$R^3$ in each occurrence independently is selected from the group consisting of hydrogen, hydrocarbyl, silyl, germyl, cyano, halo and combinations thereof, said $R^3$ having up to 20 non-hydrogen atoms, or adjacent $R^3$ groups together form a divalent derivative selected from the group consisting of a hydrocarbadiyl, siladiyl or germadiyl group, thereby forming a fused ring system,
each X" is independently, a halo, hydrocarbyl, hydrocarbyloxy, hydrocarbylamino, or silyl group, said group having up to 20 non-hydrogen atoms, or two X" groups together form a neutral $C_{5-30}$ conjugated diene or a divalent derivative thereof;
Y is -O-, -S-, -NR*-, -PR*-;
Z is $SiR^*_2$, $CR^*_2$, $SiR^*_2SiR^*_2$, $CR^*_2CR^*_2$, $CR^*=CR^*$, $CR^*_2SiR^*_2$, or $GeR^*_2$, wherein R* is a $C_{1-4}$ alkyl or phenyl, and n is an integer from 1 to 3.

**14.** The process of Claim 11 or 12 wherein the transition metal compound corresponds to the formula:

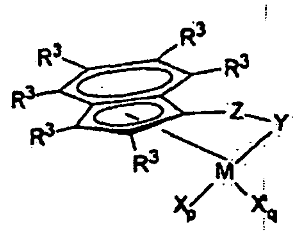

or

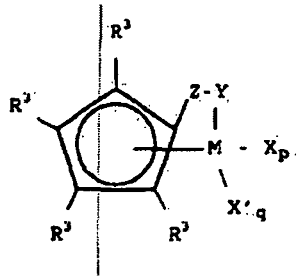

wherein:

$R^3$ independently each occurrence is hydrogen, hydrocarbyl, halohydrocarbyl, silyl, germyl and mixtures thereof, containing up to 20 nonhydrogen atoms;
M is titanium, zirconium or hafnium;
Z and Y are as defined in Claim 13;
p is 0, 1 or 2; and
q is zero or one;

with the proviso that:

when p is 2, q is zero, M is in the +4 formal oxidation state, and X is an anionic ligand selected from the group consisting of halide, hydrocarbyl, hydrocarbyloxy, di(hydrocarbyl)amido, di(hydrocarbyl)phosphido, hydrocarbylsulfido, and silyl groups, as well as halo-, di(hydrocarbyl)amino-, hydrocarbyloxy- and di(hydrocarbyl)phosphino-substituted derivatives thereof, said X group having up to 20 nonhydrogen atoms,
when p is 1, q is zero, M is in the +3 formal oxidation state, and X is a stabilizing anionic ligand group selected from the group consisting of allyl, 2-(N,N-dimethylaminomethyl)phenyl, and 2-(N,N-dimethyl)-aminobenzyl, or M is in the +4 formal oxidation state, and X is a divalent derivative of a conjugated diene, M and X together forming a metallocyclopentene group, and
when p is 0, q is 1, M is in the +2 formal oxidation state, and X' is a neutral, conjugated or nonconjugated diene, optionally substituted with one or more hydrocarbyl groups, said X' having up to 40 carbon atoms and forming a π-complex with M.

**15.** The process of Claim 11 or 12 wherein the transition metal compound corresponds to the formula: wherein:

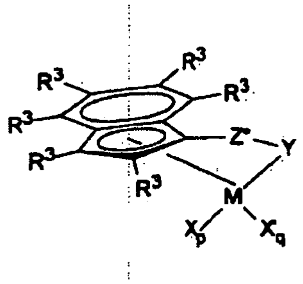

or

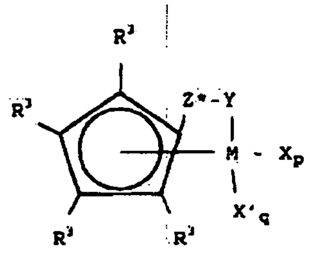

$R^3$ independently each occurrence is hydrogen or $C_{1-6}$ alkyl;
M is titanium;
Y is -O-, -S-, -NR*-, -PR*-;
Z* is $SiR^*_2$, $CR^*_2$, $SiR^*_2SiR^*_2$, $CR^*_2CR^*_2$, $CR^*=CR^*$, $CR^*_2SiR^*_2$, or $GeR^*_2$;
R* each occurrence is independently hydrogen, or a hydrocarbyl, hydrocarbyloxy, silyl, halogenated alkyl, halogenated aryl, or combinations thereof, said R* having up to 20 non-hydrogen atoms, and optionally, two R* groups from Z* (when R* is not hydrogen), or an R* group from Z* and an R* group from Y form a ring system;
p is 0, 1 or 2;
q is zero or one; and

with the proviso that:

when p is 2, q is zero, M is in the +4 formal oxidation state, and X is independently each occurrence methyl or benzyl;
when p is 1, q is zero, M is in the +3 formal oxidation state, and X is 2-(N,N-dimethyl)aminobenzyl; or M is in the +4 formal oxidation state and X is 2-butene-1,4-diyl, and
when p is 0, q is 1, M is in the +2 formal oxidation state, and X' is 1,4-diphenyl-1,3-butadiene or 1,3-pentadiene.

**16.** A process for forming a polymer blend composition, which process comprises the steps of:

(I) preparing an ethylene homopolymer (A) according to the process of any one of claims 11 to 15;
(II) contacting under polymerization conditions a feedstream comprising ethylene, optionally at least one $\alpha$-olefin comonomer, and an ethylene polymerization catalyst, to form a polyolefin composition (B) having a molecular weight maximum occurring in the fraction with the highest comonomer content (B); and
(III) combining the ethylene homopolymer (A) with the polyolefin composition (B) to form the polymer blend composition (C).

**17.** The process of Claim 16 wherein steps (I) and (II) are performed in different reactors.

**18.** The process of Claim 17 wherein the reactors are operated in parallel.

**19.** The process of Claim 17 wherein the reactors are operated in series and step (I) is performed in the first reactor(s) and step (II) is performed in the second reactor(s); or, optionally, step (II) is performed in the first reactor(s) and step (I) is performed in the second reactor(s).

**20.** The process of Claim 17 wherein;

(a) step (II) is performed under slurry phase Polymerization conditions, or solution phase polymerization conditions, or gas phase polymerization conditions; and
(b) the ethylene polymerization catalyst used in step (II) is a Ziegler catalyst, or an unsupported single site catalyst, or a supported single site catalyst, or a mixture of any two or more of said ethylene polymerization catalysts.

**21.** The process of Claim 20 Wherein;

(c) said supported single site catalyst comprises a supported constrained geometry catalyst.

**22.** The process of any one of Claims 17 to 21 wherein the ethylene polymerization catalyst of step (II) is the supported catalyst component of claim 11 or 12.

**23.** The process of any one of Claims 17 to 21 wherein the ethylene polymerization catalyst of step (II) is a Ziegler ethylene polymerization catalyst comprising;

(a) a solid support component which is a magnesium halide or silica, and
(b) a transition metal component represented by the formulas:
$TrX'_{4-q}(OR^1)_q$, $TrX'_{4-q}R^2_q$, VOX'3 and $VO(OR^1)_3$, wherein:

Tr is a Group IVB, VB, or VIB metal,
q is 0 or a number equal to or less than 4,
X' is a halogen, and
$R^1$ is an alkyl group, aryl group or cycloalkyl group having from 1 to 20 carbon atoms, and
$R^2$ is an alkyl group, aryl group, aralkyl group, or substituted aralkyl group.

**24.** The process of any one of Claims 17 to 23 wherein the $\alpha$-olefin interpolymer of step (II) has a lower density and a higher molecular weight than the homopolymer produced in step (I).

**25.** The process of any one of Claims 17 to 24 wherein the comonomer of step (II) is a $C_3$-$C_{20}$ $\alpha$-olefin.

**26.** The process of Claim 25 wherein the comonomer of step (II) is propylene, 1-butene, 1-pentene, 4-methyl-1-pentene, 1-hexene or 1-octene.

**27.** A fabricated article made from the polymer blend composition of any one of Claims 1 to 10.

**28.** The fabricated article of Claim 27 which is in the form of a film, fiber, or sheet, or the result of a thermoforming, blow, molding, injection molding and rotational molding process.

**29.** The fabricated article of Claim 27 or 28 comprising pipes, tubing, cable or wire jackets, pipe coatings, geomembranes, thermoformed articles, stackable plastic pallets, blow molded bottles or containers, or environmental pond liners.

**Patentansprüche**

**1.** Polymergemischzusammensetzung, umfassend:

(A) ein Ethylenhomopolymer in einer Menge von 1 bis 99 Gewichtsprozent, basierend auf dem kombinierten Gewicht aus den Komponenten (A) und (B), worin das Ethylenhomopolymer hergestellt wird unter Aufschlämmungsbedingungen in der Gegenwart eines geträgerten Einstellenkatalysators mit gespannter Geometrie und **gekennzeichnet ist durch**:

a) ein $M_w/M_n$-Verhältnis von größer als 2,5;
b) einen Schmelzindex ($I_2$) von 0,0001 bis 10.000 g/10 min;
c) eine Dichte, die der folgenden Ungleichung entspricht:

$$\text{Dichte } (g/cm^3) > 0{,}9611 + 0{,}0058 \log (I_2) - 0{,}00128 \log^2 (I_2);$$

und
d) ein $M_w/M_n$-Verhältnis, das der folgenden Ungleichung entspricht:

$$M_w/M_n \leq 11{,}67 \log M_w - 43{,}67;$$

und

(B) eine Polyolefinzusammensetzung mit einem Molekulargewichtsmaximum, das in der Fraktion mit dem höchsten Comonomergehalt auftritt, worin die Polyolefinzusammensetzung in einer Menge von 1 bis 99 Gewichtsprozent, basierend auf dem kombinierten Gewicht der Komponenten (A) und (B) vorliegt.

**2.** Polymergemisch nach Anspruch 1, worin das Ethylenhomopolymer **gekennzeichnet ist durch**:

a) eine Dichte von 0,915 bis 0,985 g/cm$^3$,
b) ein $I_{10}/I_2$-Verhältnis von 5 bis 30 oder worin das $I_{21}/I_2$-Verhältnis von 15 bis 65 ist; und
c) ein $M_w/M_n$-Verhältnis, das der folgenden Ungleichung entspricht:

$$M_w/M_n \leq 5{,}15 \log M_w - 11{,}59.$$

**3.** Polymergemisch nach Anspruch 1, worin das Ethylenhomopolymer **gekennzeichnet ist durch**:

a) eine Dichte von 0,935 bis 0,983 g/cm$^3$,
b) ein $M_w/M_n$-Verhältnis von 2,5 bis 10,
c) einen Schmelzindex ($I_2$) von 0,001 bis 5.000 g/10 min.,

d) ein $I_{10}/I_2$-Verhältnis von 5 bis 28 oder worin das $I_{21}/I_2$-Verhältnis von 18 bis 55 ist; und
e) ein $M_w/M_n$-Verhältnis, das der folgenden Ungleichung entspricht:

$$M_w/M_n \leq 3{,}50 \log M_w - 11{,}00.$$

**4.** Polymergemisch nach einem der vorhergehenden Ansprüche, worin das $M_w/M_n$-Verhältnis des Ethylenhomopolymers der folgenden Ungleichung entspricht:

$$1{,}25 \log M_w - 2{,}5 \leq M_w/M_n \leq 3{,}50 \log M_w - 11{,}0.$$

**5.** Polymergemisch nach einem der vorhergehenden Ansprüche, worin das Ethylenhomopolymer **gekennzeichnet ist durch**:

a) eine Dichte von 0,945 bis 0,980 g/cm$^3$,
b) einen Schmelzindex ($I_2$) von 0,01 bis 3.000 g/10 min,
c) ein $I_{10}/I_2$-Verhältnis von 5,5 bis 25 oder worin das $I_{21}/I_2$-Verhältnis von 20 bis 50 ist,
d) ein $M_w/M_n$-Verhältnis von 3 bis 6; und
e) worin das Homopolymer weniger als etwa 1 ppm Katalysatorchloridreste und weniger als etwa 1 ppm Katalysatorchromreste enthält.

**6.** Polymergemisch nach Anspruch 1, worin das Ethylenhomopolymer weniger als etwa 1 ppm Katalysatorchloridreste und weniger als etwa 1 ppm Katalysatorchromreste enthält.

**7.** Polymergemischzusammensetzung nach Anspruch 1 mit

a) einer Dichte von 0,87 bis 0,98 g/cm$^3$,
b) einem Schmelzindex ($I_2$) von 0,0001 bis 10.000 g/10 min,
c) einem $I_{21}/I_2$ von 20 bis 200 oder einem $I_{10}/I_2$ von 5 bis 100 und
d) einem $M_w/M_n$-Verhältnis von 2,5 bis 50; und worin (I) Komponente A in einer Menge von 10 bis 90 Gewichtsprozent, basierend auf dem kombinierten Gewicht der Komponenten (A) und (B), vorliegt und
a) eine Dichte von 0,915 bis 0,985 g/cm$^3$,
b) einen Schmelzindex ($I_2$) von 0,0001 bis 10.000 g/10 min,
c) ein $I_{21}/I_2$ von 15 bis 65 oder ein $I_{10}/I_2$ von 5 bis 30 und
d) ein $M_w/M_n$-Verhältnis von 2,5 bis 10; und
e) ein $M_w/M_n$-Verhältnis, das der folgenden Ungleichung entspricht:

$$M_w/M_n \leq 5{,}15 \log M_w - 11{,}59, \text{ aufweist;}$$

und
(II) Komponente B in einer Menge von 10 bis 90 Gewichtsprozent vorliegt, basierend auf dem kombinierten Gewicht der Komponenten (A) und (B), und
a) eine Dichte von 0,87 bis 0,98 g/cm$^3$,
b) einen Schmelzindex ($I_2$) von 0,0001 bis 10.000 g/10 min aufweist; und worin

i) Komponente B aufweist

a) ein $I_{21}/I_2$ von 15 bis 65 oder ein $I_{10}/I_2$ von 5 bis 30, und
b) ein $M_w/M_n$ von 2,5 bis 10; und
c) wenn, bei
Kreuzfraktionierungschromatographie bzw, Cross Fractionation-(CFC) des Ethylencopolymers, im Hinblick auf Extraktion bei einer willkürlichen Temperatur T (°C), die innerhalb des Bereichs von zwischen einer ersten Temperatur, bei welcher eine maximale Menge an Extraktion gezeigt wird und einer zweiten Temperatur, die die untere Temperatur von entweder der Temperatur von 10 °C höher als die erste

Temperatur oder 96 °C ist, die Beziehung zwischen der willkürlichen Temperatur T (°C) und einem Molekulargewichtspunkt auf einem Molekulargewichtsverteilungsprofil einer Copolymerfraktion, extrahiert bei der willkürlichen Temperatur T (°C), bei welchem Molekulargewichtspunkt das Molekulargewichtsverteilungsprofil der Copolymerfraktion ein Signal zeigt, das eine Maximalintensität aufweist, behandelt wird durch die Methode der kleinsten Fehlerquadrate, um eine angenähert gerade Linie innerhalb des Bereichs zu erhalten zwischen der ersten Temperatur und der zweiten Temperatur; wenn eine Copolymerfraktion vorliegt, von der die Menge weniger ist als 1 Gewichtsprozent der Gesamtmenge, ausschließlich Spülung, von Copolymerfraktion, die bei Temperaturen im Gesamtbereich der Extraktionstemperaturen bei CFC extrahiert wird, kann die Copolymerfraktion aus der Berechnung für die annähernd gerade Linie ausgeschlossen werden; die annähernd gerade Linie weist einen Gradienten innerhalb des Bereichs, der durch die Formel (I) definiert ist, auf: $-1 \leq \{\log MP(T^1) - \log Mp(T^2)\} / (T^1 - T^2) \leq -0{,}005$ (I)
worin:
$T^1$ und $T^2$ zwei verschiedene willkürliche Extraktionstemperaturen T (°C) innerhalb des Bereichs zwischen der ersten Temperatur und der zweiten Temperatur sind, und
$Mp(T^1)$ und $Mp(T^2)$ jeweils
Molekulargewichte sind, die $T^1$ und $T^2$ auf der annähernd geraden Linie entsprechen; und
d) die Messung des Ethylencopolymers durch CFC Charakteristika zeigt, sodass die Summe von jeweiligen Mengen von Copolymerfraktion, die bei Temperaturen extrahiert werden, die mindestens 10 °C niedriger sind als die erste Temperatur, wie oben definiert, 8 Gewichtsprozent oder weniger ist, basierend auf der Gesamtmenge, ausschließlich Spülung, von Copolymerfraktion, die extrahiert werden bei Temperaturen im Gesamtbereich der Extraktionstemperaturen bei CFC.

**8.** Polymergemischzusammensetzung nach Anspruch 7 mit:

a) einer Dichte von 0,915 bis 0,975 g/cm$^3$; und
b) einem Schmelzindex ($I_2$) von 0,001 bis 5.000 g/10 min; und
c) einem $I_{21}I_2$ von 30 bis 180 oder einem $I_{10}/I_2$ von 5 bis 90 und
d) einem $M_w/M_n$-Verhältnis von 3 bis 45; und worin

(I) Komponente A in einer Menge vorliegt von 25 bis 75 Gewichtsprozent, basierend auf dem kombinierten Gewicht der Komponenten (A) und (B), und aufweist:

a) eine Dichte von 0,935 bis 0,983 g/cm$^3$; und
b) einen Schmelzindex ($I_2$) von 0,001 bis 5.000 g/10 min; und
c) ein $I_{21}/I_2$ von 18 bis 55 oder ein $I_{10}/I_2$ von 5 bis 28; und
d) ein $M_w/M_n$-Verhältnis von 2,8 bis 8; und
e) ein $M_w/M_n$-Verhältnis, das der folgenden Ungleichung entspricht:

$$M_w/M_n \leq 3{,}50 \log M_w - 11{,}00;$$

und

(II) Komponente B in einer Menge vorliegt von 25 bis 75 Gewichtsprozent, basierend auf dem kombinierten Gewicht der Komponenten (A) und (B) und aufweist:

a) eine Dichte von 0,89 bis 0,965 g/cm$^3$; und
b) einen Schmelzindex ($I_2$) von 0,001 bis 5.000 g/10 min; und worin

i) Komponente B aufweist:

a) ein $I_{21}/I_2$ von 18 bis 55 oder ein $I_{10}/I_2$ von 5 bis 28 und
b) ein $M_w/M_n$ von 2,8 bis 8;
c) in Bezug auf die Eigenschaft (i)(c) für Komponente (B) die annähernd gerade Linie, die aus dem Molekulargewichtsverteilungs profil erhalten wird durch CFC der Polymerfraktion, einen Gradienten im Bereich aufweist, der durch die folgende Formel (II) definiert ist:

$$-0{,}5 \leq \{\log Mp(T^1)-\log Mp(T^2)\}/(T^1-T^2) \leq -0{,}007 \text{ (II)},$$

worin $T^1$, $T^2$, $Mp(T^1)$ und $Mp(T^2)$ wie in Anspruch 7 definiert sind; und worin
d) in Bezug auf die Eigenschaft (i)(d) für Komponente (B) die Summe jeweiliger Mengen der Copolymerfraktion, die bei Temperaturen extrahiert werden, die mindestens 10 °C niedriger sind als die erste Temperatur, 5 Gewichtsprozent oder weniger ist, basierend auf der Gesamtmenge, ausschließlich Spülung, von Copolymerfraktionen, die extrahiert werden bei Temperaturen im Gesamtbereich der Extraktionstemperatur bei CFC; und
e) innerhalb eines Bereichs des Molekulargewichts für Komponente (B), der definiert ist durch die Formel (III):

$$\log(Mt) - \log(Mc) \leq 0{,}5 \text{ (III)},$$

worin:

Mt ein
Molekulargewichtspunkt auf einem Molekulargewichtsverteilungsprofils ist, bei welchem das Profil ein Signal zeigt mit einer maximalen Intensität, und Mc ein willkürlicher Molekulargewichtspunkt ist auf dem Molekulargewichtsverteilungsprofil, wobei das Molekulargewichtsverteilungsprofil erhalten wird zusammen mit einem Comonomergehaltsverteilungs profil durch Unterziehen des Ethylencopolymers einer Gelpermeationschromatographie/ Fourier-Transformation-Infrarotspektroskopie (GPC/FT-IR), dann eine annähernd gerade Linie, die aus dem Comonomergehaltsverteilungsprofil erhalten wird durch die Methode der kleinsten Fehlerquadrate einen Gradienten aufweist innerhalb des Bereichs, der definiert ist durch die Formel (IV):

$$0{,}0005 \leq \{C(Mc^1)-C(Mc^2)\}/(\log Mc^1-\log Mc^2) \leq 0{,}05 \text{ (IV)}$$

worin:

$Mc^1$ und $Mc^2$ zwei verschiedene willkürliche Molekulargewichtspunkte (Mc) sind, die die Formel (III) erfüllen, und $C(Mc^1)$ und $C(Mc^2)$ jeweils Comonomergehalte sind, entsprechend $Mc^1$ und $Mc^2$ auf der annähernd geraden Linie.

**9.** Polymergemischzusammensetzung nach Anspruch 8 mit:

a) einer Dichte von 0,935 bis 0,970 g/cm$^3$;
b) einem Schmelzindex ($I_2$) von 0,01 bis 3.000 g/10 min; und
c) einem $I_{21}/_2$ von 40 bis 150 oder einem $I_{10}/I_2$ von 5 bis 80; und
d) einem $M_w/M_n$-Verhältnis von 5 bis 40; und worin

(I) Komponente A in einer Menge vorliegt von 35 bis 65 Gewichtsprozent, basierend auf dem kombinierten Gewicht aus Komponenten (A) und (B), und aufweist:

a) eine Dichte von 0,945 bis 0,980 g/cm$^3$; und
b) einen Schmelzindex ($I_2$) von 0,01 bis 3.000 g/10 min; und
c) einen $I_{21}/I_2$ von 20 bis 50 oder einen $I_{10}/I_2$ von 5,5 bis 25; und
d) ein $M_w/M_n$-Verhältnis von 3 bis 6; und
e) ein $M_w/M_n$-Verhältnis, das der folgenden Ungleichung entspricht:

$$1{,}25 \log M_w - 2{,}5 \leq M_w/M_n \leq 3{,}50 \log M_w - 11{,}0;$$

und

(II) Komponente B in einer Menge vorliegt von 35 bis 65 Gewichtsprozent, basierend auf dem kombinierten Gewicht der Komponenten (A) und (B), und aufweist:

a) eine Dichte von 0,915 bis 0,955 g/cm$^3$; und
b) einen Schmelzindex ($I_2$) von 0,01 bis 3.000 g/10 min; und worin:

i) Komponente B aufweist:

a) ein $I_{21}/I_2$ von 20 bis 50 oder ein $I_{10}/I_2$ von 5,5 bis 25; und
b) ein $M_w/M_n$ von 3 bis 7;

c) in Bezug auf die Eigenschaft (i)(c) für Komponente (B) die annähernd gerade Linie, die aus dem Molekulargewichtsverteilungsprofil erhalten wird, erhalten durch CFC der Polymerfraktion, einen Gradient im Bereich aufweist, der definiert ist durch die folgende Formel (V):

$$-0{,}1 \leq \{\log Mp(T^1) - \log Mp(T^2)\}/(T^1 - T^2) \leq 0{,}01 \quad (V)$$

worin $T^1$, $T^2$, $Mp(T^1)$ und $Mp(T^2)$ wie in Anspruch 7 definiert sind; und worin
d) in Bezug auf die Eigenschaft (i)(d) für Komponente (B) die Summe der jeweiligen Copolymerfraktionsmengen, die bei Temperaturen extrahiert werden, die mindestens 10 °C niedriger sind als die erste Temperatur, 3,5 Gewichtsprozent oder weniger ist, basierend auf der Gesamtmenge, ausschließlich Spülung, der Copolymerfraktion, die bei Temperaturen im Gesamtbereich der Extraktionstemperaturen bei CFC extrahiert wird; und
e) worin in Bezug auf die Eigenschaft (i)(e) für Komponente (B) die annähernd gerade Linie, die für das Comonomergehaltsverteilungsprofil erhalten wird durch GPC/FT-IR des Ethylencomonomers, einen Gradienten innerhalb des Bereichs aufweist, der definiert ist durch die folgende Formel (VI):

$$0{,}001 \leq \{C(Mc^1) - C(Mc^2)\}/(\log Mc^1 - \log Mc^2) \leq 0{,}02 \quad (VI)$$

worin $Mc^1$, $Mc^2$, $C(Mc^1)$ und $C(Mc^2)$ wie in Anspruch 8 definiert sind.

**10.** Polymergemischzusammensetzung nach einem der vorhergehenden Ansprüche, worin Komponente B Komponente (B)(3) ist, umfassend ein Copolymer von Ethylen mit mindestens einem Comonomer, ausgewählt aus der Gruppe, bestehend aus einer Verbindung, dargestellt durch die Formel $H_2C = CHR$, worin R eine lineare $C_1$-$C_{20}$-Gruppe, lineare, verzweigte oder cyclische Alkylgruppe oder eine $C_6$-$C_{20}$-Arylgruppe und ein lineares, verzweigtes oder cyclisches $C_4$-$C_{20}$-Dien ist, dargestellt durch ein Verfahren, wobei das Verfahren das Copolymerisieren des Ethylens mit dem Comonomer durch Aufschlämmungspolymerisation in der Gegenwart eines festen Katalysatorsystems umfasst, umfassend

(I) eine geträgerte Katalysatorkomponente, die resultiert aus dem Mischen von:

(A) einem Trägermaterial;
(B) einer Organometallverbindung eines Metalls, die ein Mitglied der Gruppen 2-13 des Periodensystems der Elemente, Germanium, Zinn oder Blei ist;
(C) einer Aktivatorverbindung, enthaltend ein Kation, das in der Lage ist zum Reagieren mit einer Übergangsmetallverbindung, um einen katalytisch aktiven Übergangsmetallkomplex zu bilden, und ein kompatibles Anion mit bis zu 100 nicht-Wasserstoffatomen, und enthaltend mindestens einen Substituenten,

umfassend einen aktiven Wasserstoffrest; und
(D) eine Übergangsmetallverbindung; oder

(II) eine geträgerte Katalysatorkomponente, die resultiert aus dem Mischen von:

(A) einem Trägermaterial und einem Alumoxan, wobei die Komponente 15 bis 40 Gewichtsprozent Aluminium enthält, basierend auf dem Gesamtgewicht des Trägermaterials und des Alumoxans, erhalten durch:

(a) Erhitzen des Trägermaterials und Alumoxans unter einer Inertatmosphäre für eine Dauer und bei einer Temperatur, die ausreichend sind, um Alumnoxan an dem Trägermaterial zu fixieren, um eine Trägerkatalysatorkomponente bereitzustellen, worin nicht mehr als etwa 10 Prozent Aluminium, das in der Trägerkatalysatorkomponente vorliegt, in einer Einstundenextraktion mit Toluol bei 90 °C unter Verwendung von etwa 10 ml Toluol pro Gramm Trägerkatalysatorkomponente, extrahierbar ist; und
(b) optional Unterziehen des in Schritt (a) hergestellten Produkts einem oder mehreren Waschschritten, um nichtfixiertes Alumoxan von dem Trägermaterial zu entfernen; und

(B) eine Übergangsmetallverbindung; oder

(III) eine Kombination aus I und II.

**11.** Verfahren zum Herstellen eines Ethylenhomopolymers, umfassend das Polymerisieren von Ethylen unter Aufschlämmungsverfahrensbedingungen mit einem Katalysator, umfassend:

(I) eine geträgerte Katalysatorkomponente, die resultiert aus dem Mischen von:

(A) einem Trägermaterial;
(B) einer Organometallverbindung eines Metalls, die ein Mitglied der Gruppen 2-13 des Periodensystems der Elemente, Germanium, Zinn oder Blei ist;
(C) eine Aktivatorverbindung, enthaltend ein Kation, das in der Lage ist zum Reagieren mit einer Übergangsmetallverbindung, um einen katalytisch aktiven Übergangsmetallkomplex zu bilden, und ein kompatibles Anion mit bis zu 100 nicht-Wasserstoffatomen, und enthaltend mindestens einen Substituenten, umfassend einen aktiven Wasserstoffrest; und
(D) eine Übergangsmetallverbindung; oder

(II) eine Trägerkatalysatorkomponente, die resultiert aus dem Mischen von

(A) einem Trägermaterial und einem Alumoxan, wobei die Komponente 15 bis 40 Gewichtsprozent Aluminium, basierend auf dem Gesamtgewicht des Trägermaterials und Alumoxans, enthält, erhalten durch:

(a) Erhitzen des Trägermaterials und Alumoxans unter einer Inertatmosphäre für eine Dauer und eine Temperatur, die ausreichend sind, um Alumoxan auf dem Trägermaterial zu fixieren, um eine Trägerkatalysatorkomponente bzw. geträgerte Katalysatorkomponente bereitzustellen, worin nicht mehr als etwa 10 Prozent Aluminium, das in der gträgerten Katalysatorkomponente vorliegt, extrahierbar ist in einer Einstundenextraktion mit Toluol bei 90 °C, unter Verwendung von etwa 10 ml Toluol pro Gramm geträgerter Katalysatorkomponente; und
(b) optional Unterziehen des Produkts, das in Schritt (a) erhalten wird, einem oder mehreren Waschschritten, um Alumoxan, das nicht auf dem Trägermaterial fixiert ist, zu entfernen; und

(C) eine Übergangsmetallverbindung; oder

(III) eine Kombination aus (I) und (II).

**12.** Verfahren nach Anspruch 11, worin die geträgerte Katalysatorkomponente erhalten wird in präpolymerisierter Form durch Unterziehen des geträgerten Katalysators in der Gegenwart eines Olefins unter Polymerisationsbedingungen.

**13.** Verfahren nach Anspruch 11 oder 12, worin die Übergangsmetallverbindung der Formel:

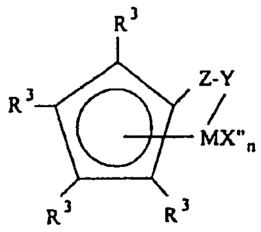

entspricht, worin:

M Titan, Zirkonium oder Hafnium im formalen Oxidationszustand +2, +3 oder +4 ist;
$R^3$ bei jedem Auftreten unabhängig ausgewählt wird aus der Gruppe, bestehend aus Wasserstoff, Kohlenwasserstoff, Silyl, Germyl, Cyano, Halogen und Kombinationen davon, wobei $R^3$ bis zu 20 Nicht-Wasserstoffatome aufweist oder benachbarte $R^3$-Gruppen zusammen ein divalentes Derivat bilden, ausgewählt aus der Gruppe, bestehend aus einer Hydrocarbadiyl-, Siladiyl- oder Germadiylgruppe, wobei ein fusioniertes Ringsystem gebildet wird, jedes X" unabhängig eine Halogen-, Kohlenwasserstoff-, Hydrocarbyloxy-, Hydrocarbylamino- oder Silylgruppe ist, wobei die Gruppe bis zu 20 Nicht-Wasserstoffatome aufweist, oder zwei X"-Gruppen zusammen ein neutrales konjugiertes $C_{5-30}$-Dien oder ein divalentes Derivat davon bilden;
Y -O-, -S-, -NR*-, -PR*- ist;
Z $SiR^*_2$, $CR^*_2$, $SiR^*_2SiR^*_2$, $CR^*_2CR^*_2$, $CR^*=CR^*$, $CR^*_2SiR^*_2$ oder $GeR^*_2$ist, worin R* ein $C_{1-4}$-Alkyl oder Phenyl ist, und
n eine ganze Zahl von 1 bis 3 ist.

**14.** Verfahren nach Anspruch 11 oder 12, worin die Übergangsmetallverbindung der Formel:

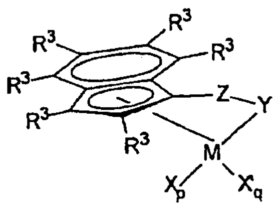 oder 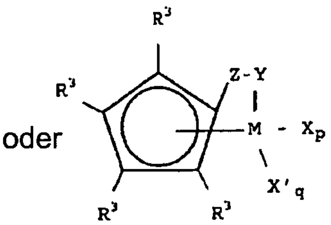

entspricht, worin:

$R^3$ unabhängig bei jedem Auftreten Wasserstoff, Kohlenwasserstoff, Halogenkohlenwasserstoff, Silyl, Germyl und Gemische davon ist, enthaltend bis zu 20 Nicht-Wasserstoffatome;
M Titan, Zirkonium oder Hafnium ist;
Z und Y wie in Anspruch 13 definiert sind;
p 0, 1 oder 2 ist; und
q 0 oder 1 ist;

mit der Maßgabe, dass:

wenn p 2 ist, q NIl ist, M im formalen Oxidationszustand +4 ist und X eine anionische Ligandengruppe ist, ausgewählt aus der Gruppe, bestehend aus Halogenid-, Kohlenwasserstoff-, Hydrocarbyloxy-, Di(hydrocarbyl) amido-, Di(hydrocarbyl)phosphido-, Hydrocarbylsulfido- und Silylgruppen, als auch Halogen-, Di(hydrocarbyl) amino-, Hydrocarbyloxy- und Di(hydroxarbyl)phosphino-substituierten Derivaten davon, wobei die X-Gruppe bis zu 20 Nicht-Wasserstoffatome aufweist,
wenn p 1 ist, q Null ist, M im formalen Oxidationszustand +3 ist und X eine stabilisierende anionische Ligandengruppe ist, ausgewählt aus der Gruppe, bestehend aus Allyl, 2-(N,N-Dimethylaminomethyl)phenyl und 2-(N, N-Dimethyl)-aminobenzyl, oder M im formalen Oxidationszustand +4 ist und X ein divalentes Derivat eines

konjugierten Diens ist, M und X zusammen eine Metallocyclopentengruppe bilden; und
wenn p 0 ist, q 1 ist, M im formalen Oxidationszustand +2 ist, und X' ein neutrales, konjugiertes oder nicht-konjugiertes Dien ist, optional substituiert mit einer oder mehreren Kohlenwasserstoffgruppen, wobei X' bis zu 40 Kohlenstoffatome aufweist und einen $\pi$-Komplex mit M bildet.

**15.** Verfahren nach Anspruch 11 oder 12, worin die Übergangsmetallverbindung der Formel:

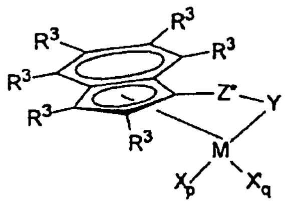
oder
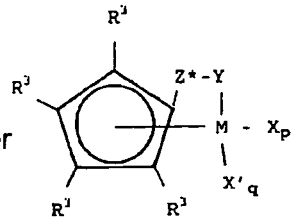

entspricht, worin:

$R^3$ unabhängig bei jedem Auftreten Wasserstoff oder $C_{1-6}$-Alkyl ist;
M Titan ist;
Y -O-, -S-, -NR*-, -PR*- ist,
Z* $SiR^*_2$, $CR^*_2$, $SiR^*_2SiR^*_2$, $CR^*_2CR^*_2$, CR*=CR*, $CR^*_2SiR^*_2$ oder $GeR^*_2$ ist;
R* bei jedem Auftreten unabhängig Wasserstoff oder ein Kohlenwasserstoff, Hydrocarbyloxy, Silyl, halogeniertes Alkyl, halogeniertes Aryl oder Kombinationen davon ist, wobei R* bis zu 20 Nicht-Wasserstoffatome aufweist, und optional zwei R*-Gruppen aus Z*(wenn R* nicht Wasserstoff ist) oder eine R*-Gruppe aus Z* und eine R*-Gruppe aus Y ein Ringsystem bilden;
p 0, 1 oder 2 ist;
q Null oder Eins ist; und
mit der Maßgabe, dass:
wenn p 2 ist, q Null ist, M im formalen Oxidationszustand +4 ist und X unabhängig bei jedem Auftreten Methyl oder Benzyl ist;
wenn p 1 ist, q Null ist, M im formalen Oxidationszustand +3 ist und X 2-(N,N-Dimethyl)aminobenzyl ist; oder M im formalen Oxidationszustand +4 ist und X 2-Buten-1,4-diyl ist, und
wenn p 0 ist, q 1 ist, M im formalen Oxidationszustand +2 ist und X' 1,4-Diphenyl-1,3-butadien oder 1,3-Pentadien ist.

**16.** Verfahren zum Bilden einer Polymergemischzusammensetzung, wobei das Verfahren die Schritte umfasst:

(I) Herstellen eines Ethylenhomopolymers (A) gemäß des Verfahrens nach einem der Ansprüche 11 bis 15;
(II) Inkontakbringen unter Polymerisationsbedingungen eines Einspeisungsstroms, umfassend Ethylen, optional mindestens ein $\alpha$-Olefincomonomer, und eines Ethylenpolymerisationskatalysators, um eine Polyolefinzusammensetzung (B) zu bilden mit einem Molekulargewichtmaximum, das in der Fraktion mit dem höchsten Comonomergehalt auftritt; und
(III) Vereinigen des Ethylenhomopolymers (A) mit der Polyolefinzusammensetzung (B), um die Polymergemischzusammensetzung (C) zu bilden.

**17.** Verfahren nach Anspruch 16, worin die Schritte (I) und (II) in verschiedenen Reaktoren durchgeführt werden.

**18.** Verfahren nach Anspruch 17, worin die Reaktoren parallel betrieben werden.

**19.** Verfahren nach Anspruch 17, worin die Reaktoren in Reihe betrieben werden und Schritt (I) durchgeführt wird in dem (den) ersten Reaktor(en) und Schritt (II) durchgeführt wird in dem (den) zweiten Reaktor(en); oder optional Schritt (II) durchgeführt wird in dem (den) ersten Reaktor(en) und Schritt (I) in dem (den) zweiten Reaktor(en) durchgeführt wird.

**20.** Verfahren nach Anspruch 17, worin:

a) Schritt (II) durchgeführt wird unter Aufschlämmungsphasepolymerisationsbedingungen oder Lösungsphasepolymerisationsbedingungen oder Gasphasepolymerisationsbedingungen; und
b) der Ethylenpolymerisationskatalysator, der in Schritt (II) verwendet wird, ein Ziegler-Katalysator oder ein ungeträgerter Einstellenkatalysator oder ein geträgerter Einstellenkatalysator oder ein Gemisch aus einem oder zwei oder mehreren der Ethylenpolymerisationskatalysatoren ist.

**21.** Verfahren nach Anspruch 20, worin:

(c) der geträgerte Einstellenkatalysator einen geträgerten Katalysator mit gespannter Geomtrie umfasst.

**22.** Verfahren nach einem der Ansprüche 17 bis 21, worin der Ethylenpolymerisationskatalysator von Schritt (II) die geträgerte Katalysatorkomponente von Anspruch 11 oder 12 ist.

**23.** Verfahren nach einem der Ansprüche 17 bis 21, worin der Ethylenpolymerisationskatalysator von Schritt (II) ein Ziegler-Ethylenpolymerisationskatalysator ist, umfassend:

(a) eine feste Trägerkomponente, die ein Magnesiumhalogenid oder Silika ist; und
(b) eine Übergangsmetallkomponente, dargestellt durch die Formeln:

$$TrX'_{4-q}(OR^1)_q,\ TrX'_{4-q}R^2_q,\ VOX'_3 \text{ und } VO(OR^1)_3,$$

worin:

Tr ein Metall der Gruppe IVB, VB oder VIB ist,
q 0 oder eine Zahl gleich oder kleiner 4 ist,
X' ein Halogen ist; und
$R^1$ eine Alkylgruppe, Arylgruppe oder Cycloalkylgruppe ist mit von 1 bis 20 Kohlenstoffatomen, und
$R^2$ eine Alkygruppe, Arylgruppe, Aralkylgruppe oder substituierte Aralkylgruppe ist.

**24.** Verfahren nach einem der Ansprüche 17 bis 23, worin das α-Olefininterpolymer von Schritt (II) eine geringere Dichte und ein höheres Molekulargewicht aufweist als das Homopolymer, das in Schritt (I) hergestellt wird.

**25.** Verfahren nach einem der Ansprüche 17 bis 24, worin das Comonomer von Schritt (II) ein $C_3$-$C_{20}$-α-Olefin ist.

**26.** Verfahren nach Anspruch 25, worin das Comonomer von Schritt (II) Propylen, 1-Buten, 1-Penten, 4-Methyl-1-penten, 1-Hexen oder 1-Octen ist.

**27.** Fertigungsgegenstand, hergestellt aus der Polymergemischzusammensetzung nach einem der Ansprüche 1 bis 10.

**28.** Fertigungsgegenstand nach Anspruch 27, der in der Form einer Folie, Faser oder einer Schicht ist, oder das Resultat eines Thermoformungs-, Blas-, Guss-, Spritzguss- oder Rotationsgussverfahrens ist.

**29.** Fertigungsgegenstand nach Anspruch 27 oder 28, umfassend Rohre, Schläuche, Kabel- oder Drahtummantelungen, Rohrummantelungen, Geomembranen, Thermoformungsgegenstände, stapelbare Kunststoffpaletten, blasgeformte Flaschen oder Behälter oder umweltverträgliche Teichfolien.

## Revendications

**1.** Composition mélange de polymères comprenant :

A) un homopolymère d'éthylène, présent en une quantité représentant 1 à 99 % du poids total des composants A et B, lequel homopolymère d'éthylène a été préparé dans des conditions de polymérisation en suspension, en présence d'un catalyseur supporté à site unique et géométrie contrainte, et présente les caractéristiques suivantes :

a) un rapport $M_w/M_n$ supérieur à 2,5,
b) un indice de fluidité à chaud $I_2$ de 0,0001 à 10 000 g/10 min,
c) une masse volumique d respectant l'inégalité suivante : d (g/cm$^3$) > 0,9611 + 0,0058 log $I_2$ - 0,00128 log$^2$ $I_2$
d) et un rapport $M_w/M_n$ respectant l'inégalité suivante :

$$M_w/M_n \leq 11{,}67 \log M_w - 43{,}67 \;;$$

B) et une composition de polyoléfine où la valeur maximale de la masse moléculaire se trouve dans la fraction où la teneur en comonomère est la plus élevée, laquelle composition de polyoléfine est présente en une quantité représentant 1 à 99 % du poids total des composants A et B.

**2.** Mélange de polymères conforme à la revendication 1, dans lequel l'homopolymère d'éthylène présente les caractéristiques suivantes :

a) une masse volumique de 0,915 à 0,985 g/cm$^3$ ;
b) un rapport $I_{10}/I_2$ de 5 à 30 ou un rapport $I_{21}/I_2$ de 15 à 65 ;
c) et un rapport $M_w/M_n$ respectant l'inégalité suivante :

$$M_w/M_n \leq 5{,}15 \log M_w - 11{,}59.$$

**3.** Mélange de polymères conforme à la revendication 1, dans lequel l'homopolymère d'éthylène présente les caractéristiques suivantes :

a) une masse volumique de 0,935 à 0,983 g/cm$^3$ ;
b) un rapport $M_w/M_n$ de 2,5 à 10 ;
c) un indice de fluidité à chaud $I_2$ de 0,001 à 5 000 g/10 min ;
d) un rapport $I_{10}/I_2$ de 5 à 28 ou un rapport $I_{21}/I_2$ de 18 à 55 ;
e) et un rapport $M_w/M_n$ respectant l'inégalité suivante :

$$M_w/M_n \leq 3{,}50 \log M_w - 11{,}00.$$

**4.** Mélange de polymères conforme à l'une des revendications précédentes, dans lequel le rapport $M_w/M_n$ de l'homopolymère d'éthylène respecte l'inégalité suivante :

$$1{,}25 \log M_w - 2{,}5 \leq M_w/M_n \leq 3{,}50 \log M_w - 11{,}0.$$

**5.** Mélange de polymères conforme à l'une des revendications précédentes, dans lequel l'homopolymère d'éthylène présente les caractéristiques suivantes :

- une masse volumique de 0,945 à 0,980 g/cm$^3$ ;
- un indice de fluidité à chaud $I_2$ de 0,01 à 3 000 g/10 min ;
- un rapport $I_{10}/I_2$ de 5,5 à 25 ou un rapport $I_{21}/I_2$ de 20 à 50 ;
- et un rapport $M_w/M_n$ de 3 à 6 ;
- et lequel homopolymère contient moins d'environ 1 ppm de résidus de chlorures provenant d'un catalyseur et moins d'environ 1 ppm de résidus de chrome provenant d'un catalyseur.

**6.** Mélange de polymères conforme à la revendication 1, dans lequel l'homopolymère d'éthylène contient moins d'environ 1 ppm de résidus de chlorures provenant d'un catalyseur et moins d'environ 1 ppm de résidus de chrome provenant d'un catalyseur.

**7.** Composition mélange de polymères, conforme à la revendication 1, qui présente :

a) une masse volumique de 0,87 à 0,98 g/cm$^3$ ;
b) un indice de fluidité à chaud $I_2$ de 0,0001 à 10 000 g/10 min ;
c) un rapport $I_{21}/I_2$ de 20 à 200 ou un rapport $I_{10}/I_2$ de 5 à 100 ;
d) et un rapport $M_w/M_n$ de 2,5 à 50 ;

et dans laquelle

I) le composant A se trouve en une quantité représentant 10 à 90 % du poids total des composants A et B et présente :

a) une masse volumique de 0,915 à 0,985 g/cm$^3$ ;
b) un indice de fluidité à chaud $I_2$ de 0,0001 à 10 000 g/10 min ;
c) un rapport $I_{21}/I_2$ de 15 à 65 ou un rapport $I_{10}/I_2$ de 5 à 30 ;
d) un rapport $M_w/M_n$ de 2,5 à 10 ;
e) et un rapport $M_w/M_n$ respectant l'inégalité suivante :

$$M_w/M_n \leq 5{,}15 \log M_w - 11{,}59 \ ;$$

II) et le composant B se trouve en une quantité représentant 10 à 90 % du poids total des composants A et B et présente :

a) une masse volumique de 0,87 à 0,98 g/cm$^3$ ;
b) et un indice de fluidité à chaud $I_2$ de 0,0001 à 10 000 g/10 min ; et dans laquelle composition :

i) le composant B présente

a) un rapport $I_{21}/I_2$ de 15 à 65 ou un rapport $I_{10}/I_2$ de 5 à 30 ;
b) et un rapport $M_w/M_n$ de 2,5 à 10 ;
c) et quand, en chromatographie en fractionnement croisé (CFC) dudit copolymère d'éthylène, concernant une extraction effectuée à une température arbitraire T (°C) située dans l'intervalle allant d'une première température à laquelle la quantité extraite est maximale à une deuxième température qui est la plus basse de la température supérieure de 10 °C à ladite première température ou de 96 °C, on traite par une méthode de moindres carrés la relation entre ladite température arbitraire T (°C) et la masse moléculaire correspondant, sur le profil de distribution des masses moléculaires de la fraction de copolymère extraite à ladite température arbitraire T (°C), au point auquel ledit profil de distribution des masses moléculaires de cette fraction de copolymère présente un pic d'intensité maximale, pour obtenir une droite approchée dans l'intervalle allant de ladite première température à ladite deuxième température (étant entendu que, si une fraction de copolymère représente moins de 1 % de la quantité totale, purge exclue, des fractions de copolymère extraites aux températures situées dans tout l'intervalle des températures d'extraction en CFC, on peut ne pas tenir compte de cette fraction de copolymère dans les calculs donnant ladite droite approchée), la pente de cette droite approchée se situe dans l'intervalle défini par la formule (I) :

$$-1 \leq \{\log Mp(T^1) - \log Mp(T^2)\} \ / \ (T^1 - T^2) \leq -0{,}005 \qquad (I)$$

dans laquelle

$T^1$ et $T^2$ représentent deux valeurs arbitraires, différentes, de la température d'extraction T (°C), situées dans l'intervalle allant de ladite première température à ladite deuxième température,
et $Mp(T^1)$ et $Mp(T^2)$ représentent respectivement les valeurs de masse moléculaire corres-

pondant à $T^1$ et $T^2$ sur ladite droite approchée ;

d) et l'évaluation dudit copolymère d'éthylène par CFC fait apparaître que la somme des quantités respectives des fractions de copolymère extraites aux températures inférieures d'au moins 10 °C à ladite première température définie ci-dessus représente au plus 8 % du poids de la quantité totale, purge exclue, des fractions de copolymère extraites aux températures situées dans tout l'intervalle des températures d'extraction en CFC.

**8.** Composition mélange de polymères, conforme à la revendication 7, qui présente :

a) une masse volumique de 0,915 à 0,975 g/cm$^3$ ;
b) un indice de fluidité à chaud $I_2$ de 0,001 à 5 000 g/10 min ;
c) un rapport $I_{21}/I_2$ de 30 à 180 ou un rapport $I_{10}/I_2$ de 5 à 90 ;
d) et un rapport $M_w/M_n$ de 3 à 45 ;

et dans laquelle

I) le composant A se trouve en une quantité représentant 25 à 75 % du poids total des composants A et B et présente :

a) une masse volumique de 0,935 à 0,983 g/cm$^3$ ;
b) un indice de fluidité à chaud $I_2$ de 0,001 à 5 000 g/10 min ;
c) un rapport $I_{21}/I_2$ de 18 à 55 ou un rapport $I_{10}/I_2$ de 5 à 28 ;
d) un rapport $M_w/M_n$ de 2,8 à 8 ;
e) et un rapport $M_w/M_n$ respectant l'inégalité suivante :

$$M_w/M_n \leq 3{,}50 \log M_w - 11{,}00 \;;$$

II) et le composant B se trouve en une quantité représentant 25 à 75 % du poids total des composants A et B et présente :

a) une masse volumique de 0,89 à 0,965 g/cm$^3$ ;
b) et un indice de fluidité à chaud $I_2$ de 0,001 à 5 000 g/10 min ; et dans laquelle composition :

i) le composant B présente

a) un rapport $I_{21}/I_2$ de 18 à 55 ou un rapport $I_{10}/I_2$ de 5 à 28 ;
b) et un rapport $M_w/M_n$ de 2,8 à 8 ;
c) concernant la caractéristique (i-c) du composant B, la pente de ladite droite approchée, obtenue à partir dudit profil de distribution des masses moléculaires obtenu par CFC de ladite fraction de copolymère, se situe dans l'intervalle défini par la formule (II) suivante :

$$-0{,}5 \leq \{\log Mp(T^1) - \log Mp(T^2)\} \;/\; (T^1 - T^2) \leq -0{,}007 \qquad \text{(II)}$$

dans laquelle $T^1$, $T^2$, $Mp(T^1)$ et $Mp(T^2)$ ont les significations indiquées dans la revendication 7 ;
d) concernant la caractéristique (i-d) du composant B, ladite somme des quantités respectives des fractions de copolymère extraites aux températures inférieures d'au moins 10 °C à ladite première température représente au plus 5 % du poids de la quantité totale, purge exclue, des fractions de copolymère extraites aux températures situées dans tout l'intervalle des températures d'extraction en CFC ;
e) et dans un intervalle de masse moléculaire du composant B, défini par la formule (III) :

$$\log(Mt) - \log(Mc) \leq 0,5 \qquad (III)$$

dans laquelle

Mt représente la masse moléculaire correspondant, sur le profil de distribution des masses moléculaires, au point auquel ledit profil présente un pic d'intensité maximale,
et Mc représente une masse moléculaire arbitraire, sur ledit profil de distribution des masses moléculaires,
lequel profil de distribution des masses moléculaires est obtenu,
en même temps qu'un profil de distribution de teneur en comonomère, par GPC/FT-IR (chromatographie par perméation de gel, couplée avec spectroscopie d'absorption dans l'infrarouge à transformée de Fourier) dudit copolymère d'éthylène,
la pente de la droite approchée obtenue par une méthode de moindres carrés à partir dudit profil de distribution de la teneur en comonomère se situe dans l'intervalle défini par la formule (IV) :

$$0,0005 \leq \{C(Mc^1 - C(Mc^2)\} / (\log Mc^1 - \log Mc^2) \leq 0,05 \qquad (IV)$$

dans laquelle

$Mc^1$ et $Mc^2$ représentent deux valeurs arbitraires différentes de la masse moléculaire Mc, qui obéissent à la formule (III),
et $C(Mc^1)$ et $C(Mc^2)$ représentent les valeurs de la teneur en comonomère qui, sur ladite droite approchée, correspondent respectivement à $Mc^1$ et $Mc^2$.

**9.** Composition mélange de polymères, conforme à la revendication 8, qui présente :

a) une masse volumique de 0,935 à 0,970 g/cm$^3$ ;
b) un indice de fluidité à chaud $I_2$ de 0,01 à 3 000 g/10 min ;
c) un rapport $I_{21}/I_2$ de 40 à 150 ou un rapport $I_{10}/I_2$ de 5 à 80 ;
d) et un rapport $M_w/M_n$ de 5 à 40 ;

et dans laquelle

I) le composant A se trouve en une quantité représentant 35 à 65 % du poids total des composants A et B et présente :

a) une masse volumique de 0,945 à 0,980 g/cm$^3$ ;
b) un indice de fluidité à chaud $I_2$ de 0,01 à 3 000 g/10 min ;
c) un rapport $I_{21}/I_2$ de 20 à 50 ou un rapport $I_{10}/I_2$ de 5,5 à 25 ;
d) un rapport $M_w/M_n$ de 3 à 6 ;
e) et un rapport $M_w/M_n$ respectant l'inégalité suivante :

$$1,25 \log M_w - 2,5 \leq M_w/M_n \leq 3,50 \log M_w - 11,00 ;$$

II) et le composant B se trouve en une quantité représentant 35 à 65 % du poids total des composants A et B et présente :

a) une masse volumique de 0,915 à 0,955 g/cm$^3$ ;
b) et un indice de fluidité à chaud $I_2$ de 0,01 à 3 000 g/10 min ; et dans laquelle composition :

i) le composant B présente

a) un rapport $I_{21}/I_2$ de 20 à 50 ou un rapport $I_{10}/I_2$ de 5,5 à 25 ;
b) et un rapport $M_w/M_n$ de 3 à 7 ;
c) concernant la caractéristique (i-c) du composant B, la pente de ladite droite approchée, obtenue à partir dudit profil de distribution des masses moléculaires obtenu par CFC de ladite fraction de copolymère, se situe dans l'intervalle défini par la formule (V) suivante :

$$-0{,}1 \leq \{\log Mp(T^1) - \log Mp(T^2)\} / (T^1 - T^2) \leq -0{,}01 \qquad (V)$$

dans laquelle $T^1$, $T^2$, $Mp(T^1)$ et $Mp(T^2)$ ont les significations indiquées dans la revendication 7 ;
d) concernant la caractéristique (i-d) du composant B, ladite somme des quantités respectives des fractions de copolymère extraites aux températures inférieures d'au moins 10 °C à ladite première température représente au plus 3,5 % du poids de la quantité totale, purge exclue, des fractions de copolymère extraites aux températures situées dans tout l'intervalle des températures d'extraction en CFC ;
e) et concernant la caractéristique (i-e) du composant B, la pente de ladite droite approchée obtenue à partir dudit profil de distribution de teneur en comonomère, obtenu par GPC/FT-IR dudit copolymère d'éthylène, se situe dans l'intervalle défini par la formule (VI) :

$$0{,}001 \leq \{C(Mc^1 - C(Mc^2)\} / (\log Mc^1 - \log Mc^2) \leq 0{,}02 \qquad (VI)$$

dans laquelle $Mc^1$, $Mc^2$, $C(Mc^1)$ et $C(Mc^2)$ ont les significations indiquées dans la revendication 8.

**10.** Composition mélange de polymères, conforme à l'une des revendications précédentes, dans laquelle le composant B est un composant B3 qui comprend un copolymère d'éthylène et d'au moins un comonomère choisi dans l'ensemble formé par les composés représentés par la formule $H_2C{=}CHR$, où R représente un groupe alkyle linéaire, ramifié ou cyclique en $C_{1-20}$ ou un groupe aryle en $C_{6-20}$, et les diènes linéaires, ramifiés ou cycliques en $C_{4-20}$, copolymère préparé par un procédé qui comporte le fait de faire copolymériser de l'éthylène et dudit comonomère par polymérisation en suspension, en présence d'un système catalyseur solide comportant :

I) un composant catalyseur supporté qui résulte de la combinaison :

A) d'un matériau support,
B) d'un composé organométallique d'un métal qui fait partie des groupes 2 à 13 du Tableau Périodique des Eléments ou qui est le germanium, l'étain ou le plomb,
C) d'un composé activateur comportant un cation, qui est capable de réagir avec un composé de métal de transition pour former un complexe de métal de transition à activité catalytique, et un anion compatible, qui comporte jusqu'à 100 atomes autres que des atomes d'hydrogène et au moins un susbtituant comprenant un fragment à hydrogène actif,
D) et d'un composé de métal de transition ;

II) ou un composant catalyseur supporté qui résulte de la combinaison :

A) d'un constituant fait d'un matériau support et d'un aluminoxane, qui contient 15 à 40 % en poids d'aluminium par rapport au poids total du matériau support et de l'aluminoxane et qu'on obtient

a) en chauffant lesdits matériau support et aluminoxane sous atmosphère inerte, pendant suffisamment longtemps et à une température suffisante pour que l'aluminoxane se fixe sur le matériau support, de manière à obtenir un composant catalyseur supporté duquel on ne peut pas extraire plus d'à peu près 10 % de l'aluminium présent dans ce composant catalyseur supporté, au bout d'une heure d'extraction opérée avec du toluène à 90 °C, employé à raison d'environ 10 mL de toluène par gramme de composant catalyseur supporté,
b) et en faisant subir en option, au produit obtenu dans l'étape (a), une ou plusieurs opérations de lavage afin d'éliminer l'aluminoxane qui n'est pas fixé sur le matériau support,

B) et d'un composé de métal de transition ;

III) ou toute combinaison de composants I et II.

**11.** Procédé de préparation d'un homopolymère d'éthylène, qui comporte le fait de faire polymériser de l'éthylène dans des conditions de polymérisation en suspension, à l'aide d'un catalyseur comportant :

I) un composant catalyseur supporté qui résulte de la combinaison :

A) d'un matériau support,
B) d'un composé organométallique d'un métal qui fait partie des groupes 2 à 13 du Tableau Périodique des Eléments ou qui est le germanium, l'étain ou le plomb,
C) d'un composé activateur comportant un cation, qui est capable de réagir avec un composé de métal de transition pour former un complexe de métal de transition à activité catalytique, et un anion compatible, qui comporte jusqu'à 100 atomes autres que des atomes d'hydrogène et au moins un susbtituant comprenant un fragment à hydrogène actif,
D) et d'un composé de métal de transition ;

II) ou un composant catalyseur supporté qui résulte de la combinaison :

A) d'un constituant fait d'un matériau support et d'un aluminoxane, qui contient 15 à 40 % en poids d'aluminium par rapport au poids total du matériau support et de l'aluminoxane et qu'on obtient

a) en chauffant lesdits matériau support et aluminoxane sous atmosphère inerte, pendant suffisamment longtemps et à une température suffisante pour que l'aluminoxane se fixe sur le matériau support, de manière à obtenir un composant catalyseur supporté duquel on ne peut pas extraire plus d'à peu près 10 % de l'aluminium présent dans ce composant catalyseur supporté, au bout d'une heure d'extraction opérée avec du toluène à 90 °C, employé à raison d'environ 10 mL de toluène par gramme de composant catalyseur supporté,
b) et en faisant subir en option, au produit obtenu dans l'étape (a), une ou plusieurs opérations de lavage afin d'éliminer l'aluminoxane qui n'est pas fixé sur le matériau support,

B) et d'un composé de métal de transition ;

III) ou toute combinaison de composants 1 et II.

**12.** Procédé conforme à la revendication 11, pour lequel on obtient le composant catalyseur supporté sous forme préparée pour polymérisation, en mettant ce catalyseur supporté dans des conditions de polymérisation, en présence d'une oléfine.

**13.** Procédé conforme à la revendication 11 ou 12, dans lequel le composé de métal de transition a pour formule la suivante :

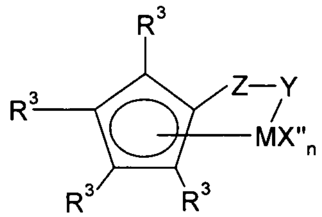

dans laquelle

- M représente un atome de titane, zirconium ou hafnium, à l'état formel d'oxydation +2, +3 ou +4,
- $R^3$ représente en chaque occurrence une entité choisie indépendamment dans l'ensemble formé par les atomes d'hydrogène et d'halogène, le groupe cyano et les groupes hydrocarbyle, silyle et germyle, ainsi que les combinaisons de ces entités, lesquels groupes représentés par $R^3$ comportent jusqu'à 20 atomes autres que des atomes d'hydrogène, ou bien deux groupes représentés par des symboles $R^3$ adjacents sont réunis en un groupe divalent choisi parmi les groupes hydrocarbadiyle, siladiyle ou germadiyle, formant ainsi un

système à cycles condensés,

- chaque symbole X" représente indépendamment un atome d'halogène ou un groupe hydrocarbyle, hydrocarbyloxy, hydrocarbylamino ou silyle, lequel groupe comporte jusqu'à 20 atomes autres que des atomes d'hydrogène, ou bien deux groupes représentés par des symboles X" sont réunis en un ligand neutre de type diène conjugué en $C_{5-30}$ ou en un dérivé divalent d'un tel ligand,
- Y représente un chaînon symbolisé par -O-, -S-, -NR*- ou -PR*-,
- Z représente un fragment symbolisé par $SiR^*_2$, $CR^*_2$, $SiR^*_2SiR^*_2$, $CR^*_2CR^*_2$, $CR^*=CR^*$, $CR^*_2SiR^*_2$ ou $GeR^*_2$, où R* représente un groupe alkyle en $C_{1-4}$ ou phényle,
- et n représente un nombre entier valant de 1 à 3.

**14.** Procédé conforme à la revendication 11 ou 12, dans lequel le composé de métal de transition a pour formule l'une des suivantes :

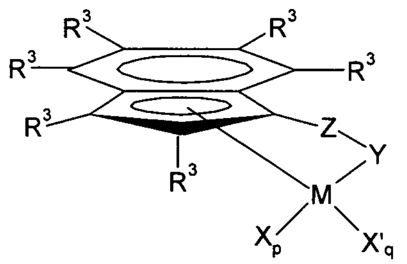

ou

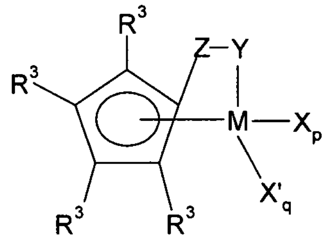

dans lesquelles formules :

- $R^3$ représente, indépendamment en chaque occurrence, un atome d'hydrogène ou un groupe hydrocarbyle, halogénohydrocarbyle, silyle ou germyle, ou une combinaison de ces groupes, lesquels groupes comportent jusqu'à 20 atomes autres que des atomes d'hydrogène,
- M représente un atome de titane, zirconium ou hafnium,
- Z et Y ont les significations indiquées dans la revendication 13,
- l'indice p vaut 0, 1 ou 2,
- et l'indice q vaut 0 ou 1,

étant entendu que :

- si p vaut 2, q vaut 0, le métal représenté par M se trouve à l'état formel d'oxydation +4 et X représente un ligand anionique choisi dans l'ensemble formé par les ligands halogénure, hydrocarbyle, hydrocarbyloxy, di(hydrocarbyl)amido, di(hydrocarbyl)phosphido, hydrocarbylsulfido et silyle, ainsi que leurs dérivés à substituant(s) halogéno, di(hydrocarbyl)amino, hydrocarbyloxy et/ou di(hydrocarbyl)phosphino, lequel groupe représenté par X comporte jusqu'à 20 atomes autres que des atomes d'hydrogène,
- si p vaut 1, q vaut 0, le métal représenté par M se trouve à l'état formel d'oxydation +3 et X représente un ligand anionique stabilisant choisi dans l'ensemble formé par les ligands allyle, 2-(N,N-diméthylaminométhyl)phényle et 2-(N,N-diméthylamino)benzyle, ou le métal représenté par M se trouve à l'état formel d'oxydation +4 et X représente un ligand divalent dérivé d'un diène conjugué, M et X représentant alors conjointement un groupe métallocyclopentène,
- et si p vaut 0, q vaut 1, le métal représenté par M se trouve à l'état formel d'oxydation +2 et X' représente un ligand neutre dérivé d'un diène conjugué ou non conjugué, portant éventuellement un ou plusieurs substituants hydrocarbyle, lequel groupe représenté par X' comporte jusqu'à 40 atomes de carbone et forme un complexe $\pi$ avec l'atome de métal représenté par M.

**15.** Procédé conforme à la revendication 11 ou 12, dans lequel le composé de métal de transition a pour formule l'une des suivantes :

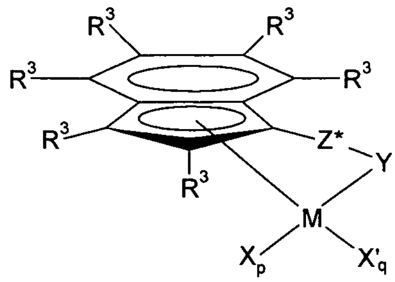

ou

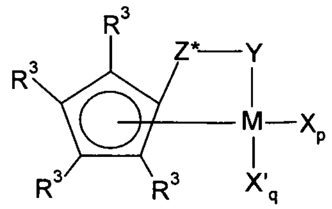

dans lesquelles formules

- $R^3$ représente, indépendamment en chaque occurrence, un atome d'hydrogène ou un groupe alkyle en $C_{1-6}$,
- M représente un atome de titane,
- Y représente un chaînon symbolisé par -O-, -S-, -NR*- ou -PR*-,
- Z* représente un fragment symbolisé par $SiR^*_2$, $CR^*_2$, $SiR^*_2SiR^*_2$, $CR^*_2CR^*_2$, CR*=CR*, $CR^*_2SiR^*_2$ ou $GeR^*_2$,
- R* représente, indépendamment en chaque occurrence, un atome d'hydrogène ou un groupe hydrocarbyle, hydrocarbyloxy, silyle, halogénoalkyle ou halogénoaryle, ou une combinaison de telles entités, lequel groupe représenté par R* comporte jusqu'à 20 atomes autres que des atomes d'hydrogène, et en option, deux groupes R* faisant partie du fragment Z*, si R* ne repré-sente pas un atome d'hydrogène, ou un groupe R* faisant partie du fragment Z* et un groupe R* faisant partie du chaînon Y sont réunis pour former un cycle,
- l'indice p vaut 0, 1 ou 2,
- et l'indice q vaut 0 ou 1,

étant entendu que :

- si p vaut 2, q vaut 0, le métal représenté par M se trouve à l'état formel d'oxydation +4 et X représente, indépendamment en chaque occurrence, un groupe méthyle ou benzyle,
- si p vaut 1, q vaut 0, le métal représenté par M se trouve à l'état formel d'oxydation +3 et X représente un ligand 2-(N,N-diméthylamino)benzyle, ou le métal représenté par M se trouve à l'état formel d'oxydation +4 et X représente un ligand but-2-ène-1,4-diyle,
- et si p vaut 0, q vaut 1, le métal représenté par M se trouve à l'état formel d'oxydation +2 et X' représente un ligand 1,4-diphényl-1,3-butadiène ou 1,3-pentadiène.

**16.** Procédé de préparation d'une composition mélange de polymères, lequel procédé comporte les étapes suivantes :

I) préparer un homopolymère d'éthylène (A), en opérant selon un procédé conforme à l'une des revendications 11 à 15 ;
II) mettre en contact, dans des conditions de polymérisation, un courant d'alimentation contenant de l'éthylène, éventuellement au moins un comonomère de type $\alpha$-oléfine, et un catalyseur de polymérisation d'éthylène, de manière à obtenir une composition de polyoléfine (B) qui présente un maximum de masse moléculaire dans la fraction possédant la teneur en comonomère la plus élevée ;
III) et combiner l'homopolymère d'éthylène (A) avec la composition de polyoléfine (B) pour en faire une composition mélange de polymères (C).

**17.** Procédé conforme à la revendication 16, dans lequel les étapes (I) et (II) sont effectuées dans des réacteurs différents.

**18.** Procédé conforme à la revendication 17, dans lequel on fait fonctionner les réacteurs en parallèle.

**19.** Procédé conforme à la revendication 17, dans lequel on fait fonctionner les réacteurs en série, et l'étape (I) est effectuée dans le ou les premier(s) réacteurs et l'étape (II) est effectuée dans le ou les deuxième(s) réacteurs, ou, en option, l'étape (II) est effectuée dans le ou les premier(s) réacteurs et l'étape (I) est effectuée dans le ou les deuxième(s) réacteurs.

**20.** Procédé conforme à la revendication 17, dans lequel

a) l'étape (II) est réalisée dans des conditions de polymérisation en suspension, dans des conditions de polymérisation en solution ou dans des conditions de polymérisation en phase gazeuse ;
b) et le catalyseur de polymérisation d'éthylène utilisé dans l'étape (II) est un catalyseur de type Ziegler, un catalyseur à site unique non supporté ou un catalyseur à site unique supporté, ou un mélange de deux quelconques ou plus de tels catalyseurs de polymérisation d'éthylène.

**21.** Procédé conforme à la revendication 20, dans lequel

c) ledit catalyseur à site unique supporté comprend un catalyseur à géométrie contrainte supporté.

**22.** Procédé conforme à l'une des revendications 17 à 21, dans lequel le catalyseur de polymérisation d'éthylène utilisé dans l'étape (II) est un composant catalyseur supporté du type indiqué dans la revendication 11 ou 12.

**23.** Procédé conforme à l'une des revendications 17 à 21, dans lequel le catalyseur de polymérisation d'éthylène utilisé dans l'étape (II) est un catalyseur de polymérisation d'éthylène de type Ziegler, qui comporte :

a) un composant support solide qui est un halogénure de magnésium ou une silice,
b) et un composant à métal de transition, représenté par l'une des formules suivantes :

$$TrX'_{4-q}(OR^1)_q,\ TrX'_{4-q}R^2_q,\ VOX'_3 \text{ et } VO(OR^1)_3,$$

dans lesquelles

Tr représente un atome d'un métal du groupe IV-B, V-B ou VI-B,
q représente un nombre qui vaut 0 ou est inférieur ou égal à 4,
X' représente un atome d'halogène,
$R^1$ représente un groupe alkyle, aryle ou cycloalkyle, comportant 1 à 20 atomes de carbone,
et $R^2$ représente un groupe alkyle, aryle ou aralkyle, ou un groupe aralkyle à substituant(s).

**24.** Procédé conforme à l'une des revendications 17 à 23, dans lequel l'interpolymère d'$\alpha$-oléfine produit dans l'étape (II) présente une masse volumique inférieure et une masse moléculaire supérieure à celles de l'homopolymère produit dans l'étape (I).

**25.** Procédé conforme à l'une des revendications 17 à 24, dans lequel le comonomère utilisé dans l'étape (II) est une $\alpha$-oléfine en $C_{3-20}$.

**26.** Procédé conforme à la revendication 25, dans lequel le comonomère utilisé dans l'étape (II) est du propylène, du 1-butène, du 1-pentène, du 4-méthyl-1-pentène, du 1-hexène ou du 1-octène.

**27.** Article de fabrication, fait d'une composition mélange de polymères conforme à l'une des revendications 1 à 10.

**28.** Article de fabrication conforme à la revendication 27, qui se présente sous forme de film, de fibre ou de feuille, ou qui est le résultat d'un procédé de thermoformage, de moulage par soufflage, de moulage par injection ou de moulage par rotation.

**29.** Article de fabrication conforme à la revendication 27 ou 28, y compris tuyaux, tubes, chemises de câbles ou de fils, revêtements de tuyaux, géomembranes, articles thermoformés, pallettes empilables en plastique, bouteilles et autres récipients moulés par soufflage, et bâches de revêtement environnemental pour bassins.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5153157 A, Hlatky
- US 545403 A
- EP 416815 A
- EP 468651 A
- EP 514828 A
- US 876268 A
- EP 520732 A
- US 5374696 A
- US 5055438 A
- US 5057475 A
- US 5096867 A
- US 5064802 A
- US 5132380 A
- US 5453410 A
- WO 9616092 A
- WO 9628480 A
- WO 9407928 A
- US 4547551 A, Bailey
- US 5382631 A, Stehling
- WO 9518160 A
- US 3280220 A, Nelson
- US 3660530 A, Hoblitt
- US 4438238 A, Fukushima
- US 5189106 A, Morimoto
- US 5260384 A
- EP 0022376 A, Morita
- US 4230831 A, Sakurai
- US 5382630 A, Stehling
- WO 310163 A
- WO 37644 A
- WO 9425523 A, Chum
- US 5470993 A
- US 5486632 A
- US 8427378 A
- US 4542199 A
- EP 338044 A
- DE 3127133
- JP 8148392 A
- US 3914342 A, Mitchell
- WO 9400500 A
- US 4661465 A


### Non-patent literature cited in the description


- **ZHOU et al.** *Polymer,* 1993, vol. 24, 2520
- **BOEHM et al.** *Advanced Materials,* 1992, vol. 4 (3), 237
- **WILLIAMS ; WARD.** *Journal of Polymer Science, Polymer Letters,* 1968, vol. 6, 621
- *J. Chem. Soc. Chem. Comm.,* 1993, 383-384
- **LAMBERT, J.B.** *Organometallics,* 1994, vol. 13, 2430-2443
- Encyclopedia of Polymer Science and Engineering. John Wiley and Sons, vol. 6, 472-477
- **E. PLATI ; J.G. WILLIAMS.** *Polymer Engineering and Science,* 1975, vol. 15 (6), 470-477
- **M. J. CAWOOD ; G. A. H. SMITH.** *Polymer Testing,* 1980, vol. 1, 3-7
- **X. LU ; N. BROWN.** *Polymer Testing,* 1992, vol. 11, 309319
- **SHENOY, A.V. ; CHATTOPADHYAY, S. ; NADKARNI, V.M.** *Rheologica Acta,* 1983, vol. 22, 90
- **SHENOY, A.V. ; CHATTOPADHYAY, S. ; NADKARNI, V.M.** *Pheologica Acta,* 1983, vol. 22, 90